**Europäisches Patentamt**

(19) **European Patent Office**

**Office européen des brevets**

(11) Veröffentlichungsnummer : **0 305 727 B1**

(12) # EUROPÄISCHE PATENTSCHRIFT

(45) Veröffentlichungstag der Patentschrift :
**27.02.91 Patentblatt 91/09**

(21) Anmeldenummer : **88112025.7**

(22) Anmeldetag : **26.07.88**

(51) Int. Cl.⁵ : **B62D 21/15, B62K 11/02, B60S 1/34, B62D 25/06, B60R 1/10, B62D 1/18, B60R 21/045, B60R 21/02, B60R 7/00, B60N 2/00**

(54) Sicherheitskraftfahrzeug mit Schutzeinrichtungen.

(30) Priorität : **01.08.87 DE 3725591**
**01.09.87 DE 3729085**
**07.10.87 DE 3733876**
**17.11.87 DE 3739011**
**14.01.88 DE 3800896**
**25.05.88 DE 3817672**

(43) Veröffentlichungstag der Anmeldung :
**08.03.89 Patentblatt 89/10**

(45) Bekanntmachung des Hinweises auf die
Patenterteilung :
**27.02.91 Patentblatt 91/09**

(84) Benannte Vertragsstaaten :
**AT BE CH DE ES FR GB GR IT LI LU NL SE**

(56) Entgegenhaltungen :
**DE-B- 1 106 627**
**DE-C- 417 316**
**DE-C- 421 309**
**US-A- 4 579 367**

(73) Patentinhaber : **Ambros, Richard**
**Biberacher Strasse 5**
**D-8960 Kempten (DE)**

(72) Erfinder : **Ambros, Richard**
**Biberacher Strasse 5**
**D-8960 Kempten (DE)**

## Beschreibung

Sicherheitskraftfahrzeug, bestehend aus einem Fahrzeugvorderteil und einem Fahrzeughinterteil, sowie dazugehörigen Schutzeinrichtungen.

In vorliegender Patentanmeldung sind Sicherheitskraftfahrzeuge (SiKfz'e) mit einem samt Vorderradaufhängung abschwenkbar um eine horizontale Querachse an einem Fahrzeughinterteil gelagerten Fahrzeugvorderteil aufgezeigt und zwar beispielhaft ein als SiKfz ausgebildeter Personenkraftwagen (SiPKW), ein als Sikfz ausgebildeter Frontlenker (SiFrontlenker) mit einem nach vorne abstehenden Fahrzeugvorderteil und ein als SiKfz ausgebildetes Kraftrad (SiKrad).

Dabei wird das Fahrzeugvorderteil jeweils durch Druckfedern gegen einen am Fahrzeughinterteil angebrachten Anschlag angedrückt bzw. in Normallage gehalten, während das Zurückschwenken des Vorderteiles nach einem scharfen Bremsvorgang, der aufgrund der zwischen den beiden Fahrzeugteilen erzeugten Schubkraft beim Abbremsen ein Anheben der Querachse bewirkt, durch übliche Stoßdämpfer gedämpft ist.

Durch das abschwenkbar gelagerte Fahrzeugvorderteil erhöht sich also die Standfestigkeit eines SiKfz'e bei einem Bremsvorgang entsprechend einem durch das Anheben des Fahrzeugschwerpunktes erhöhten Reifendruck gegen die Fahrbahn.

Durch zugehörige Sicherheitseinrichtungen ist beispielsweise bei einem SiPKW ein 4-facher Schutz im Falle eines Frontalaufpralles geboten, so daß Genickbrüche und Querschnittslähmungen bei Verkehrsunfällen nahezu ausgeschlossen sind.

Ein Sicherheitsgurt verhindert zwar, daß Fahrzeuginsassen bei einem Frontalaufprall gegen die Windschutzscheibe geschleudert werden, kann aber bei einem heftigen Aufprall Ursache eines Genickbruches oder einer Querschnittslähmung sein.

Ein Airbag, der bislang nur für einen Fahrer und Beifahrer zum Einsatz kam, nicht aber für Fondinsassen und Kinder, schließt diese Gefahr in gewissen Fällen zwar aus, kann aber andererseits ebenfalls zu schweren Verletzungen führen, nämlich dann, wenn ein Fahrer bzw. Beifahrer auf einen Aufprall nicht gefaßt ist oder mit einer relativ schwach ausgebildeten Halsmuskulatur ausgestattet ist, so daß der Fall eintreten kann, daß ihm der Airbag den Kopf wieder zurückschleudert wenn er zu spät explodiert.

Da in solchen Fällen die Halsmuskulatur bereits erschlafft ist, wenn der Kopf nach vorne nachgab oder gar am Lenkrad aufschlug, kann das womöglich ebenfalls zu einem Genickbruch oder zu einer Querschnittslähmung führen.

Bei einem zu frühzeitigen Auslösen des Airbag's hingegen ist einem stiernackigen Fahrer beispielsweise vorzeitig die Sicht versperrt, was zumindest bei einem Auffahrunfall während eines Überholvorganges, beispielsweise wenn ein anderer Fahrer ausschert ohne vorher in den Rückblickspiegel zu schauen, schlimme Folgen haben kann.

Der 4-fache Schutz bei einem SiPKW bzw. erforderlichenfalls auch bei einem SiFrontlenker ist am eindruckvollsten so erklärt : Fährt man beispielsweise (unbeabsichtigt) gegen einen Baum, wo einem Fahrer bei herkömmlichen Kfz'en selbst ein 12-Zylinder-Frontmotor als "Schutzeinrichtung" rein gar nichts nützt (höchstens gegen ein Kleinfahrzeug, was aber nicht im Sinne der allgemeinen Verkehrssicherheit ist), dann tritt bei einem Si-Automobil automatisch der beste Schutz ein, den man sich überhaupt denken kann :

Das Fahrzeugvorderteil wirkt dann automatisch wie ein Steilhang, der sich vor dem Baum auftürmt, ohne daß man erst auf einen Knopf drücken muß wie bei einem Schleudersitz, wo evtl. eine Hochspannungsleitung im Weg wäre oder der Baum selbst.

Natürlich wird man mit einem Si-Automobil nicht bis zur Baumkrone hochgeschaukelt, aber dafür ist als zweite Schutzmaßnahme ein als Gepäckraum ausgebildetes Fahrzeugvorderteil mit einer gegenüber einem 12-Zylinder-Frontmotor optimal ausgebildeten Knautschzone vorgesehen.

Als dritte Schutzmaßnahme wird, jeweils mit zunehmender Nachgiebigkeit bzw. nachlassender Widerstandskraft, dem Fahrer das Lenkrad und dem Beifahrer ein mit abgewinkelten Armen bequem erreichbarer Beifahrerkasten (Handschuhkasten) nach vorne weggezogen, während für die Fondinsassen noch rechtzeitig eine gepolsterte, nachgiebige Querstrebe nach unten geschwenkt wird, gegen die sie sich mit den Händen abstützen können und als vierte Schutzmaßnahme ist für sämtliche erwachsene Insassen ein jeweils zwischen den Armen eines Schutzbügels gefestigtes Auffangnetz vorgesehen, wobei die Schutzbügel automatisch und noch rechtzeitig nach unten abgeschwenkt werden. In diesem Zusammenhang ist ein von der Firma Audi entwickeltes "proconten" Sicherheitssystem zu erwähnen, bei dem aber außer einem hier nicht erforderlichen Gurtstraffer lediglich das Lenkrad über einen Seilzug und eine Umlenkrolle nach vorne weggezogen wird, -jedoch erst wenn der Motor bei einem Aufprall nach hinten geschoben wird.

Dabei muß selbstverständlich verhindert werden, daß auch die Umlenkrolle mit nach hinten geschoben wird, und außerdem besteht hier die Gefahr, daß sich der Fahrer schon vorher am Lenkrad verletzt.

Ein ganz besonderer Schutz ist bei einem SiPKW für Kinder geboten, indem im Fondraum 3 aufklappbare Kindersitze vorgesehen sind, in denen ein Kind jeweils mit dem Rücken in Fahrrichtung untergebracht ist. Ebenso natürlich auf dem Beifahrersitz.

Dabei sind die Kindersitze in Gegenfahrrichtung hochschwenkbar gelagert, so daß ein jeweils für ein Kind vorgesehener Haltegurt weder bei einem frontseitigen, noch bei einem heckseitigen Aufprall auf Zug belastet wird, was ja bei üblichen Sicherheitsgurten zu einem Abknicken des Kopfes führt, indem hier lediglich der Oberkörper, nicht aber der Kopf festgehalten ist.

Dabei haben gerade Kleinkinder aufgrund ihrer relativ schwach ausgebildeten Halsmuskulatur und ihres relativ groß ausgebildeten Kopfes einen ganz besonderen Schutz nötig.

Durch das abschwenkbar um eine horizontale Querachse gelagerte Fahrzeugvorderteil ist aber nicht nur bei einem Aufprall, sondern auch durch scharfes Abbremsen die Möglichkeit gegeben, die kinetische Energie des Fahrzeuges in ein Anheben des Fahrzeugschwerpunktes umzusetzen, wodurch sich der Bremsweg erheblich verkürzt und wodurch ein anschließender Aufprall zumindest abgeschwächt wird oder gar verhinderbar ist.

Durch Erhöhung des Reifendruckes gegen die Fahrbahn bei einem scharfen Bremsvorgang, bedingt durch das Anheben der Querachse aufgrund der zwischen den beiden Fahrzeugteilen erzeugten Schubkraft, ist auch ein Blockieren der Bremsen weitgehend ausgeschlossen, so daß übliche Antiblockiereinrichtungen überflüssig und in ihrer Wirkung bezügl. Bremsverhalten und Bremsweg durch ein SiKfz weit übertroffen sind.

Durch Lockerung der Bremskraft vor dem Blockieren der Räder ist zwar in gewissen Fällen (Glatteis) auch eine Verkürzung des Bremsweges möglich und ein Ausbrechen des starr mit dem Vorderteil verbundenen Hinterteiles eines Fahrzeuges zur Seite etwas eingeschränkt, aber weitaus wirkungsvoller ist die Erhöhung des Reifendruckes gegen die Fahrbahn, weil sich damit auch die Standfestigkeit des Fahrzeuges erhöht und ein entsprechend höheres Bremsmoment auf die Fahrbahn übertragbar ist.

Indem das Fahrzeughinterteil bei einem scharfen Bremsvorgang bei gleichzeitigem Anheben der Querachse gegen das Fahrzeugvorderteil aufläuft, ist bei einem SiKfz auch dadurch ein Ausweichen des Hinterteiles zur Seite weitgehendst ausgeschlossen, da hier die Schubkraft des Hinterteiles nach vorne mehr oder weniger verpufft, so daß die Entstehung seitlicher Kraftkomponenten unterbunden ist.

Außerdem wird durch das Anheben der Querachse beim Abbremsen auch der Anpressdruck der Hinterräder bzw. des Hinterrades (bei einem SiKrad) gegen die Fahrbahn erhöht, so daß einer Entlastung der Hinterradfederung aufgrund der Gewichtverlagerung eines Fahrzeuges beim Abbremsen nach vorne entgegengewirkt ist und wodurch dann auch Längsschwingungen des Fahrzeuges vermieden sind.

Als weitere Sicherheitsmaßnahme sind bei einem Si-Automobil beidseits Spiegeleinrichtungen entsprechend der Europ. Patentanmeldung 0 190 677 mit einigen Verbesserungen und etwas abgeänderter hier dargestellten Aufhängung vorgesehen, um Frontalzusammenstöße bei Überholvorgängen weitgehendst einzuschränken, zumal hier einem schuldigen Fahrer in Extremfällen weder Leichtsinn noch Unaufmerksamkeit nachweisbar ist, da es unmöglich ist, in allen Verkehrssituationen den erforderlichen Sicherheitsabstand einzuhalten, um sich rechtzeitig wieder einzureihen wenn ein Fahrzeug entgegenkommt, das man vorher bei bestem Wissen und Gewissen nicht wahrnehmen konnte.

Solche Fälle sind jedem Verkehrsrichter bekannt und verursachen oft immens hohe, den Schaden mitunter übersteigende Gerichts- und Anwaltskosten.

Mit einem SiKfz sollen derlei Unkosten zum Nachteil auch der unschuldig Geschädigten bzw. zum Vorteil Nichtgeschädigter soweit wie möglich eingeschränkt werden.

Ferner ist bei einem Si-Automobil auch ein doppelwandiges Dach vorgesehen, in dem auch ein Scheibenwischerantrieb gemäß der EP-A- 0 190 677 (siehe auch Offenlegungsschrift DE 37 25 591 A1) untergebracht ist.

Ein auf Wunsch über der Windschutzscheibe vorgesehenes doppelwandiges Vordach gewährleistet eine wohldosierte Bewässerung der Scheibe bei Regen und verhindert bei heftigem Regen und entsprechend reduzierter Fahrgeschwindigkeit ein direktes Aufprasseln der Regentropfen auch im Aussichtsbereich der Scheibe, so daß also zumindest in Gefahrenmomenten die Sicht durch Abbremsen des Fahrzeuges ganz wesentlich verbessert ist, während sich bei einem Automobil ohne Vordach die Aussicht durch Verringerung der Fahrgeschwindigkeit bei heftigem Regen nur unwesentlich verbessern läßt, so daß hier auch ein richtiges Einschätzen der Fahrgeschwindigkeit äußerst schwierig und ermüdend ist, weil nur in den Momenten ein entsprechend eingeengter Ausblick möglich ist, in denen gerade das Wischblatt vorbeiwischt. Das doppelwandige Dach mit einem auch über der Heckscheibe vorgesehenen Vordach hat auch an heißen Tagen seine Vorteile, indem es die Hitze abhält (was auch zur Verkehrssicherheit beiträgt), zumal auf der Vorderseite auch noch eine Klappe vorgesehen ist, um den Fahrwind hindurchstreichen zu lassen.

Außerdem kann bei Stillstand des Si-Automobils über eine automatische Einspritzeinrichtung intervallmäßig Wasser in das doppelwandige Dach eingespritzt werden, was in der Offenlegungsschrift DE-A- 37 25 591 schon angedeutet ist, so daß also im Automobil zurückgelassenen Kindern und Vierbeinern das Warten im Fahrzeug an heißen Tagen erträglicher gemacht ist.

Ein entsprechend ausgelegter Wasserbehälter, der auch für die Scheibenwaschanlage vorgesehen ist, ist dabei in einer heckseitig angeordneten Regenwasserauffangwanne untergebracht, in der auch ein Getriebemotor für den Antrieb der Wischbügel eingebaut ist.

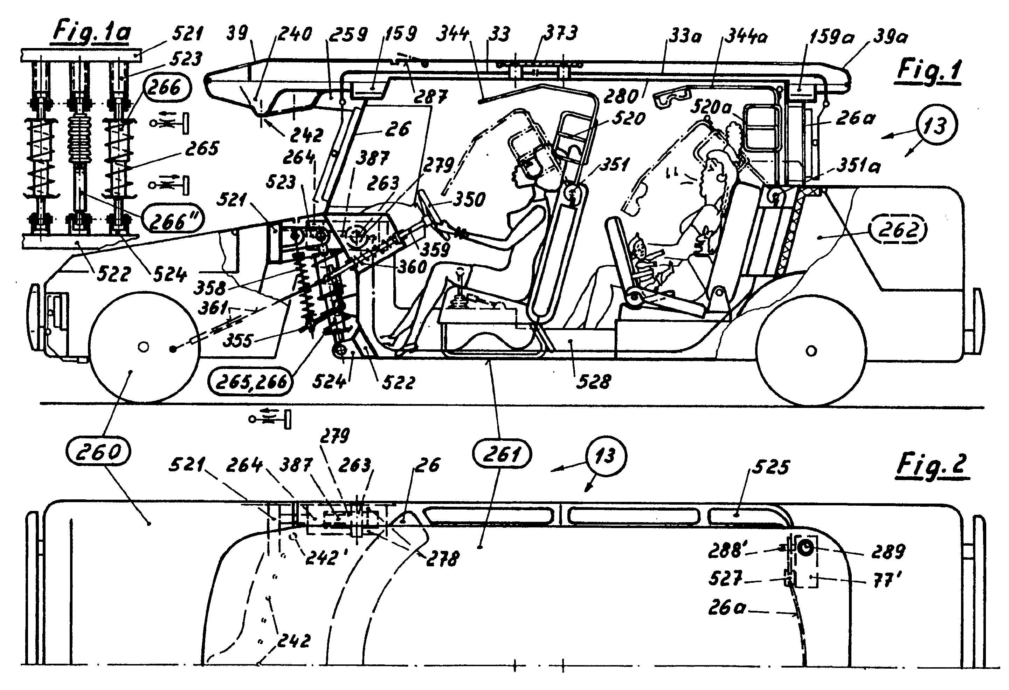

In den Darstellungen Fig. 1-41 sind jeweils SiKfz'e mit zusätzlich erforderlichen Einrichtungen aufgezeigt, wobei zwischen einem schwenkbar um eine horizontale Querachse 263 an einem Fahrzeughinterteil 261 gelagerten Fahrzeugvorderteil 260 und dem Hinterteil jeweils eine in ihrer Länge ausziehbare Lenkeinrichtung angebracht ist.

Bei einem SiPKW 13 (siehe Fig. 1) ist zu diesem Zweck eine in ihrer Länge ausziehbare Gelenkwelle 361 zwischen einem üblichen, am Vorderteil angebrachten Lenkmechanismus und einer axial verschiebbar in einem Armaturenbrett gelagerten Lenksäule 359 vorgesehen bzw. kardanisch gelagert, wobei ein an der Lenksäule befestigtes Lenkrad über eine auf die Lenksäule einwirkende Druckfeder 360 in einer hinteren Anschlagstellung festgehalten ist.

Beim Abschwenken des Fahrzeugvorderteiles wird das Lenkrad 350 über eine als Druckfeder ausgebildete Gegenfeder 358 und einen an der vorderen Stirnseite des Fahrzeughinterteiles schwenkbar gelagerten beidarmig wirkenden Winkelhebel 355 mit zunehmender Kraft entgegen der Krafteinwirkung der Druckfeder 360 nach vorne weggezogen.

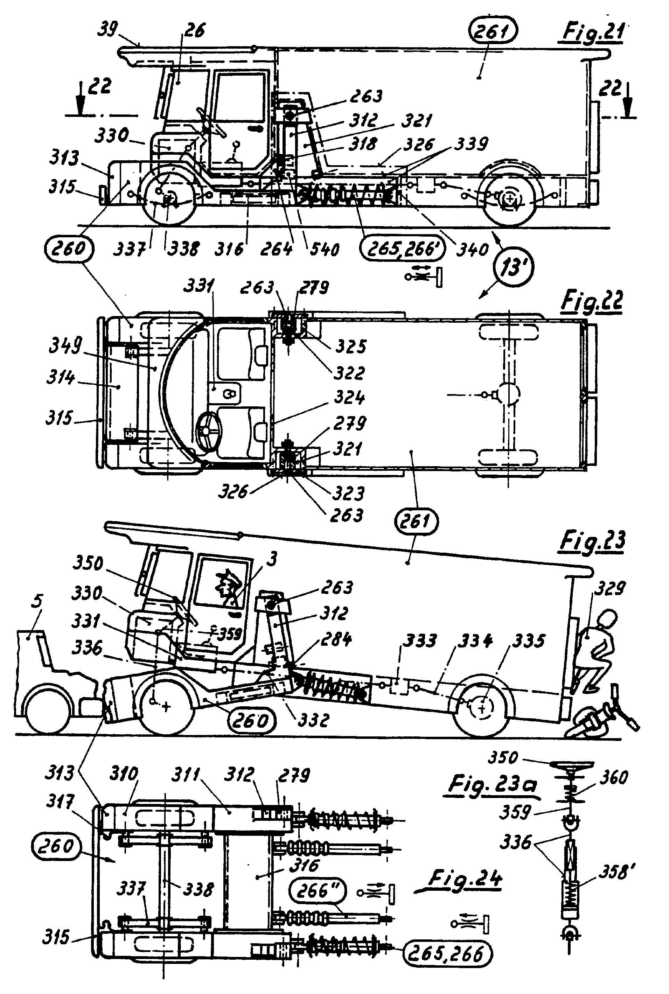

Bei einem SiFrontlenker (siehe Fig. 23 u.23a) ist zu diesem Zweck eine zwischen einer Lenksäule 359 und einem üblichen Lenkmechanismus angeordnete, in ihrer Länge ausziehbare Gelenkwelle 336 vorgesehen, wobei in dieser Gelenkwelle eine als Druckfeder ausgebildete Gegenfeder 358' eingebaut ist, welche ein im Prinzip gleichgelagertes Lenkrad 350 des Frontlenkers beim Abschwenken des Vorderteiles mit zunehmender Kraft entgegen der Krafteinwirkung einer Druckfeder 360 nach vorne wegzieht.

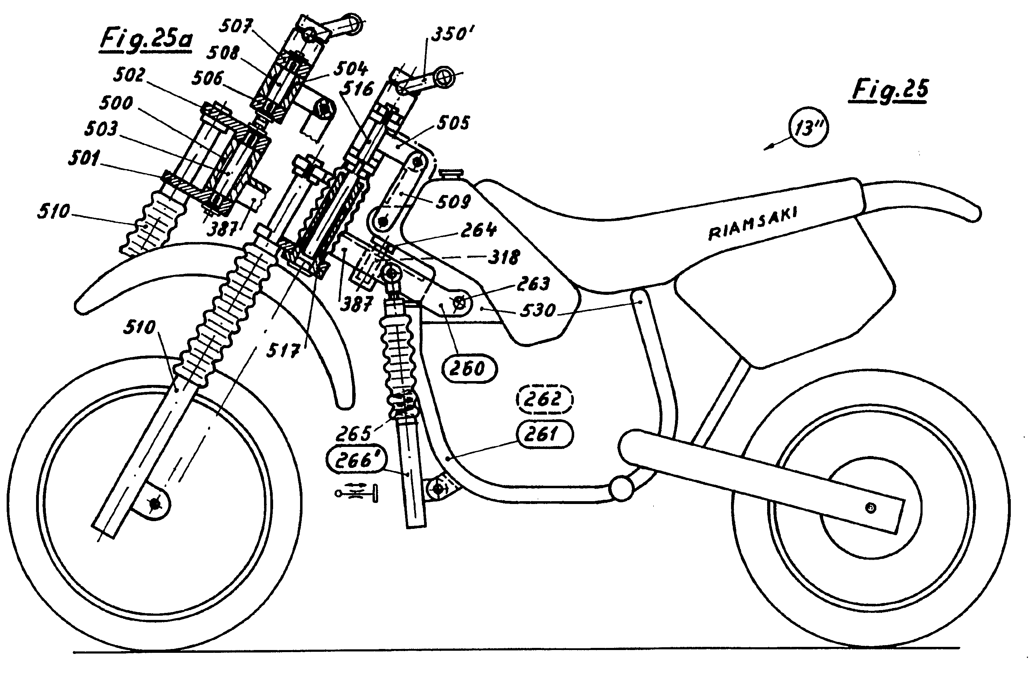

Bei einem SiKrad (siehe Fig. 25, 25a u.29) hingegen ist die in ihrer Länge ausziehbare Lenkeinrichtung durch eine axial verschiebbar über zwei Lenkbolzen 516 in einer üblichen Telegabel 501, 502, 503, 510 gelagerte Lenkgabel 506, 507, 508, 516 gebildet, wobei die Lenkgabel über die Lenkbolzen in entsprechend angeordneten Führungshülsen 517 der Telegabel geführt ist und über ein mit einem Lagerarm 505 versehenes Lagergehäuse 504 und eine Schwinge 509 in gelenkige Verbindung zum Fahrzeughinterteil gebracht ist, so daß also eine an der Lenkgabel befestigte Lenkstange 350' beim Abschwenken des Vorderteiles zwangsläufig nach vorne weggezogen wird.

Als Stoßdämpfer sind beispielsweise übliche Stoßdämpfer 266 (siehe großer ADAC-Ratgeber, Seite 48) in Anwendung gebracht, wobei hier über eine im Kolben eingebaute Drossel das Zurückschwenken des Fahrzeugvorderteiles gedämpft wird.

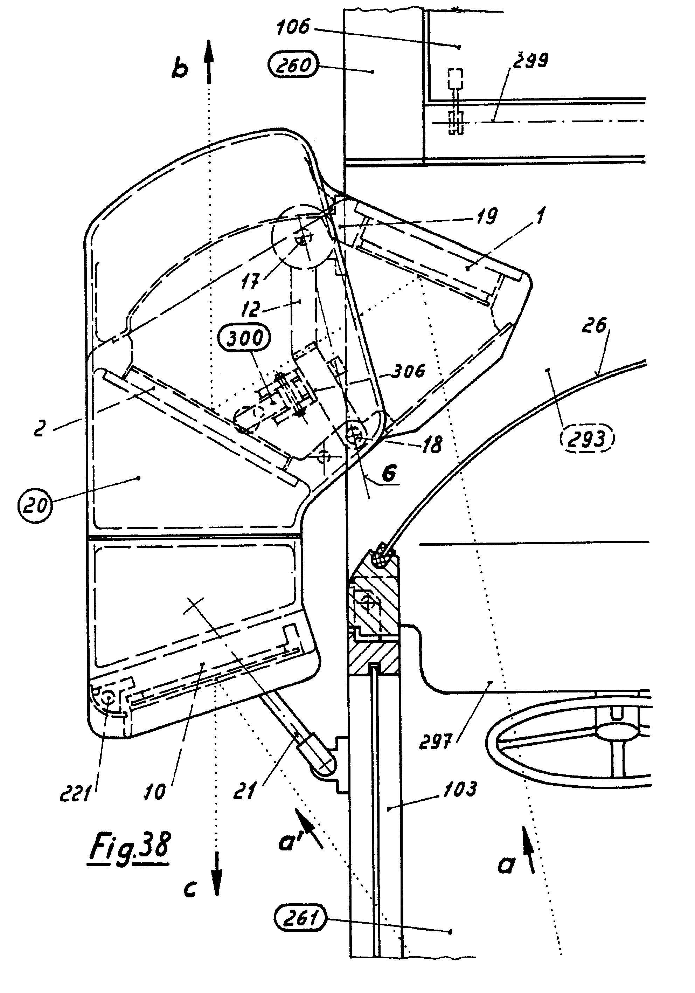

Für ein SiKrad 13" sind zweckmäßigerweise doppelwirkende Stoßdämpfer 266' (siehe Fig. 37) vorgesehen, deren Dämpfkraft beim Abschwenken des Fahrzeugvorderteiles über eine Steuereinheit 560 gesteuert und beim Zurückschwenken des Vorderteiles durch eine im Kolben 513 des Stoßdämpfers eingebaute Drossel 554 bestimmt ist.

Über die Steuereinheit wird das Bremsverhalten eines SiKfz'es automatisch den Fahrbahnverhältnissen angepaßt.

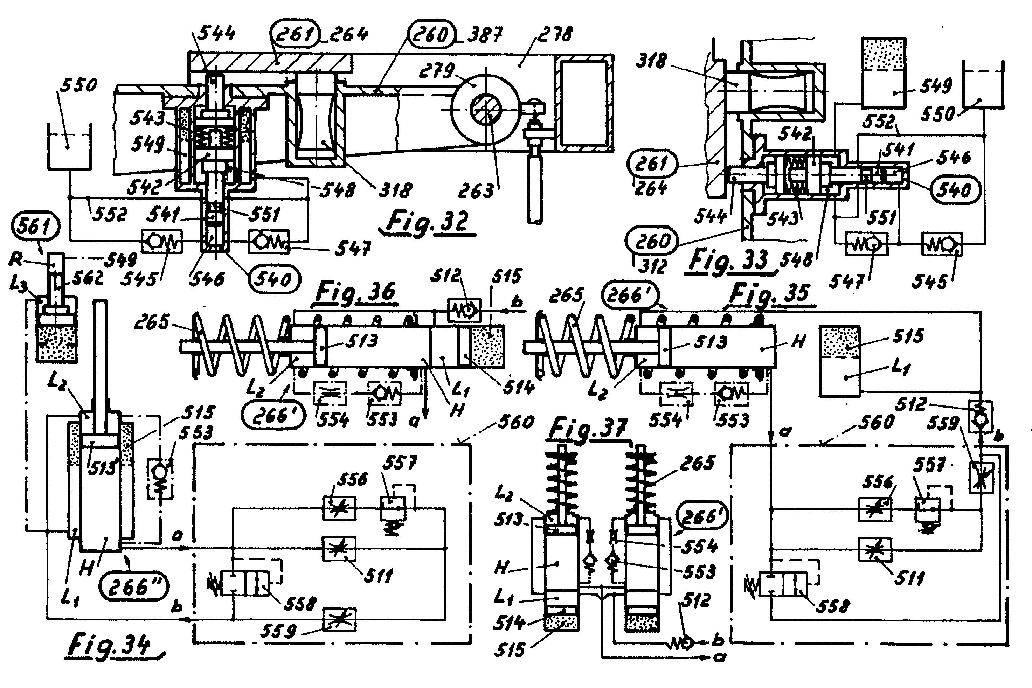

Entsprechende Stoßdämpfer 266' (siehe Fig. 35 u.36), kombiniert mit einer über deren Zylinderrohr gestülpten Druckfeder 265 sind auch für einen SiFrontlenker 13' (siehe Fig. 21) vorgesehen. Darüber hinaus ist bei einem SiPKW 13 (siehe Fig. 1 u.1b) und einem SiFrontlenker (siehe Fig. 24) beim Einsatz üblicher Stoßdämpfer-Federeinheiten 265, 266 zusätzlich mindestens ein Stoßdämpfer 266" (siehe Fig. 34) vorgesehen, dessen Dämpfkraft beim Abschwenken des Vorderteiles ebenfalls über eine Steuereinheit 560 gesteuert ist, wobei der Stoßdämpfer beim Zurückschwenken des Vorderteiles ähnlich einer Luftfeder wirkt und die Druckkraft der Druckfedern 265 der Stoßdämpfer-Federeinheiten 265, 266 unterstützt.

Um einen harten Anschlag beim Zurückschwenken des Fahrzeugvorderteiles gegen einen am Fahrzeughinterteil angebrachten Anschlag 264 zu verhindern, sind bei einem SiPKW 13 (siehe Fig. 32), einem SiFrontlenker (siehe Fig. 33) und bei einem SiKrad (siehe Fig. 25) jeweils Schwingmetallpuffer 318 in einem Tragarm 387 (PKW und Krad) bzw. in einer Stütze 312 (Frontlenker) des Vorderteiles eingesetzt und befestigt.

Dabei wird die Dämpfkraft der für einen PKW und einen Frontlenker zum Einsatz gebrachten Schwingmetallpuffer durch beidseits vorgesehene Endlagen-Stoßdämpfer 540 mit Niveauausgleich unterstützt (siehe Fig. 32 u.33), wobei diese Stoßdämpfer auch über einen Druckübersetzer 561 (siehe Fig. 34) mit vorgesehenen Stoßdämpfern 266" in Wirkverbindung gebracht werden können.

Über den Druckübersetzer wird bei erhöhtem Ladegewicht die Druckkraft der Stoßdämpfer 266" automatisch verringert, so daß das Bremsverhalten eines SiPKW's bzw. eines SiFrontlenkers (siehe Fig. 1, 1a bzw. 24) auch automatisch dem Ladegewicht angepaßt ist.

Fig. 1 zeigt einen SiPKW 13 mit einem abschwenkbar um eine horizontale Querachse 263 an einem Fahrzeughinterteil 261 gelagerten Fahrzeugvorderteil 260, wobei der Antriebsraum 262 mit Motor, Getriebe usw. heckseitig untergebracht ist.

Zwischen den Fahrzeugteilen ist hier zusätzlich zu zwei Stoßdämpfer-Federeinheiten 265, 266 noch ein Stoßdämpfer 266" angeordnet (siehe Fig. 1a und Fig. 34).

Fig. 2 zeigt einen SiPKW in Draufsicht mit einer kegelförmig um die Schwenkachse eines Wischbügels 33 gewölbten Windschutzscheibe 26, sowie einer zylinderförmig um die Schwenkachse eines Wischbügels 33a gewölbten Heckscheibe 26a (siehe auch Fig. 1). In den Endschwenkstellungen der Wischblätter sind selbstverständlich Mulden in die Scheiben eingeformt, damit die Wischblätter berührungslos zu den Scheiben gehalten sind.

Fig. 3 zeigt einen SiPKW mit einem Lenkrad 350, das mittels einer Druckfeder 360 in einer hinteren Anschlagstellung festgehalten ist und dessen Nachgiebigkeit mit zunehmendem Abschwenkwinkel des Fahrzeugvorderteiles bei einem Aufprall durch eine als Druckfeder ausgebildete Gegenfeder 358 zunehmend erleichtert ist.

Fig. 4 zeigt einen hinteren Schutzbügel 351a, 344a für die Fondinsassen eines SiPKW's mit einer Querachse 351a und beidseits davon abstehenden Armen 344a, wobei zwischen den Schwenkenden der Arme eine gepolsterte Querstrebe 433, 434 befestigt ist und wobei zwischen den Armen bzw. zwischen der Querstrebe und einem elastischen Querstrang 435 (siehe Fig. 3) ein hochfestes, elastisches Auffangnetz 345a (siehe Fig. 15) aufgespannt ist.

Über einen fahrerseitig angebrachten Auslöser 348' wird der Schutzbügel in dargestellter Bereitschafts-Schwenkstellung festgehalten bzw. nach einem bestimmten Abschwenkwinkel des Vorderteiles in seiner Schwenkbarkeit freigegeben.

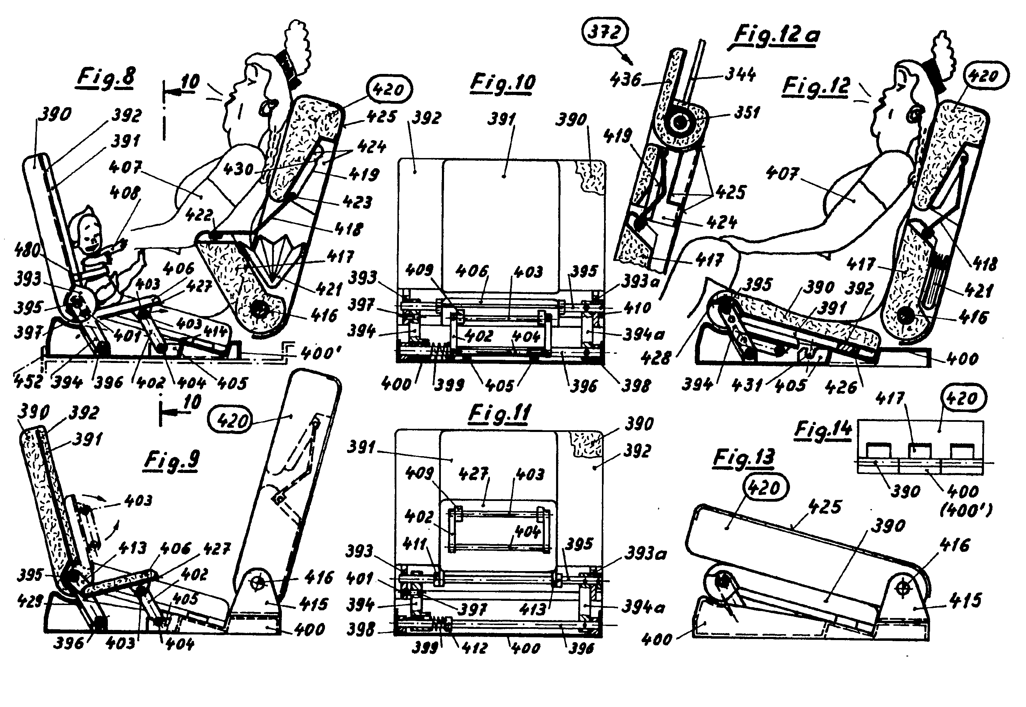

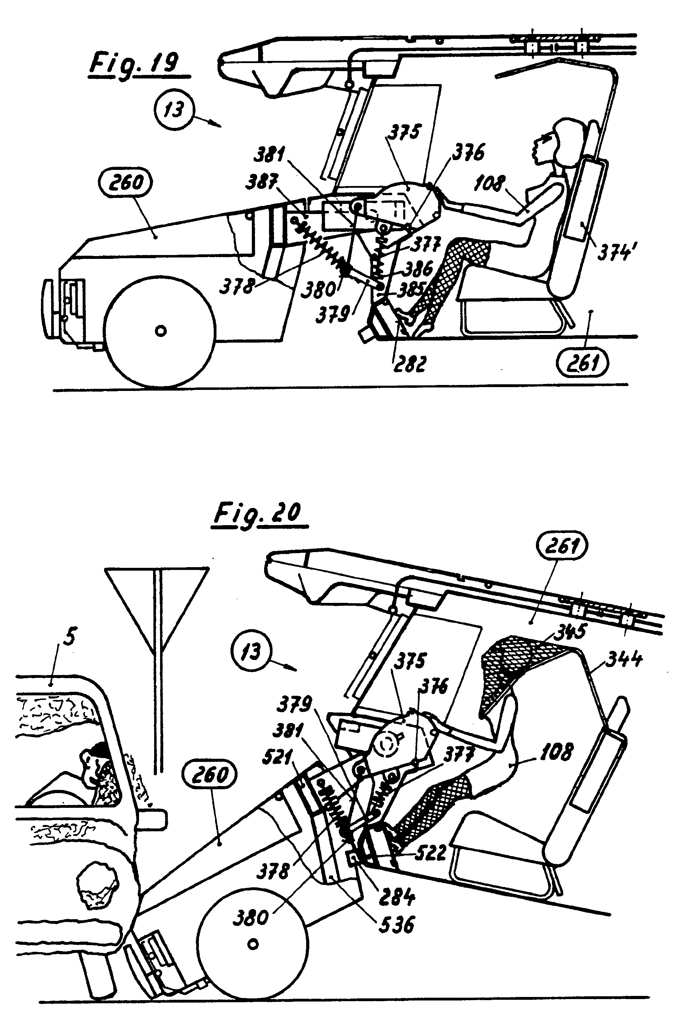

Fig. 5 zeigt gemäß Ansicht 5 zu Fig. 4 die Querachse 351a eines hinteren Schutzbügels bzw. die Querachse 351 eines vorderen Schutzbügels (siehe Fig. 6) in Stirnansicht mit einer am beifahrerseitigen Ende der Querachse fest aufgebrachten Nockenscheibe 445, an welcher der beifahrerseitige Arm 344a des Bügels befestigt ist. Über einen üblichen Kurbeltrieb 443, 444, 537, 538 mit einer axial verschiebbar in Lagern 539 gelagerten Druckstange 538 u. eine an der Nockenscheibe vorgesehene Nocke 445 ist das Wiederhochschwenken des Schutzbügels in seine Bereitschafts-Schwenkstellung 344a ermöglicht. In der Gebrauchsschwenkstellung 344a.1 des Schutzbügels ist eine gegen die Anschlagnase 446 der Nockenscheibe gerichtete Anschlageinrichtung 440 vorgesehen (siehe Fig. 17).

Fig. 6 zeigt einen vorderen Schutzbügel 351, 344 mit einem zwischen seinen Armen 344 aufgespannten Auffangnetz 345.

Fig. 7 zeigt eine Vordersitzlehne 372 mit einer in die Lehne einschwenkbaren Kopfstütze 436.

Fig. 8-14 zeigt einen in Gegenfahrrichtung hochschwenkbar auf zwei Stützbügeln in einer Sitzwanne 400 bzw. 400' gelagerten Kindersitz, dessen Lehne aus einem um eine obere Querachse 395 seines hinteren Stützbügels hochgeklappten Rücksitz 390, 392 (siehe Fig. 12) gebildet ist.

Fig. 15 zeigt einen SiPKW bei einem Frontalaufprall mit abgeschwenkten Schutzbügeln und einem nach vorne weggezogenen Lenkrad 350, das nun aufgrund der beim Abschwenken des Vorderteiles bewirkten Druckkrafterhöhung der Gegenfeder 358 in einer vorderen Anschlagstellung festgehalten ist.

Fig. 16 zeigt eine in Fig. 17 detailliert dargestellte Anschlageinrichtung 440 für die Schwenkbegrenzung eines Schutzbügels gemäß Fig. 4 u.6 in dessen Gebrauchs-Schwenkstellung.

Fig. 17 zeigt eine Anschlageinrichtung 440 für einen Schutzbügel mit einem in seiner Anschlagstellung über eine Anschlagbuchse 456 axial verschiebbar gelagerten Anschlagbolzen 455, wobei der Bolzen entgegen der Krafteinwirkung einer Druckfeder 458 axial verschiebbar in der Buchse gelagert ist.

Fig. 18 zeigt einen SiPKW 13 ohne Vordach über der Windschutzscheibe 26 gemäß der Offenlegungsschrift DE 37.25 591 A 1.

Fig. 19 zeigt einen um eine horizontale Querachse 376 nach vorne abschwenkbar gelagerten Beifahrerkasten 375, dessen Oberseite zylinderförmig um die Querachse gewölbt ist, in seiner hinteren Anschlag-Schwenkstellung. Dabei wird der Beifahrerkasten durch eine Druckfeder 377 in seiner Normallage festgehalten.

Fig. 20 zeigt einen Beifahrerkasten 375, der beim Abschwenken des Fahrzeugvorderteiles aufgrund eines Frontalaufpralles durch eine als Druckfeder ausgebildete Gegenfeder 378 entgegen der Krafteinwirkung der Druckfeder 377 nach vorne abgeschwenkt wurde und nun in seiner vorderen Anschlag-Schwenkstellung festgehalten ist.

Fig. 21 zeigt einen Frontlenker 13' mit einem nach vorne abstehenden Fahrzeugvorderteil 260 und beidseits angeordneten Stoßdämpfer-Federeinheiten 265, 266' (siehe Fig. 35 u.36).

Fig. 22 zeigt gemäß Schnitt 22-22 zu Fig. 21 einen Frontlenker in Draufsicht mit einer abschwenkbar nach vorne am Fahrzeugvorderteil gelagerten Gepäckkasten 314.

Fig. 23 zeigt einen Frontlenker bei einer Massenkarambolage. Beim Aufprall wurde ein axial verschiebbar über seine Lenksäule 359 (siehe Fig. 23a) in einem Armaturenbrett gelagertes Lenkrad 350 durch die Krafteinwirkung einer als Druckfeder ausgebildeten Gegenfeder 358', welche hier in einer ausziehbaren Gelenkwelle 336 untergebracht und so angeordnet ist, daß sie die beiden Gelenkwellenhälften zusammenzieht, entgegen der Krafteinwirkung einer auf die Lenksäule einwirkenden Druckfeder 360 nach vorne weggezogen.

Fig. 24 zeigt das Fahrzeugvorderteil 260 eines Frontlenkers ohne Gepäckkasten 314 (siehe Fig.

22).

Im Gegensatz zum Ausführung gemäß Fig. 21 sind hier beidseits zwei Stoßdämpfer-Federeinheiten 265, 266 vorgesehen, sowie zusätzlich zwei Stoßdämpfer 266″, über das Abschwenken des Fahrzeugvorderteils gedämpft wird, wobei für diese Stoßdämpfer eine gemeinsame Steuereinheit 560 vorgesehen ist, indem deren Anschlüsse gemäß Fig. 37 in Verbindung gebracht sind.

Fig. 25 u.25a zeigen ein SiKrad 13″ mit einer über Lenkbolzen 516 axial verschiebbar in Führungshülsen 517 einer üblichen Telegabel 501, 502, 503, 510 gelagerten Lenkgabel 506, 507, 508, 516 an deren oberem Lagerflansch 507 eine Lenkstange 350′ befestigt ist.

Die in üblicher Schräglage schwenkbar über ihren Lagerbolzen 503 in einem Lagergehäuse 500 eines Tragarmes 387 gelagerte Telegabel ist über den Tragarm schwenkbar um eine horizontale Querachse 263 an einem Tragrahmen 530 des Fahrzeughinterteiles gelagert, während die Lenkgabel schwenkbar über ihren Lagerbolzen 508 in einem Lagergehäuse 504 gelagert ist, welches über einen nach hinten abstehenden Lagerarm 505 und eine nach unten abstehende Schwinge 509 mit dem Fahrzeughinterteil in gelenkige Verbindung gebracht ist, indem die Schwinge jeweils schwenkbar um eine horizontale Querachse einerseits am verlängerten Arm des Lagergehäuses und andererseits an einem Tragrahmen 530 des Hinterteiles angelenkt ist. Dabei sind die beiden Lagerbolzen 503 u. 508 der Telegabel und der Lenkgabel zueinander fluchtend angeordnet.

Zwischen den beiden Fahrzeugteilen 260 u. 261 sind beidseits Stoßdämpfer-Federeinheiten 265, 266′ mit doppelwirkenden Stoßdämpfern 266′ in vertikaler Einbaulage vorgesehen (siehe auch Fig. 37).

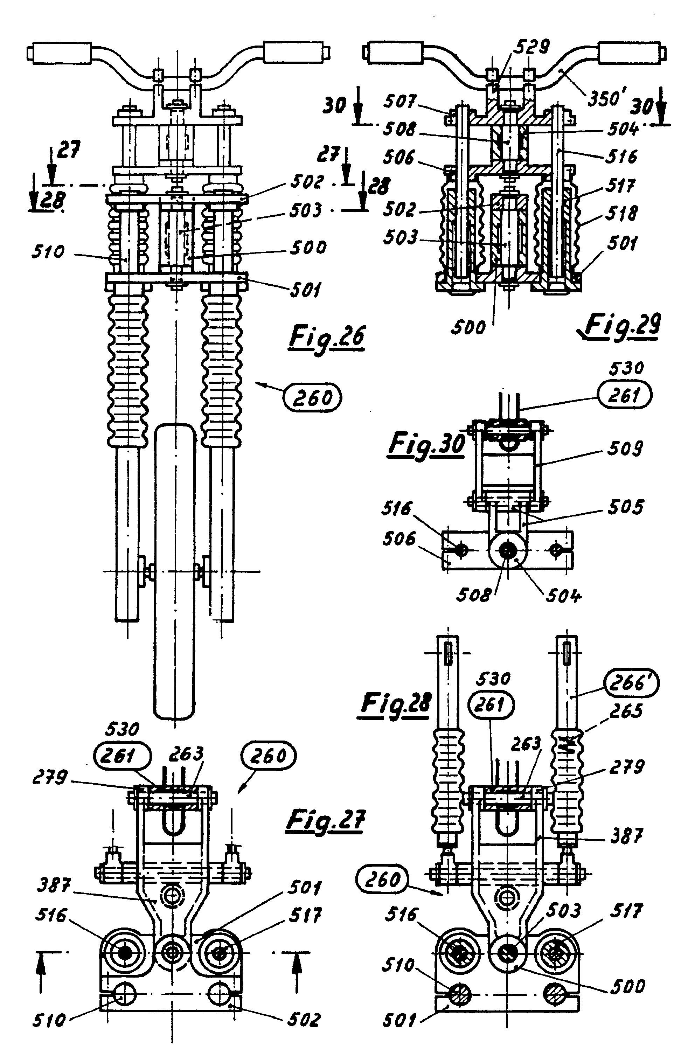

Fig. 26 zeigt eine Telegabel 501, 502, 503, 510.

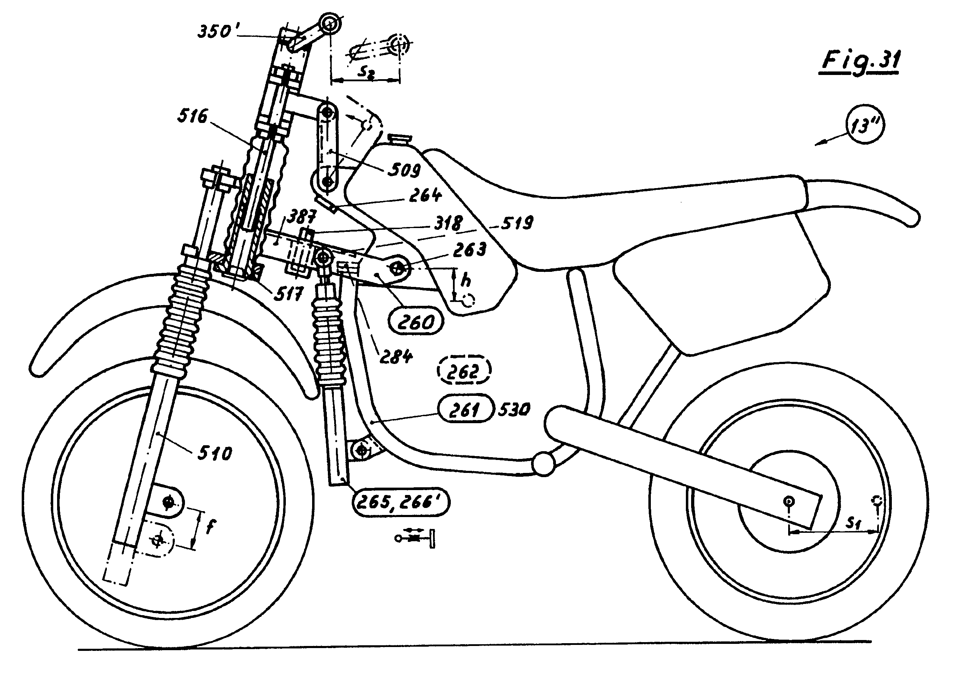

Fig. 27 zeigt gemäß Schnitt 27-27 zu Fig. 26 in Draufsicht eine schwenkbar an einem Tragarm 387 des Vorderteiles gelagerte Telegabel, wobei der Tragarm über einen fest zwischen seinen Lageraugen 279 gelagerten Achsbolzen 263 schwenkbar in der vertikalen Längsebenen in einem, am Tragrahmen 530 des Hinterteiles angebrachten Lagerauge gelagert ist.

Fig. 28 zeigt gemäß Schnitt 28-28 zu Fig. 26 beidseits an einer unteren Lagerplatte 501 der Telegabel befestigte Führungshülsen 517 für die Längsführung der Lenkgabel über deren Lenkbolzen 516.

An einem Tragarm 387 sind beidseits Stoßdämpfer-Federeinheiten 265, 266′ mit ihren oberen Schwenkenden angelenkt.

Fig. 29 zeigt eine Lenkgabel 506, 507, 508, 516 mit einer an ihrem oberen Lagerflansch 507 befestigten Lenkstange 350′.

Fig. 30 zeigt gemäß Schnitt 30-30 zu Fig. 29 ein Lagergehäuse 504 für die Lagerung einer Lenkgabel mit einem nach hinten abstehenden Lagerarm 505 und einer für die gelenkige Verbindung zum Fahrzeughinterteil vorgesehenen Schwinge 509.

Fig. 31 zeigt ein SiKrad bei einem scharfen Bremsvorgang, wobei die Querachse 263 des SiKrades trotz Nachgebens der üblicherweise an einer Telegabel vorgesehenen Stoßdämpfer-Federeinheiten 510 um einen angenommenen Federweg f hier um einen angenommenen, über die vorgesehenen Stoßdämpfer-Federeinheiten 265, 266′ bestimmbaren Betrag h angehoben wurde.

Fig. 32 zeigt eine Endlagendämpfung für ein Fahrzeugvorderteil eines SiPKW's in dessen oberer Anschlag- bzw. Normalschwenkstellung mit jeweils beidseits angeordneten Schwingmetallpuffern 318 und Endlagen-Stoßdämpfern 540.

Fig. 33 zeigt eine Endlagendämpfung analog Fig. 32 für ein Fahrzeugvorderteil eines SiFrontlenkers.

Fig. 34 zeigt einen Stoßdämpfer 266″ mit einer Steuereinheit 560, über welche das Abschwenken eines Fahrzeugvorderteiles bei einem scharfen Bremsvorgang steuerbar ist, wobei die Dämpfkraft des Stoßdämpfers automatisch den Fahrbahnverhältnissen angepaßt wird.

Der Stoßdämpfer wirkt beim Zurückschwenken des Vorderteiles ähnlich einer Luftfeder, wobei seine Druckkraft über einen Druckübersetzer 561, der mit einem Endlagenstoßdämpfer 540 in Wirkverbindung gebracht ist, so gesteuert ist, daß sie sich bei zunehmendem Ladegewicht eines Fahrzeuges mit zunehmendem Druck in Endlagenstoßdämpfer verringert.

Fig. 35 zeigt eine Stoßdämpfer-Federeinheit 265, 266′ mit einem doppelwirkenden Stoßdämpfer 266′ und einer Steuereinheit 560, über welche die Dämpfkraft des Stoßdämpfers beim Abschwenken des Fahrzeugvorderteiles gesteuert wird, während die Dämpfkraft des Stoßdämpfers beim Zurückschwenken des Vorderteiles durch eine in seinem Kolben 513 eingebaute Drossel 554 bestimmt ist.

Fig. 36 zeigt eine Stoßdämpfer-Federeinheit 265, 266′ mit einem doppelwirkenden Stoßdämpfer 266′, für dessen Druckbehälter $L_1$ im Gegensatz zur Ausführung gemäß Fig. 35 ein Trennkolben 514 oder eine Membrane vorgesehen ist, um die Hydraulik von einer Gasfüllung 515 zu trennen.

Fig. 37 zeigt zwei Stoßdämpfer-Federeinheiten 265, 266′ ähnlich der Ausführung Fig. 36, wobei hier die Anschlüsse der Stoßdämpfer miteinander in Verbindung gebracht sind, so daß eine gemeinsame Steuereinheit 560 für die Steuerung der Stoßd.-Dämpfkraft beim Abschwenken des Fahrzeugvorderteiles zur Anwendung gebracht werden kann und für eine gleichmäßige Kraftaufteilung sorgt.

Fig. 38 zeigt eine auf der Fahrerseite eines SiPKW's oder eines SiFrontlenkers befestigte Spiegeleinrichtung 20 in Gebrauchslage.

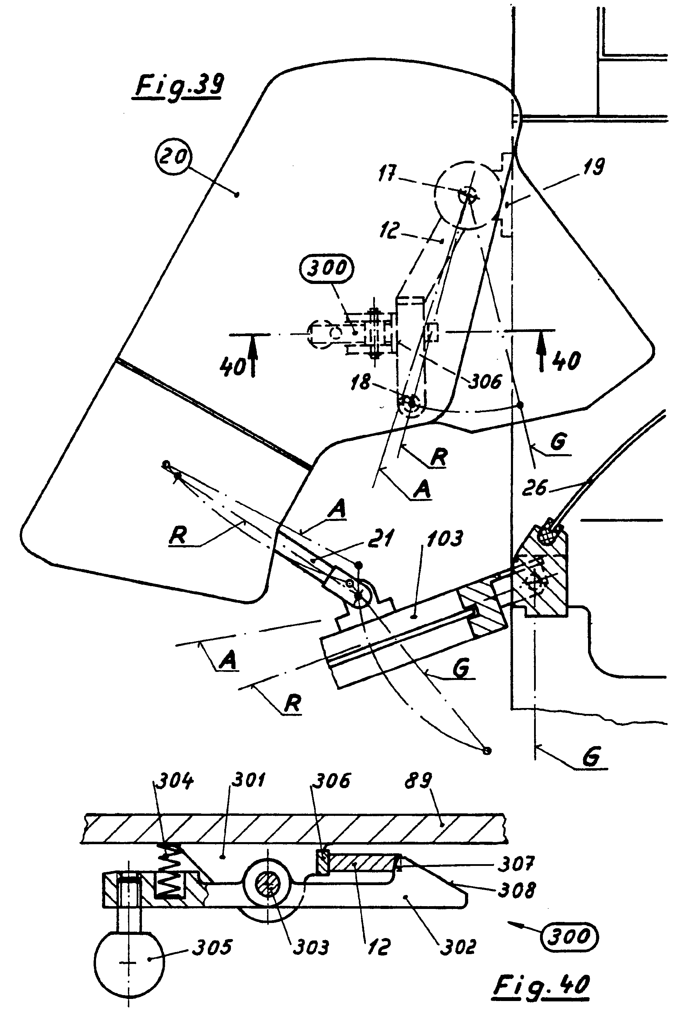

Fig. 39 zeigt eine Spiegeleinrichtung 20 in Ausschwenklage bei geöffneter Fahrertüre 103.

Fig. 40 zeigt gemäß Schnitt 40-40 Fig. 39 im Längsschnitt eine zwischen einer Spiegeleinrichtung 20 und derem Halter angebrachte, am Rahmenboden 89 der Spiegeleinrichtung befestigte Einrasteinrichtung 300.

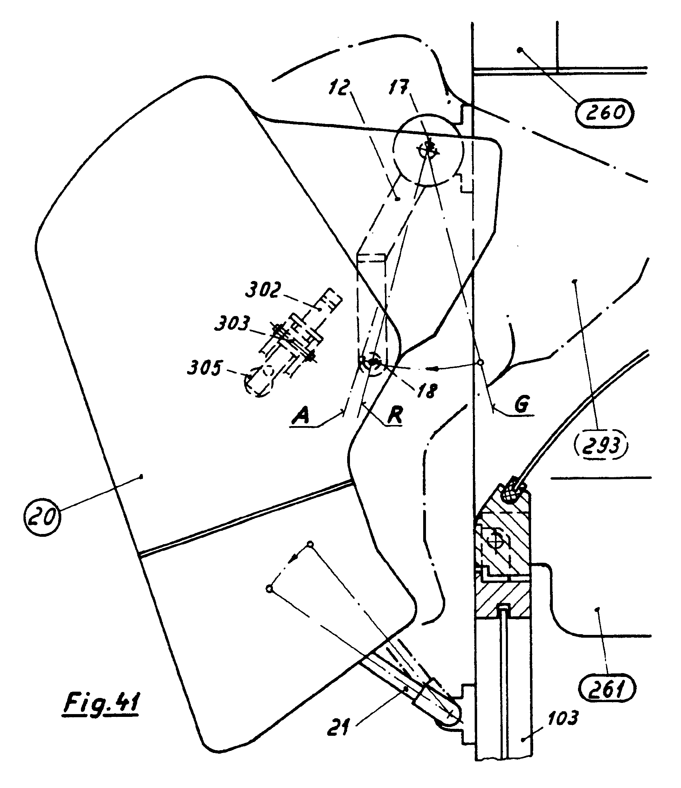

Fig. 41 zeigt eine Spiegeleinrichtung 20 in "Putzstellung"

Fig. 1 zeigt einen SiPKW 13 mit einem samt Vorderradaufhängung abschwenkbar um eine horizontale Querachse 263 an einem Fahrzeughinterteil 261 gelagerten Fahrzeugvorderteil 260.

Dabei sind beidseits zur Fahrzeugmitte zwei übliche Stoßdämpfer-Federeinheiten 265, 266 wirksam zwischen den beiden Fahrzeugteilen angeordnet, wobei die Stoßdämpfer 266 der Einheiten über eine Drossel das Zurückschwenken des Fahrzeugvorderteiles nach einem scharfen Bremsvorgang beim Ausziehen ihrer Kolbenstangen dämpfen (siehe sinnbildliche Darstellung der Kolbenstange und der Drossel, wobei hier die Dämpfrichtung durch einen Pfeil dargestellt ist).

Für die Schwenklagerung der Einheiten ist auf der Hinterseite des Vorderteiles ein oberer Querträger 521 mit daran befestigten Lagerböcken 523 am Tragrahmen des Vorderteiles und auf der Vorderseite des Fahrzeuginnenraumes ein unterer Querträger 522 mit daran befestigten Lagerböcken 524 am Tragrahmen des Hinterteiles vorgesehen, - so daß also die an den Lagerböcken angelenkten, jeweils schwenkbar um eine horizontale Querachse gelagerten Einheiten in vertikaler Einbaulage zwischen den beiden Fahrzeugteilen untergebracht sind.

Ganz außen sind am oberen Querträger 521 des Vorderteiles zwei Tragarme 387 mit an deren Enden angebrachten Lageraugen 279 für die Schwenklagerung des Vorderteiles um die Querachse 263, welche durch zwei zueinander fluchtende Achsbolzen 263 an den Außenseiten des SiPKW's gebildet ist, befestigt (siehe auch Fig. 2 u. 3).

Die Schwenkbarkeit des Vorderteiles nach oben ist hier durch beidseits am stabilen Rahmen des Fahrzeughinterteiles angebrachte, gegen die Tragarme gerichtete Anschläge 264 begrenzt, wobei die als Querriegel 264 ausgebildeten Anschläge jeweils zwei vom stabilen Rahmen des Hinterteiles nach vorne abstehende Lagerstege 278, zwischen denen die Achsbolzen 263 jeweils fest gelagert sind, überbrücken (siehe Fig. 2 u. 3).

Zwischen den Stoßdämpfer-Federeinheiten 265, 266 ist nun in der Fahrzeugmitte ein zusätzlicher, einfach wirkender Stoßdämpfer 266" wirksam zwischen dem Vorder- und Hinterteil des SiPKW's angelenkt (siehe Fig. 1a), wobei dieser Stoßdämpfer die Aufgabe hat, eine durch eine Steuereinheit 560 (siehe Fig. 34) gesteuerte Dämpfkraft beim Abschwenken des Vorderteiles bei gleichzeitigem Zusammendrücken der in der Einheiten 265, 266 eingebauten Druckfedern 265 zu bewirken, so daß also das Anheben der Querachse 263 bei einem scharfen Bremsvorgang je nach der durch den Stoßdämpfer 266" bewirkten Dämpfkraft mehr oder weniger zusätzlich erschwert ist.

Beim Zurückschwenken des Vorderteiles öffnet dann ein im Kolben 513' des Stoßdämpfers 266" eingebautes Rückschlagventil 553 (s. Fig. 34) den Durchlaß durch den Kolben, so daß der Stoßdämpfer 266" beim Ausziehen der Kolbenstange keine Dämpfkraft bewirkt, sondern die Druckkraft der beiden in den Einheiten 265, 266 eingebauten Druckfedern 265 beim Zurückschwenken des Vorderteiles unterstützt.

Dabei wird das Zurückschwenken des Vorderteiles durch die in den Einheiten eingebauten, im Kraftfahrzeugbau üblichen Stoßdämpfer 266 gedämpft.

Während also das Abschwenken des Vorderteiles bei gleichzeitigem Zusammendrücken der Druckfedern 265 durch den Stoßdämpfer 266" gedämpft ist, wird das Zurückschwenken des Vorderteiles mittels der Druckfedern und des Fahrzeuggewichtes, sowie mittels der Druckkraft des Stoßdämpfers 266" durch die beiden Stoßdämpfer 266 gedämpft.

Für die Fahrzeuginsassen sind zwei vordere Schutzbügel 344, 351 und ein hinterer Schutzbügel 344a, 351a, jeweils mit einem zwischen deren Armen 344 bzw. 344a befestigten Auffangnetz 345 bzw. 345a (siehe Fig. 15) vorgesehen (siehe auch Fig. 4 u.6).

An den äußeren Armen 344 bzw. 344a der schwenkbar und axial verschiebbar über ihre Querachsen 351 bzw. 351a gelagerten Schutzbügel sind für den Fall eines durch einen anderen Verkehrsteilnehmer bewirkten Seitenaufpralles nachgiebig ausgebildete Schläfenschutzbügel 520 bzw. 520a in geeigneter Höhe anmontiert, wobei die Schläfenschutzbügel über ihre Schutzbügel auch dann in Gebrauchslage abgeschwenkt werden, wenn aus Zeitmangel oder aufgrund einer zu geringen Fahrgeschwindigkeit keine Möglichkeit besteht, das Auslösen der Schutzbügel durch Abbremsen des Fahrzeuges über ihre am Fahrzeugvorderteil angelenkten Auslöser zu bewirken, weil die Schutzbügel aufgrund ihrer Massenträgheit bei einem entsprechend heftigen Aufprall axial verschoben werden, wodurch sie ebenfalls außer Eingriff zu ihren Auslösern gebracht werden.

Die entsprechend ausgebildeten Schläfenschutzbügel sollen einen Aufprall mit dem Kopf gegen ein Seitenfenster oder einen Türpfosten verhindern, wobei sie natürlich entsprechende Vorteile in ihrer Nachgiebigkeit bei einem Aufprall bieten sollten.

Zweckmäßigerweise sind sie hier über einen an ihrer Vorderseite befestigten Halter aus Federstahl oder über einen entsprechend nachgiebig ausgebildeten Halter an einem äußeren Arm eines Schutzbügels anmontiert.

Für die Unterbringung eines üblichen Gestänges zwischen einem üblichen Schalthebel und einem heckseitigen Getriebe ist ein zwischen dem Fahrer- und Beifahrersitz nach hinten gezogenes Tunnel 528 zu einem heckseitig angeordneten Antriebsraum 262 vorgesehen.

Um bei Regenwetter eine wohldosierte Bewässerung einer, jeweils um eine vertikale Schwenkachse eines Wischbügels 33 bzw. 33a gewölbten Windschutzschiebe 26 bzw. Heckscheibe 26a zu gewährleisten, sind im über den Fahrzeuginnenraum 261 hinausgezogenen Dachboden 280 des SiPKW's Auffangwannen 159 und 159a für Regenwasser vorgesehen, von denen aus das Wasser durch Ablauflöcher hindurch direkt vor die Scheiben läuft.

Dabei ist im Vordachboden des über der Windschutzscheibe angebrachten doppelwandigen Vordaches noch zusätzlich eine Wanne 240 eingeformt, um bei mäßigem Regen eine bessere Bewässerung auch im unteren Bereich der Scheibe zu erzielen, weil hier das aus der Auffangwanne 159 ablaufende Regenwasser zum größten Teil den unteren Bereich der Scheibe nicht mehr erreicht. Damit es in die Wannen auch hineinregnen kann, sind in den Dekkeln 39 u.39a des Daches Längsschlitze angebracht.

Die Deckel sind hier jeweils schwenkbar um eine horizontale Querachse an einem Überrollbügel 373 gelagert, wobei im vorderen Deckel 39 eine Klappe 287 vorgesehen ist, um an heißen Tagen zwecks Kühlung Fahrwind durch das doppelwandige Dach hindurchzuleiten, während eine automatisch betriebene Einspritzeinrichtung bei Stillstand des Fahrzeuges durch intervallmäßiges Einspritzen von Wasser in das Dach für Kühlung sorgt.

Ein entsprechend ausgelegter Wasserbehälter 77' (siehe Fig. 2), der auch für die künstliche Bewässerung der Scheiben vorgesehen ist, ist hier in der heckseitig vorgesehenen Regenwasserauffangwanne 159a auf der Beifahrerseite untergebracht, während ein Getriebemotor für den Scheibenwischerantrieb in derselben Wanne auf der Fahrerseite eingebaut ist.

Über ein durch die Wandung der Auffangwanne in den Fahrzeuginnenraum hindurchgeführtes, übliches Wasserstandsglas 288' kann der jeweilige Wasserstand im Wasserbehälter vom Innenraum aus sichtbar gemacht werden. Dabei ist ein für den Behälter vorgesehener Einfüllstutzen 289 durch den hinteren Deckel 39a nach außen geführt (siehe Fig. 2).

Die Wanne 240 im vorderen Vordachboden ist mit ihrem Wannengrund kreisbogenförmig um die Windschutzscheibe herumgezogen, wobei der Wannengrund jeweils von außen nach innen zur Fahrzeugmitte hin ein Gefälle aufweist, so daß aufgefangenes Regenwasser vom Fahrwind bei mäßigem Regen zunächst durch ein in der Fahrzeugmitte am Wannengrund angebrachtes Ablaufloch hindurch abgesaugt und auf die Windschutzscheibe aufgesprüht wird.

Erst bei stärker einsetzendem Regen bzw. ansteigendem Wasserspiegel erfolgt dann auch eine Bewässerung der Scheibe über zusätzlich am Wannengrund vorgesehene, weiter außen angebrachte Ablauflöcher 242 hindurch (siehe Fig. 2).

Dabei ist der Wannenboden zum Wannengrund hin so geformt, daß der Fahrwind vor den Ablauflöchern mit zunehmender Neigung nach unten abgelenkt wird, so daß die Windschutzscheibe möglichst weit unten im Ausblickbereich bewässert wird.

Ganz außen sind nun beidseits am Wannengrund noch zusätzlich zwei Ablauflöcher 242' vorgesehen, durch die überschüssiges Regenwasser nach unten ablaufen kann, wobei durch eine entsprechende Formgebung des Wannenbodens erreicht ist, daß das ablaufende Wasser vom Fahrwind nach außen abgelenkt wird.

Der Vordachboden ist auf der Vorderseite der Wanne 240 in der Fahrzeugmitte so geformt, daß der Fahrwind im Höhenbereich der Wanne nach außen abgelenkt wird (siehe – Andeutung in Fig. 2), so daß Mücken und dgl. vom Fahrwind nach außen abgelenkt bzw. von der Windschutzscheibe ferngehalten werden.

Zwecks Versteifung des Vordachbodens sind beidseits desselben Rippen 259 von den vorderen Dachstützen aus zum Vordachboden hochgezogen.

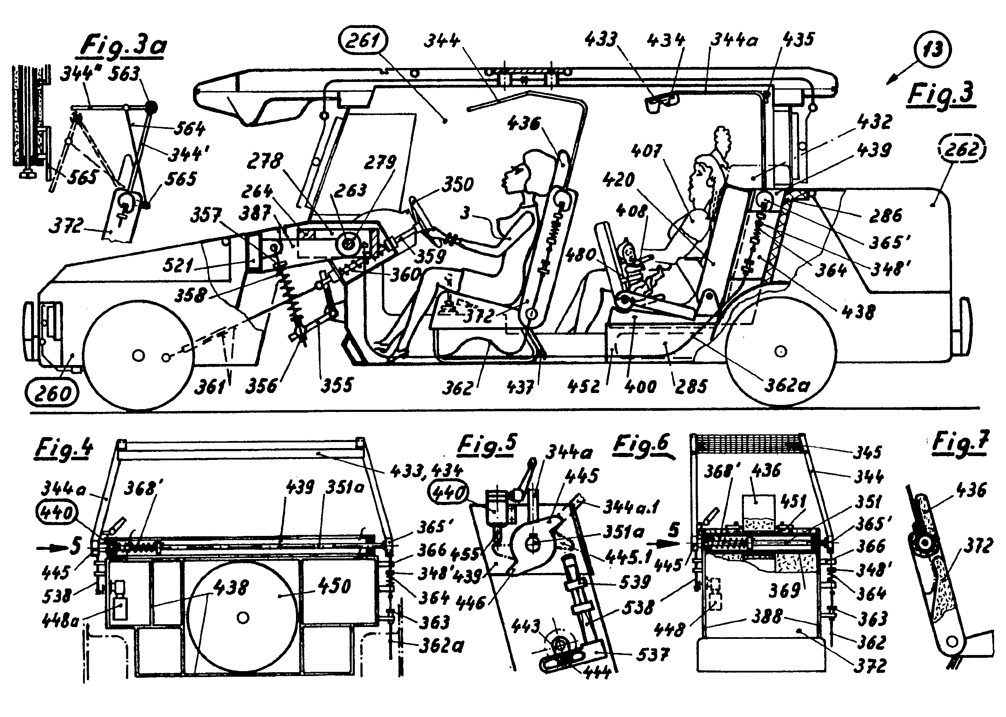

Die Lenkeinrichtung 350, 359, 361 mit einer das Lenkrad 350 in eine hintere Anschlag-Stellung drängenden Druckfeder 360, sowie mit einer das Lenkrad beim Abschwenken des Fahrzeugvorderteiles über einen Winkelhebel 355 in eine vordere Anschlagstellung drängenden Gegenfeder 358 ist in der Beschreibung zu Fig. 3 erläutert.

Fig. 2 zeigt einen SiPKW 13 in Draufsicht.

Die hinteren Dachstützen 527 sind hier zwecks Unterbringung des hinteren Schutzbügels für die Fondinsassen und damit die Heckhaube für den Antriebsraum möglichst groß ausgebildet sein kann, nach innen verlegt, so daß eine um die Schwenkachse ihres Wischbügels gewölbte Heckscheibe etwas schmäler gehalten ist wie größtenteils üblich. Um diesen Nachteil auszugleichen, sind beidseits Heckseitenfenster 525 um die hinteren Ecken des Fahrzeuginnenraumes herum bis zu den hinteren Dachstützen nach innen gezogen, wodurch sich der Vorteil ergibt, daß sich der Blickwinkel beim Zurückschauen vor dem Öffnen einer Türe nach innen vergrößert.

Fig. 3 zeigt einen SiPKW 13 mit einem Lenkrad 350, dessen Widerstandskraft bei einem Aufprall durch das Abschwenken des Fahrzeugvorderteiles mittels einer Gegenfeder 358 zunehmend verringert wird. Außerdem ist hier auch noch ein hinterer Schutzbügel (siehe Fig. 4) und ein vorderer Schutzbügel für eine Fahrerin 3 (siehe Fig. 6), der spiegelbildlich zu einem beifahrerseitigen Schutzbügel ausgebildet ist, als zusätzliche Schutzeinrichtung vorgesehen.

Ein über seine Lenksäule 359 axial verschiebbar gelagertes Lenkrad wird in dargestellter Normallage des Vorderteiles durch eine Druckfeder 360 in einer hinteren Anschlagstellung festgehalten, wobei eine als Druckfeder ausgebildete Gegenfeder 358 über einen schwenkbar an der vorderen Stirnseite des Hinterteiles gelagerten Winkelhebel 355 hier nur eine geringe Gegenkraft erzeugt, welche bestrebt ist, das Lenkrad von der Fahrerin wegzuziehen.

Bei einem schweren Aufprall (siehe Fig. 15) erhöht sich die Druckkraft der Gegenfeder entsprechend dem hier ganz nach unten abgeschwenkten Vorderteil soweit, daß die Kraft, mit der die Gegenfeder das Lenkrad über den Winkelhebel nach vorne zieht, mindestens so groß oder größer ist, wie die Kraft, mit der die Druckfeder 360 bestrebt ist, das Lenkrad wieder in Normallage bzw. in die hintere Anschlagstellung zurückzudrängen.

Durch die Gegenfeder wird also die Nachgiebigkeit des Lenkrades beim Abschwenken des Vorderteiles zunehmend erleichtert bzw. dessen Widerstandskraft zunehmend verringert. Außerdem verhindert die Gegenfeder, daß das Lenkrad nach einem schweren Aufprall wieder zurückschnellt, wobei auch bei einem leichteren Aufprall ein Zurückschnellen weitgehend unterbunden ist.

Die Druckfeder 360 ist hier wirksam zwischen der vorderen Abgrenzung des Fahrzeuginnenraumes und einem an der Lenksäule 359 angedrehten Bund untergebracht, was hier lediglich schematisch aufgezeigt ist, um die Wirkungsweise der Druckfeder zum Ausdruck zu bringen.

Die Gegenfeder 358 ist wirksam zwischen dem Vorderteil und einem unteren Hebelarm des schwenkbar an der vorderen Stirnseite des Hinterteiles gelagerten, beidarmig wirkenden Winkelhebels 355 angebracht, wobei ein oberer Hebelarm des Winkelhebels an der Lenksäule angelenkt ist, was hier ebenfalls nur schematisch aufgezeigt ist. Dabei ist die Gegenfeder mittels einer schwenkbar um eine horizontale Querachse über einen Lagerbock an der Rückseite des oberen Querträgers 321 des Vorderteiles gelagerten Führungsstange 357 am Ausknicken gehindert und stützt sich mit ihrem, dem Winkelhebel zugewandten, unteren Federende gegen eine Stangenführung 356 ab, welche schwenkbar um eine horizontale Querachse am unteren Hebelarm des Winkelhebels 355 gelagert ist und in der das Schwenkende der Führungsstange axial verschiebbar gelagert ist. Dabei ist der Winkelhebel ebenfalls schwenkbar in der vertikalen Längsebenen am Hinterteil gelagert.

Zwischen dem vorderen Ende der Lenksäule 359 und einem üblichen, am Vorderteil vorgesehenen Lenkmechanismus zu den Vorderrädern ist eine in ihrer Länge ausziehbare Gelenkwelle 361 kardanisch gelagert.

Während für die Vordersitze je ein, aus einer Querachse 351 und zwei Armen 344 bestehender Schutzbügel mit einem zwischen den Schwenkenden der Arme aufgespannten Auffangnetz 345 vorgesehen ist (siehe Fig. 6), welches sich über den ganzen Bereich der nach vorne abstehenden Schenkel der Arme erstreckt, weist der hintere, aus einer Querachse 351a und 2 Armen 344a bestehende Schutzbügel für die Fondinsassen an seinem vorderen Schwenkende auch noch eine gepolsterte, zwischen seinen Armen befestigte Querstrebe 433, 434 auf, gegen die sich die Fondinsassen im Falle eines Aufpralles mit den Händen abstützen können. Außerdem ist auch noch ein dehnfähiger, elastischer Querstrang 435 zwischen den Knickstellen seiner Arme aufgespannt, wobei zwischen den nach vorne abstehenden Schenkeln seiner Arme 344a bzw. zwischen der Querstrebe und dem Querstrang ein in Fig. 15 sichtbar dargestelltes Auffangnetz 345a ringsum mit seinen Rändern befestigt ist.

Eine Fondinsassin 407 und eine Fahrerin 3 zeigen in der Darstellung Fig. 15, wie man einen Frontalaufprall durch Eigeninitiative während der nur bei einem SiPKW gebotenen, optimal in die Länge gezogenen Verzögerungsphase 0 - 1 - 2, die hier an der Hinterachse, einem Kind 408 und an der Querachse 263 angedeutet ist, wirkungsvoll abschwächt, bevor man letztendlich mit dem Kopf in ein Auffangnetz 345a bzw. 345 geschleudert und mit der Brust gegen die gepolsterte Querstrebe bzw. gegen das Auffangnetz eines vorderen Schutzbügels angedrückt wird. Dabei ist das Auffangnetz 345 eines vorderen Schutzbügels zweckmäßigerweise im Kopfbereich nachgiebiger ausgebildet wie im Brustbereich.

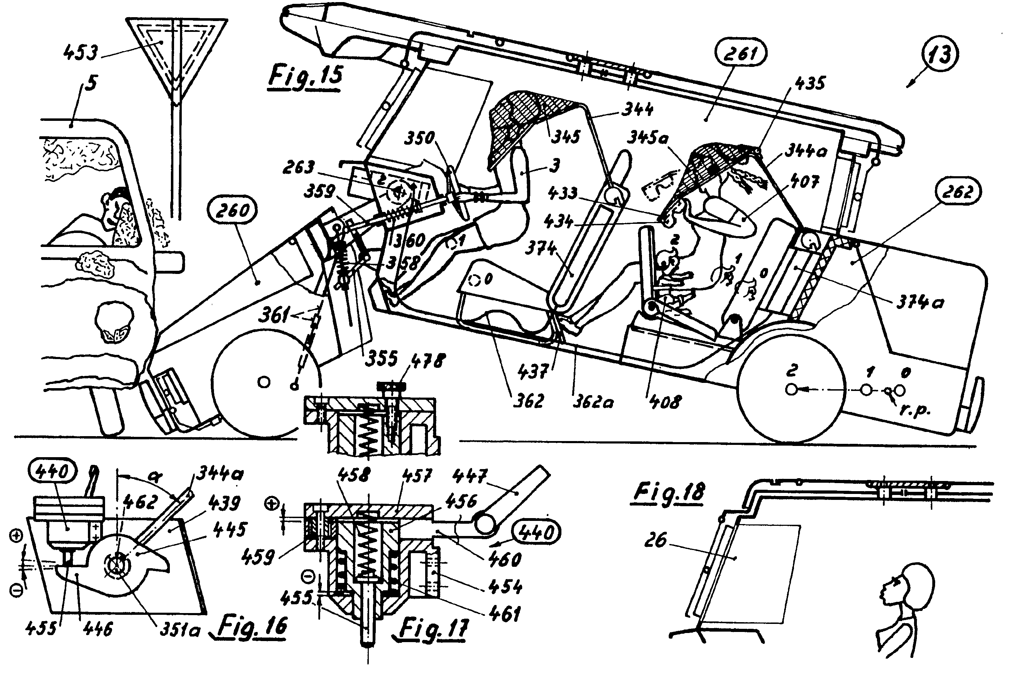

Für ein Kind 408 ist ein aufklappbarer Kindersitz vorgesehen (siehe Fig. 8), der im zusammengeklappten Zustand einen der drei in Fig. 12 dargestellten Rücksitze bildet. Dabei ist ein für das Kind vorgesehener Haltegurt 480 weder bei einem frontseitigen, noch bei einem heckseitigen Aufprall einer der Massenträgheit des Kindes und der Aufprallwucht entsprechenden Zugbelastung ausgesetzt, die bei üblichen Sicherheitsgurten durch das einseitige Zurückhalten des Oberkörpers zu einem Abknicken des Kopfes führt.

Die Kindersitze, deren Lehnen auf der Vorderseite des SiPKW's angeordnet sind, sind jeweils in Gegenfahrrichtung hochschwenkbar in Sitzwannen 400 gelagert, wobei die Sitzwannen auf einem üblichen Sockel 452 befestigt oder verschiebbar und arretierbar zum Sockel gelagert sind, so daß sie unter eine Rücksitzlehne 420 eingeschoben werden können.

Unter dem nach oben hin und ringsherum abgeschlossenen Sockel ist im Hohlraum desselben ein Treibstofftank 285 untergebracht. Zwischen der Rücksitzlehne 420 und einer Trennwand 286 zum heckseitig vorgesehenen Antriebsraum 262 mit Motor, Getriebe usw. ist ein Regal 438 vorgesehen, in dem auch ein Reserverad 450 untergebracht ist (siehe Fig. 4).

Über dem Regal ist etwa in Nackenhöhe einer mittelgroßen Person der hintere Schutzbügel in einem Gehäuse 439 gelagert (siehe Fig. 4), während die vorderen Schutzbügel etwa in derselben Höhe in einem die Vordersitzlehne 372 durchdringenden Rohr 369 gelagert sind (siehe Fig. 6 u.7 bzw. 12a bei einer Beifahrerlehne). Für das Regal 438 vorgesehene Schiebetüren oder dgl. sind in der Darstellung Fig. 4 nicht berücksichtigt.

Das Auslösen der Schutzbügel erfolgt jeweils über übliche Bowdenzüge 362 bzw. 362a, wobei die Bowdenzüge jeweils mit ihrem einen Ende an einem Lagerauge 279 des Vorderteiles und mit ihrem anderen Ende an einem unteren Ende eines stangenförmig ausgebildeten, axial verschiebbar in Führungslagern 366 gelagerten Auslösers 348' angelenkt sind (siehe Fig. 4 u.6).

Dabei sind die Auslöser der vorderen Schutzbügel jeweils auf der Außenseite einer Vordersitzlehne 372 gelagert, während der Auslöser des hinteren Schutzbügels hier fahrerseitig auf der Außenseite des Regals 438 oder im Fahrzeuginnenraum gelagert ist. Beim Abschwenken des Vorderteiles werden nun die Auslöser über die Bowdenzüge jeweils entgegen der Krafteinwirkung einer auf den Auslöser einwirkenden Druckfeder 364 nach unten bzw. mit ihrem oberen Stangenende aus einer axial verlaufenden Längsnut einer am Ende einer Querachse 351 bzw. 351a der Schutzbügel fest aufgebrachten Rasterscheibe 365' herausgezogen, so daß der zwischen dem Auslöser und der Rasterscheibe gebildete Eingriff nach einem bestimmten Abschwenkwinkel des Vorderteiles gelöst wird.

Mittels einer am Auslöser- seitigen Ende des Bowdenzuges vorgesehenen, üblichen Axialverschraubung 363 kann der Auslösezeitpunkt r.p. (= release point) des Schutzbügels (siehe Fig. 15) bzw. der Zeitpunkt, wo der Eingriff beim Abschwenken des Vorderteiles gelöst wird, eingestellt werden.

Durch die Umfangskraft einer gleichzeitig als Druckfeder ausgebildeten gewundenen Biegefeder 368', welche jeweils koaxial zur Querachse eines Schutzbügels angebracht ist, wird dann der Schutzbügel von dargestellter Bereitschafts- Schwenkstellung in seine Gebrauchs- Schwenkstellung abgeschwenkt (siehe Fig. 15).

Nach dem Zurückschwenken des Vorderteiles bzw. nach dem Wiederhochschwenken des Schutzbügels wird dann der Auslöser durch die Druckfeder 364, welche hier zwischen einem unteren Führungslager 366 und einem am Auslöser vorgesehenen Bund wirksam angeordnet ist, wieder in die Längsnut der Rasterscheibe 365' eingeschoben, so daß der Schutzbügel in seiner Bereitschafts- Schwenkstellung festgehalten ist.

Als Anschlag für den Bügel in seiner Bereitschaftslage ist an seiner Rasterscheibe eine Anschlagnase angebracht, welche die beim Hochschwenken des Bügels wirksam werdende Flanke der Längsnut nach außen hin verlängert, so daß durch die verlängerte Flanke ein sicherer Anschlag gegen das obere Stangenende des Auslösers gebildet ist.

Die beiden Führungslager 366 für den Auslöser, sowie die Axialverschraubung 363 für den jeweiligen Bowdenzug sind bei einem vorderen Schutzbügel an einer äußeren, seitlich der Vordersitzlehne angebrachten Strebe 388 (siehe Fig. 6) und bei einem hinteren Schutzbügel auf der Außenseite des Regals 438 (siehe Fig. 4) oder im Fahrzeuginnenraum befestigt.

Durch eine Abdeckung 374 bzw. 374a ist der ganze Auslösemechanismus bzw. die Einrasteinrichtung vor Verschmutzung geschützt (siehe Fig. 15).

Für das Wiederhochschwenken der Schutzbügel ist jeweils ein Getriebemotor 448 bzw. 448a vorgesehen (siehe Fig. 4 u.6), auf dessen Antriebswelle eine Kurbel 443 mit einem parallel zur Querachse eines Bügels nach außen abstehenden Kurbelbolzen 444 fest aufgebracht ist (siehe Fig. 5).

Über einen üblichen Kurbeltrieb 443, 444, 537, 538 mit einer axial verschiebbar in Führungslagern 539 gelagerten Druckstange 538 wird nun beim Wiederhochschwenken eines Bügels eine am entgegengesetzten Ende der Rasterscheibe 365' fest auf einer Querachse eines Bügels aufgebrachte Nockenscheibe 445 von einer Schwenkstellung 445.1 in eine Schwenkstellung 445 hochgeschwenkt, wobei das Hochschwenken über die Druckstange 538 bewirkt wird, welche durch jeweils eine Umdrehung der Kurbel 443 in eine Auf- und Abwärtsbewegung versetzt wird und beim Aufwärtshub gegen eine an der Nockenscheibe angeformte Nocke 445 einwirkt.

Somit wird der Schutzbügel mit seinem an der Nockenscheibe befestigten Arm 344a (bzw. 344 in Bezug auf einen vorderen Schutzbügel) von einer Gebrauchs-Schwenkstellung 344a.1 wieder in seine Bereitschafts-Schwenkstellung 344a hochgeschwenkt.

Die Kurbel 443 wird nach jeweils einer Umdrehung über einen, die Stromzufuhr zum Getriebemotor unterbrechenden Mikroschalter automatisch zum Stillstand gebracht, wobei die Inbetriebsetzung der Getriebemotoren vom Fahrersitz aus betätigbar ist.

Der Getriebemotor 448a für einen hinteren Bügel ist am Regal 438 (siehe Fig. 4) und der Getriebemotor 448 für einen vorderen Schutzbügel ist jeweils an einer inneren Strebe 388 der Vordersitzlehne 372 (siehe Fig. 6) festgeflanscht, wobei der etwas kleiner dimensionierte Getriebemotor für einen vorderen Bügel innerhalb der Lehne untergebracht ist.

Für die Schwenkbegrenzung der Schutzbügel in ihrer Gebrauchs-Schwenkstellung 344a.1 (bzw. 344.1 in Bezug auf einen vorderen Bügel) ist jeweils eine in Fig. 17 detailliert dargestellte Anschlageinrichtung 440 wirksam angeordnet, wobei die Anschlageinrichtung jeweils über einen gegen Federdruck axial verschiebbar gelagerten Anschlagbolzen 455 gegen eine an der Nockenscheibe 445 angeformte Anschlagnase 446 einwirkt.

Die Anschlageinrichtung ist jeweils seitlich am Lagergehäuse 439 (siehe Fig. 4) bzw. an einer inneren Strebe 388 einer Vordersitzlehne 372 (siehe Fig. 6) angeflanscht.

Für die Abdeckung der Anschlageinrichtung, sowie der Einrichtung zum Wiederhochschwenken der Schutzbügel ist jeweils eine Abdeckung 374' (siehe Fig. 19) vorgesehen.

Während für die Vordersitze jeweils eine nach hinten in die Lehne einschwenkbare Kopfstütze 436 vorgesehen ist (s.F.7 bzw. 12a), sind die hinteren Kopfstützen 432 abnehmbar bzw. lediglich über einen üblichen Klettverschluß an der Oberseite der Rücksitzlehne 420 befestigt, wobei sie sich nach hinten gegen die Heckscheibe abstützen.

Die beiden zueinander fluchtenden Achsbolzen 263 eines SiPKW's auf den Außenseiten desselben (siehe Fig. 2) sind zweckmäßigerweise dicht unterhalb der Windschutzscheibe im Bereich eines an üblicher Stelle angeordneten Armaturenbrettes, möglichst weit hinten gelagert, so daß bei einem Aufprall ein entsprechend günstiger Hebelarm gegenüber der vorderen Stirnseite des Fahrzeugvorderteiles beim Abschwenken desselben gebildet ist.

Fig. 3a zeigt einen vorderen Schutzbügel, dessen Arme zweiteilig ausgebildet sind.

Dabei ist zwischen den nach oben von der Querachse des Bügels abstehenden Armschenkeln 344' und den nach vorne abstehenden Armschenkeln 344" eine horizontal angeordnete, gut abgepolsterte Querachse 563 angebracht, an deren äußeren Enden die nach vorne abstehenden Armschenkel befestigt sind und über welche dieselben schwenkbar an den oberen Schwenkenden der nach oben abstehenden Armschenkel gelagert sind.

Zusätzlich sind hinter der Querachse des Schutzbügels an den Außenseiten der Lehne zwei horizontal nach außen abstehende Achsbolzen 565 vorgesehen, die bei einem vorderen Bügel als Stange von kreisrundem Querschnitt ausgebildet und über zwei Stege am Rohr 369 für die Lagerung des Schutzbügels (siehe Fig. 6) befestigt sind, wo sie gleichzeitig als Handgriff für die Fondinsassen dienen, während sie bei einem hinteren Schutzbügel als Bundbolzen ausgebildet an den Lagerflanschen des Lagergehäuses 439 (siehe Fig. 4) angeflanscht sind.

Zwischen den Achsbolzen 565 (bzw. 565a für einen hinteren Schutzbügel) und den nach vorne abstehenden Armschenkeln 344" (bzw. 344a") sind nun beidseits Zugstangen 564 angelenkt, wobei die Zugstangen jeweils über übliche Gelenkköpfe mit ihrem unteren Ende schwenkbar an einem Achsbolzen und mit ihrem oberen Ende schwenkbar um eine horizontale Querachse (Zapfen) an einem nach vorne abstehenden Armschenkel gelagert sind.

Entsprechend einem geeigneten Abstand zwischen der horizontalen Querachse 563 für die Schwenklagerung der nach vorne abstehenden Armschenkel und den Anlenkpunkten der Zugstangen an denselben werden dann die nach vorne abstehenden Armschenkel beim Abschwenken des Schutzbügels bzw. der nach oben abstehenden Armschenkel (344' bzw. 344a') mehr oder weniger gegen die Lehne angeschwenkt (siehe strichlierte Darstellung).

Das zwischen den nach vorne abstehenden Armschenkeln aufgespannte Auffangnetz 345 bzw. 345a (vergleiche Fig. 15) ist dann auch an der Querachse 563 (bzw. 563a) mit seinem hinteren Rand befestigt.

Erfindungsgemäß ist das mit den Zugstangen natürlich nicht, aber es hat den Vorteil, daß das Dach etwas niedriger gehalten werden kann, was aber wiederum den Nachteil hat, daß man sich beim Einsteigen in einen SiPKW bzw. bei einem Frontalaufprall leichter den Kopf am Türrahmen bzw. am Dachboden anschlägt.

Hier muß also Vor- und Nachteil gegeneinander abgewogen werden.

Fig. 4 zeigt einen hinteren Schutzbügel 351a, 344a mit einer Querachse 351a, an deren Enden fahrerseitig eine Rasterscheibe 365' und beifahrerseitig eine Nockenscheibe 445 fest aufgebracht ist. An den beiden Scheiben sind radial davon abstehend die beiden Arme 344a des Bügels befestigt, wobei die Arme in der Bereitschafts- Schwenkstellung des Bügels (siehe Fig. 3) vertikal nach oben abstehen, wo sie dicht unter dem Dachboden nach vorne abgewinkelt sind. Dabei sind die vorderen Schwenkenden der Arme entsprechend ihrer günstigsten Neigung in der Gebrauchs-Schwenkstellung (siehe Fig. 15) leicht nach unten abgewinkelt.

Die Querachse ist hier schwenkbar und axial verschiebbar in einem Lagergehäuse 439 gelagert und wird durch eine koaxial angeordnete, als Druckfeder ausgebildete gewundene Biegefeder 368', die gleichzeitig in Abschwenkrichtung auf die Querachse einwirkt, mit ihrer Nockenscheibe gegen einen beifahrerseitigen Lagerflansch des Lagergehäuses angedrückt bzw. in dargestellter Axiallage festgehalten, in welcher der Bügel durch einen fahrerseitig angeordneten Auslöser 348' über seine Rasterscheibe 365' am Abschwenken in seine Gebrauchslage gehindert ist.

Um nun den Bügel auch von Hand abschwenken zu können, muß derselbe entgegen der axialen Krafteinwirkung der Feder 368' zur Beifahrerseite hin (nach links) verschoben werden, wodurch der Eingriff zwischen dem Auslöser und der Rasterscheibe gelöst wird. Dabei wird die Rasterscheibe durch die Feder mit ihrer äußeren Stirnseite gegen das obere Stangenende des Auslösers angedrückt, so daß also der Bügel wiederum durch die Feder in einer entsprechenden Axialstellung festgehalten ist, in der dann jedoch eine auf der Beifahrerseite angebrachte Druckstange 538 (siehe Fig. 5) in eine zur Nocke 445 der Nockenscheibe 445 axial versetzte Lage gebracht ist, so daß ein Hochschwenken des Bügels durch den Getriebemotor verhindert ist.

In der beschriebenen Axialstellung des Bügels ist jedoch weiterhin ein Anschlag durch eine Anschlageinrichtung 440 bzw. durch deren Anschlagbolzen 455 gegen eine Anschlagnase 446 der Nockenscheibe gewährleistet.

Wird nun der Schutzbügel etwas weiter zur Beifahrerseite hin verschoben, bis durch den fahrerseitigen Lagerflansch des Lagergehäuses 439 ein Anschlag gegen die Rasterscheibe 365' des Bügels gebildet ist, dann ist auch der Anschlagbolzen 455 in eine zur Anschlagnase 446 der Nockenscheibe axial versetzte Lage gebracht, so daß der Bügel über seine Gebrauchslage hinaus abschwenkbar ist, wo er dann auf dem Rücksitz oder auf der umgeklappten Rücksitzlehne gelagerte Gepäckstücke und dgl. festhält bzw. verhindert, daß dieselben bei einem Frontalaufprall nach vorne fliegen (gegen den Hinterkopf der hübschen Fahrerinnen, -s. Fig. 3,19) In der äußersten, soeben geschilderten Axialstellung ist dann der Bügel über die Anschlagnase automatisch durch den Anschlagbolzen 455 festgehalten, indem der Bolzen hier einen axial wirkenden Anschlag gegen die Anschlagnase bildet, sodaß der SiPKW sich mehr und mehr zu einem Right Infallible Auto Mobile entwickelt, das seinesgleichen sucht und aber nicht findet.

Fig. 5 zeigt gemäß Ansicht 5 zu Fig. 4 eine übliche Einrichtung für das Wiederhochschwenken eines hinteren Schutzbügels, die im Prinzip genau gleich auch für einen vorderen Schutzbügel in Anwendung gebracht ist.

Dasselbe trifft auch für eine in Fig. 17 dargestellte Anschlageinrichtung 440 zu.

Der für das Wiederhochschwenken eines Bügels dargestellte Kurbeltrieb 443, 444, 537, 538 mit einer in Führungslagern 539 axial verschiebbar gelagerten Druckstange 538 besteht aus einer üblichen, mit einem Kurbelbolzen 444 versehenen Kurbel 443, deren Kurbelbolzen verschiebbar in einer Längsnut einer Kulisse 537 geführt ist, so daß die mit einer Druckstange 538 ausgestattete und über die Stange axial verschiebbar gelagerte Kulisse beim Antrieb der Kurbel über einen Getriebemotor 448 bzw. 448a in eine Hin- und Herbewegung versetzt wird. Dabei ist die Kulisse in horizontaler Querrichtung und die Druckstange in vertikaler Längsrichtung zu einem Regal 438 (siehe Fig. 4) bzw. zu einer Vordersitzlehne 372 (siehe Fig. 6) angeordnet, so daß also die Führungsnut bzw. der Führungsschlitz der Kulisse vertikal zur Längsachse der Druckstange ausgerichtet ist.

Fig. 6 zeigt einen fahrerseitigen Vordersitz mit einem vorderen Schutzbügel 351, 344, zwischen dessen Armen 344 ein Auffangnetz 345 im Bereich seiner nach vorne abgewinkelten Armschenkel aufgespannt ist (siehe Fig. 15).

Die Querachse 351 des Schutzbügels ist hier in einem, die Vordersitzlehne 372 etwa im Nackenbereich einer mittelgroßen Person durchdringenden Rohr 369 gelagert, welches an den Enden über Lagerflansche mit seitlich der Lehne angeordneten Streben 388 in feste Verbindung gebracht ist, wobei die Streben ihrerseits in feste Verbindung zur Schwenkwinkel- Verstelleinrichtung der Lehne gebracht sind.

Die Lagerung des vorderen Bügels entspricht also der Lagerung eines hinteren Bügels, wobei hier wiederum eine als Druckfeder ausgebildete, gewundene Biegefeder 368' vorgesehen ist, die sowohl in Abschwenkrichtung auf die Querachse einwirkt, als auch in axialer Richtung, wo sie hier eine Nockenscheibe 445 über einen auf der Querachse angebrachten Bund gegen einen inneren Lagerflansch des Rohres 369 andrückt und wobei sie sich mit ihrem entgegengesetzten Federende gegen diesen Lagerflansch abstützt. Um nun den Bügel von Hand abschwenken zu können, muß derselbe nach innen verschoben werden, bis eine auf der Außenseite der Querachse befestigte Rasterscheibe 365' gegen den äußeren Lagerflansch der Querachse bzw. des Rohres zum Anliegen gebracht ist, so daß der Auslöser 348' außer Eingriff zur Rasterscheibe gebracht ist.

Im abgeschwenkten Zustand wird dann die Rasterscheibe mit ihrer äußeren Stirnseite gegen das obere Stangenende des Auslösers 348' angedrückt, wobei dann der Schutzbügel in dieser Axialstellung mit seiner Nockenscheibe 445 in eine zur Druckstange 538 axial versetzte Lage gebracht ist, sodaß eine Wirkverbindung zwischen der Druckstange und dem Bügel unterbunden bzw. ein Hochschwenken des Bügels über den Getriebemotor 448 verunmöglicht ist.

Die Anschlageinrichtung 440 (siehe Fig. 5) hingegen ist auch in dieser Axialstellung des Bügels noch wirksam zur Anschlagnase 446 der Nockenscheibe angeordnet.

Eine Kopfstütze 436 ist hier abschwenkbar nach hinten am Rohr 369 gelagert, wobei seitlich der Kopfstütze übliche, kpl. Riegel 451 am Rohr befestigt sind, deren axial verschiebbare Riegel in den Endstellungen der Kopfstütze in entsprechend angeordnete, an der Stütze befestigte Ösen einschiebbar sind.

Fig. 7 zeigt eine Fahrersitzlehne 372 mit einer nach hinten in die Lehne einschwenkbar um das Rohr 369 (siehe Fig. 6) gelagerten Kopfstütze 436.

Der Kern der Kopfstütze entspricht in seiner Dicke der Dicke der Lehne und weist auf seiner Vorderseite ein tangential vom Kern abstehendes Kopfteil auf, welches in seiner Dicke maximal der halben Dicke der Lehne entspricht.

Dabei ist an der Lehne eine der Breite der Kopfstütze entsprechende Aussparung vorgesehen, die auf der Rückseite der Lehne entsprechend der Länge des Kopfteiles nach unten gezogen ist und im unteren Teil der Dicke des Kopfteiles entspricht, so daß die Kopfstütze außen bündig in die Aussparung einschwenkbar ist.

Fig. 8 bis 14 zeigen einen als Kindersitz ausgebildeten Rücksitz (siehe Fig. 12), der im aufgeklappten Zustand als Kindersitz dient und der genau gleich auch für einen Beifahrer vorgesehen ist. Ein Kind 408 sitzt hier im Kindersitz mit dem Rücken in Fahrrichtung, wobei ein nach vorne hochgeklappter Rücksitz 390, 392 mit einer auf der Unterseite seiner Sitzplatte 392 befestigten Kinderlehne 391 als Lehne dient, während eine in Fahrrichtung sitzende Fondinsassin 407 auf einem nach unten geklappten Sitz mit einem auf der Sitzplatte befestigten Sitzpolster 390 hockt. Der Rücksitz ist schwenkbar über seine mit zwei Lagerflanschen 393 u. 393a versehene Sitzplatte 392 um eine obere Querachse 395 eines aus zwei Stützen 394 u. 394a und zwei Querachsen 395 u. 396 bestehenden Stützbügels gelagert (siehe Fig. 11), während der Stützbügel seinerseits schwenkbar um seine untere Querachse 396 in einer Sitzwanne 400 bzw. 400' gelagert ist. Dabei sind für die Schwenklagerung des Stützbügels bzw. seiner unteren Querachse 396 übliche, in der Sitzwanne befestigte Lager 398 vorgesehen (siehe Fig. 11).

Während eine Sitzwanne 400' (siehe Fig. 8) verschiebbar und arretierbar auf einem im Fahrzeuginnenraum des SiPKW's vorgesehenen Sockel 452 gelagert ist und unter eine Rücksitzlehne 420 eingeschoben werden kann, ist eine Sitzwanne 400 (siehe Fig. 9) fest auf dem Sockel befestigt.

Die Schwenkbarkeit des, vom Kind aus gesehen, hinteren Stützbügels um seine untere Querachse 396 ist durch eine an der Sitzwanne angeformte Anschlagfläche 429 (siehe Fig. 9) begrenzt und die Schwenkbarkeit des Rücksitzes 390, 392 um die obere Querachse 395 des hinteren Stützbügels ist durch eine an der Vorderseite der Sitzplatte 392 angeformte Anschlagfläche 428 (siehe Fig. 12) begrenzt, wobei die Anschlagfläche 428 beim Hochklappen des Rücksitzes gegen die Stützen des Stützbügels zum Anliegen gebracht wird. Zweckmäßigerweise ist die Sitzplatte 392 im Bereich der oberen Querachse 395 des Stützbügels um dieselbe herumgezogen.

Die an der Sitzwanne vorgesehene, gegen die Stützen des hinteren Stützbügels gerichtete Anschlagfläche 429 ist relativ zur unteren Querachse des Stützbügels gesehen so angeordnet, daß die obere Querachse des Bügels gegenüber der unteren Querachse schräg nach vorne in Fahrrichtung geneigt ist, so daß der Stützbügel bei einem heckseitigen Aufprall um seine untere Querachse in Gegenfahrrichtung hochschwenkbar ist.

Um nun den Rücksitz in seiner Gebrauchslage als Lehne festzuhalten, ist eine Stütze 394 des Stützbügels im Gegensatz zur anderen Stütze 394a, die auf den Querachsen verstiftet ist, axial verschiebbar zu den Querachsen gelagert und durch eine Paßfeder gegenüber der unteren Querachse am Verdrehen gehindert, so daß die Formstabilität des Stützbügels gewährleistet ist (s.Fig. 10 u.11). Durch eine Druckfeder 399, die wirksam zwischen einem auf der unteren Querachse aufgebrachten Stellring 412 und der Stütze 394 angeordnet ist (siehe Fig. 11), wird die Stütze hier nach außen gegen einen mit einer Radialnut 401 versehenen Lagerflansch 393 der Sitzplatte 392 angedrückt, wobei die Radialnut so angebracht ist, daß ein axial nach außen von der Stütze abstehender Arretierbolzen 397 in die Radialnut einrastbar ist, sobald der Rücksitz in seine Gebrauchslage als Lehne hochgeklappt ist (siehe Fig. 10).

Durch die in Umfangsrichtung zur oberen Querachse 395 des Stützbügels verlaufende Radialnut 401 im Lagerflansch 393 ist eine geringe Schwenkbarkeit des als Lehne umfunktionierten Rücksitzes in Gegenfahrrichtung ermöglicht (siehe Fig. 8).

Dabei ist in der Anschlagstellung des Rücksitzes etwas Spiel zwischen der Radialnut und dem Arretierbolzen 397 vorgesehen, damit der Arretierbolzen hier keinen Anschlag bildet.

Für die axiale Lagefixierung des Rücksitzes in der Sitzwanne ist hier ein Stellring 410 vorgesehen (siehe Fig. 10), der auf der anderen Seite der Arretiereinrichtung am Ende der oberen Querachse 395 befestigt ist und einen Anschlag gegen die Außenseite des Lagerflansches 393a der Sitzplatte 392 bildet, während die Stütze 394a einen Anschlag gegen die Innenseite des Lagerflansches bildet.

Dabei ist die Stütze 394a, die auf den Querachsen des Stützbügels verstiftet ist, über die untere Querachse 396 mit etwas Spiel zwischen den Seitenwänden der Sitzwanne eingepaßt.

Unter dem, aus einem Sitzpolster 390 und einer Sitzplatte 392 bestehenden Rücksitz mit einer auf der Unterseite der Sitzplatte befestigten, gepolsterten Kinderlehne 391 ist nun ein schwenkbar um die obere Querachse 395 des hinteren Stützbügels gelagerter Klappsitz vorgesehen (siehe Fig. 9).

Der Klappsitz ist hier durch eine Sitzplatte 427 gebildet, auf der ein Sitzpolster 406 für ein Kind befestigt ist.

Dabei sind für die Schwenklagerung des Klappsitzes um die Querachse 395 beidseits Lagerlaschen 413 an der Sitzplatte befestigt. Ein schwenkbar an der Unterseite der Sitzplatte 427 gelagerter Stützbügel, der aus zwei Stützen 402 und zwei Querachsen 403 u. 404 besteht, bildet hier einen Anschlag für den Klappsitz in dessen Gebrauchslage, wobei sich der Klappsitz über die untere Querachse 404 des Stützbügels gegen zwei in der Sitzwanne angebrachte Rasten 405 abstützt, in welche die untere Querachse eingesetzt ist.

Die beiden Rasten sind so in der Sitzwanne angebracht, daß der am Klappsitz gelagerte vordere Stützbügel etwa die gleiche Schräglage aufweist wie der in der Sitzwanne gelagerte hintere Stützbügel des Kindersitzes.

Für die Schwenklagerung des vorderen Stützbügels sind auf der Unterseite der Sitzplatte 427 zwei Lageraugen 409 angebracht, in denen die obere Querachse 403 des Bügels schwenkbar gelagert ist (siehe Fig. 11), wobei durch die Lageraugen mit etwas seitlichem Spiel auch ein Anschlag gegen die Stützen 402 des Stützbügels gebildet ist.

Zwei auf der oberen Querachse 395 des hinteren Stützbügels aufgebrachte Stellringe 411 halten den Klappsitz, der wie die Kinderlehne 391 etwas schmäler ausgebildet ist wie der Rücksitz, in seiner axialen Lage fest.

Wird nun der aufgeklappte Kindersitz über den oberen Scheitelpunkt seiner durch die Stützbügel bestimmten Schwenkbewegung hinaus gegen die Rücksitzlehne 420 angeschwenkt, dann schlagen die Stützen 402 des vorderen Stützbügels gegen eine in der Sitzwanne vorgesehene Kante 414 an (siehe Fig. 8), so daß also durch die Kante die Schwenkbarkeit des Kindersitzes begrenzt ist.

Durch eine entsprechende Schräglage der in den Rasten 405 vorgesehenen Einschnitte 431 (siehe Fig. 12) für die untere Querachse 404 des vorderen Stützbügels kann nun erreicht werden, daß die Querachse bei einer bestimmten Krafteinwirkung der Stützen gegen die Kante aus den Rasten herausgehoben wird, wobei die erforderliche Kraft durch die Schräglage der hinteren Anlagefläche gegen die Querachse bestimmbar ist.

Der Kindersitz schlägt dann nicht hart an, sondern wird entsprechend dem Gewicht des Kindes mehr oder weniger abgebremst, bevor der vordere Stützbügel aus den Rasten springt.

Damit beim Abschwenken des Kindersitzes in Gegenfahrrichtung die Gefahr ausgeschlossen ist, daß sich ein Fondinsasse die Finger zwischen einer vorderen Stütze 402 und der Kante 414 an der Sitzwanne einklemmt, sind seitlich jeder einzelnen Stütze Laschen an der Sitzwanne befestigt, die bis knapp zur vorderen Stütze reichen oder dieselbe etwas überlappen und zwischen denen hindurch die Stütze einschwenkbar ist. Der Abstand der Laschen, die hier nicht dargestellt sind, ist entsprechend der geringen Dicke einer Stütze so gering, daß nicht einmal ein Kinderfinger dazwischen paßt.

Um zu verhindern, daß der Klappsitz nach unten absackt, wenn der vordere Stützbügel aus den Rasten springt, sind die Lagerlaschen 413 (siehe Fig. 9) so an der Sitzplatte 427 befestigt, daß der Klappsitz nur geringfügig weiter nach unten abschwenkbar ist, bevor die Lagerlaschen gegen die Anschlagfläche 428 der Sitzplatte 392 (siehe Fig. 12) anschlagen.

Dadurch ist auch verhindert, daß sich ein Kind die Finger verletzen kann, falls der vordere Bügel aus irgend einem Grund aus den Rasten springen sollte oder nicht richtig eingerastet ist.

In der Gebrauchslage des Kindersitzes als Rücksitz (siehe Fig. 12) sorgen in der Sitzwanne angebrachte Auflageklötze 426 beidseits der Kinderlehne 391 dafür, daß die Belastung der Sitzplatte 392 durch eine Fondinsassin 407 nicht über die Kinderlehne, sondern über die Auflageklötze gegen die Sitzwanne gerichtet ist.

Dabei ist der Boden der Sitzwanne im vorderen Bereich des Kindersitzes (vom Kind aus gesehen) hinter den Rasten 405 bis zur Kinderlehne hochgezogen (siehe Kante 414 in Fig. 8) und verläuft dann entsprechend der Schräglage des Rücksitzes wieder schräg nach unten (so, als würde der Boden eine Auflagefläche für die Kinderlehne bilden), wo er dann um den Rücksitz herum wieder nach oben gezogen ist und eine Anlagefläche gegen die hintere Stirnseite des Rücksitzes bildet.

Im Bereich der Füße eines Kindes ist der Boden jedoch flach gehalten, so daß also die dargestellte Formgebung des Bodens in der Mitte der Sitzwanne nach unten abgesetzt ist, was aber hier nicht im Schnitt dargestellt ist.

Auf der Rückseite der Sitzwanne bildet eine vom Boden weg nach oben hochgezogene Wandung den hinteren Abschluß der Sitzwanne, wobei die Wandung im Bereich der oberen Querachse 395 des hinteren Stützbügels wieder nach vorne und um die Querachse kreisbogenförmig herumgezogen ist, wo dann eine Anlagefläche 429 (siehe Fig. 9) für den hinteren Stützbügel den Abschluß der Wandung bildet.

Ein für das Kind 408 vorgesehener Haltegurt 480, der seitlich der Kinderlehne an der Sitzplatte 392 des Rücksitzes befestigt ist, ist unter dem abgeschwenkten Rücksitz in der Sitzwanne untergebracht.

In der Rücksitzlehne 420 sind hier in entsprechenden Aussparungen drei Ausstellkeile 417 untergebracht (siehe Fig. 14), die für grössere Kinder vorgesehen sind und ausschwenkbar nach vorne um eine die Rücksitzlehne in Längsrichtung durchdringende Querachse 416 gelagert sind (siehe Fig. 8).

Dabei dient die Querachse auch zur Schwenklagerung der Rücksitzlehne, indem für die Lagerung der Querachse zwei Lagerböcke 415 vorgesehen sind, die entweder auf der Oberseite der äußeren Sitzwannen 400 befestigt sind (siehe Fig. 9 u.13) oder seitlich im Fahrzeuginnenraum vorgesehen sind, falls eine Sitzwanne 400' bevorzugt wird (siehe Fig. 8).

Durch ein Ablagebrett 418, dessen Unterkante schwenkbar um eine an der Oberseite des Ausstellkeiles 417 befestigte Achse 422 gelagert ist und dessen Oberkante über eine seitlich abstehende Achse 423 schwenkbar und verschiebbar zwischen zwei üblichen Führungsbügeln 419 gelagert ist, ist nun in der Ausstellage des Ausstellkeiles eine horizontale Tischfläche über dem Ausstellkeil gebildet (siehe Fig. 8).

Dabei ist der obere, den Führungsbügeln zugewandte Teil des Ablagebrettes, das ebenso breit ausgebildet ist wie der Ausstellkeil, nach oben in Längsrichtung der Führungsbügel abgewinkelt. Die auf der Unterseite einer Brücke 424 befestigten Führungsbügel sind hier in einer an der Rückseite der Rücksitzlehne vorgesehenen Aussparung untergebracht, wobei die Brücke auf der Innenseite einer an der Lehne angebrachten Rückwand 425 befestigt ist.

Beim Einschwenken des Ausstellkeiles wird nun das Ablagebrett in die zwischen der Rückwand und der Brücke gebildete Aussparung in der Rücksitzlehne hochgeschoben (siehe Fig. 12).

Dabei ist die zwischen der Unterseite der Brücke und den Führungsbügeln gebildete Längsführung für die obere Achse 423 des Ablagebrettes durch entsprechend ausgebildete, an den Führungsbügeln angeformte Sicken 430 (siehe Fig. 8) etwas eingeengt, so daß die Achse 423 beim Hochschieben hinter den Sicken einrastet sobald der Ausstellkeil ganz eingeschwenkt ist.

Das Ablagebrett ist hier über seine entsprechend ausgebildete Unterkante auf der Achse 422 des Ausstellkeiles nur festgeklemmt, so daß es auch "ausgeklippst" werden kann.

Zwischen dem Ausstellkeil und der Rückwand 425 der Rücksitzlehne ist ein üblicher Blasebalg 421 befestigt, der beim Ausschwenken des Keiles Luft ansaugt, die dann beim Einschwenken des Keiles über eine entsprechend dimensionierte Öffnung wieder ausgestoßen werden muß, so daß ein Aufprall gegen den Ausstellkeil entsprechend der am Blasebalg vorgesehenen, evtl. einstellbaren Öffnung mehr oder weniger gedämpft abgefangen wird, bevor ein Kind mit seinem Kindersitz bei einem heckseitigen Aufprall gegen die Rücksitzlehne angeschwenkt wird.

Für Kleinkinder und Säuglinge dürfte ein zwischen dem Kindersitz und der Rücksitzlehne untergebrachtes weiches Kissen allerdings noch mehr Sicherheit bieten.

Fig. 12a zeigt eine entsprechend Fig. 12 ausgebildete Lehne 372 für einen Beifahrer, wobei hier der Schutzbügel in einem die Lehne durchdringenden Rohr gelagert ist. Die Rückstand 425 ist partiell nach innen gezogen, damit das Kopfteil der Kopfstütze 436 außen bündig in die Rückseite der Lehne einschwenkbar ist.

Fig. 15 zeigt einen SiPKW 13 bei einem schweren Aufprall gegen einen herkömmlichen PKW 5, dessen Fahrer bei strömendem Regen das Schild 453 "Vorfahrt beachten" übersehen hat, weil sein PKW kein Vordach über der Windschutzscheibe angebracht hat.

Die kluge und überdies noch hübsche Fahrerin 3 des SiPKW's hat diesen Verstoß gegen die Straßenverkehrsordnung trotz des strömenden Regens augenblicklich erfaßt, weil sie einen SiPKW mit einem Vordach besitzt. Aufgrund des optimalen Ausblickes war sie auch in der Lage, ihr Fahrzeug vor dem Aufprall noch scharf abzubremsen.

Durch den Bremsvorgang wurde die Querachse 263, um welche das Fahrzeugvorderteil schwenkbar zum Fahrzeuginnenraum gelagert ist, um die Vorderräder herum von einer Position 0 in eine Position 1 hochgeschwenkt, wobei die Hinterräder von einer Position 0 in eine Position 1 gegen die Vorderräder hin aufliefen.

Während des Bremsvorganges wurden in einer Position "r.p." der Hinterräder die Schutzbügel der Vordersitze und des Rücksitzes ausgelöst bzw. nach unten in ihre Gebrauchslage abgeschwenkt.

Das in einem Kindersitz gemäß Fig. 8 untergebrachte Kind 408 wurde durch den Bremsvorgang in Fahrrichtung von einer Position 0 in eine Position 1 gegen das Fahrzeugvorderteil hin hochgeschwenkt.

Das Bremsverhalten eines SiPKW's entspricht also einem natürlichen Bremsverhalten, wie man es auch bei jedem Vierbeiner und bei jeder guten Schlittschuhläuferin beobachten kann, wenn sie durch Anheben ihres Schwerpunktes den Anpreßdruck ihrer Beine nach unten erhöhen, um den Bremsweg zu verkürzen.

Durch das geschmeidige Abbremsen des SiPKW's ist weder die Fahrerin noch die Fondinsassin 407 zu irgendwelchen Verrenkungen gezwungen; denn sie werden genauso wie das Kind in Fahrrichtung gegen das Fahrzeugvorderteil hochgeschwenkt, wobei sie fest in ihre Sitze gedrückt werden, die zudem vorne auch noch etwas angehoben werden, so daß sie also nicht gleich vom Sitz herunterrutschen, wie dies bei einem herkömmlichen PKW bei einem scharfen Bremsmanöver der Fall ist, wenn man den Sicherheitsgurt nicht anlegt, um einen Genickbruch zu vermeiden.

Aufgrund des geschmeidigen und natürlichen Bremsverhaltens des SiPKW's ist es der Fondinsassin auch möglich, sich ohne Hast und unnötige Verrenkungen noch rechtzeitig mit den Händen gegen die gepolsterte Querstrebe 433, 434 abzustützen. Dabei ist die Querstrebe 433 entsprechend der Darstellung Fig. 1 aus einem Blech geformt.

Während das Kind nun bei einem folgenden Aufprall von einer Position 1 in eine Position 2 hochgeschwenkt wird, werden die Fahrerin und die Fondinsassin mit dem Kopf voraus in das elastische Auffangnetz ihrer Schutzbügel geschleudert, was aber wesentlich angenehmer ist wie ein Kopfabknicken bei einem Sicherheitsgurt, zumal sie vorher noch die Möglichkeit haben, ihre Eigengeschwindigkeit durch aktiven Einsatz ihrer Arme und Beine selbst zu verringern.

Dabei ist für die Fondinsassen jeweils eine Fußstütze 437 an der unteren Rückseite eines Vordersitzes vorgesehen und für eine Beifahrerin 108 (siehe Fig. 19) ein hochklappbarer Deckel 282 etwa in Höhe eines Bremspedales im Fußbereich angebracht.

Für die Fahrerin 3 ist ein nachgiebig gelagertes Lenkrad 350 vorgesehen, das mit zunehmender Krafteinwirkung der Gegenfeder 358 über den Winkelhebel 355 noch rechtzeitig nach vorne weggezogen wird, bevor ihre Armkräfte erlahmen und bevor sie mit ihrer Brust gegen das Auffangnetz angedrückt wird, während die Fondinsassin mit ihrer Brust gegen die gepolsterte Querstrebe, welche entsprechend nachgiebig durch die Ausbildung des Schutzbügels am Hinterteil befestigt ist (siehe - · - Andeutung), angepreßt wird.

Durch den Aufprall wird die Querachse 263 um die Vorderräder von der Position 1 in eine Position 2 hochgeschwenkt, während die Hinterräder von ihrer Position 1 in eine Position 2 gegen die Vorderräder hin auflaufen.

Durch das abschwenkbar gelagerte Fahrzeugvorderteil ist also eine optimal in die Länge gezogene Verzögerungsphase geschaffen, die durch die Nachgiebigkeit des Fahrzeugvorderteiles noch verlängert wird, wobei hier die Deformierung des Vorderteiles durch den Aufprall nicht dargestellt ist.

Nach dem Aufprall senkt sich der Fahrzeuginnenraum durch sein Eigengewicht und Kraft der Druckfedern 265 (siehe Fig. 1) von selbst wieder ab, so daß alle Insassen unbehindert und wie man sieht auch unverletzt das Fahrzeug verlassen können. Dabei hindern die Schutzbügel am Aussteigen überhaupt nicht und müssen nicht einmal angehoben werden. Auch die Türen sind nicht verklemmt ; denn die Türrahmen sind, wie man ebenfalls sieht, mit dem Vorderteil noch nicht einmal in Berührung gekommen. Auch muß bei einem SiPKW nur das Vorderteil auf den Auto- Friedhof.

Fig. 16 zeigt gegenüber Fig. 5 in etwas größerem Maßstab eine Anschlageinrichtung 440, -hier im Zusammenwirken mit dem hinteren Schutzbügel, dessen Arme 344a in der Gebrauchs-Schwenkstellung des Bügels dargestellt sind.

Für die Anschlagnase 446 der Nockenscheibe 445 ist ein gegen Federdruck nachgiebig gelagerter Anschlagbolzen 455 vorgesehen, dessen Anschlagstellung entsprechend der jeweiligen Axialstellung einer Anschlagbuchse 456 veränderbar ist (siehe Fig. 17).

Dabei wird der Abschwenkwinkel α des Schutzbügels in seine Gebrauchslage umso größer, je mehr die Anschlagstellung des Bolzens nach oben verlegt ist (siehe Vorzeichen +) und umso kleiner, je weiter die Anschlagstellung des Anschlagbolzens mittels der Anschlagbuchse 456 nach unten verlegt ist (siehe Vorzeichen -).

Fig. 17 zeigt eine Anschlageinrichtung 440 mit einem axial verschiebbar in einer Anschlagbuchse 456 gelagerten Anschlagbolzen 455, wobei die Anschlagbuchse ihrerseits axial verschiebbar in einem Gehäuse 454 gelagert ist.

Der Anschlagbolzen wird hier in einer bestimmten Axialstellung der Anschlagbuchse durch eine Druckfeder 458 nach unten über einen am Bolzen vorgesehenen Bund gegen eine an der Buchse angebrachte Schulter angedrückt und in einer bestimmten Axialstellung festgehalten.

Dabei ist die Druckfeder 458 gerade so stark ausgelegt, daß sie den Schutzbügel entgegen seinem Eigengewicht und entgegen der Krafteinwirkung seiner in Umfangsrichtung auf ihn einwirkenden gewundenen Biegefeder 368' (siehe Fig. 4) sicher in seiner Gebrauchslage festhält.

Durch die Druckfeder wird der Anschlag des Bügels über die Anschlagnase 446 der Nockenscheibe 445 gegen den Anschlagbolzen etwas gedämpft, wenn der Schutzbügel in seine Gebrauchslage abgeschwenkt wird.

Die verschiebbar in einer Bohrung eines Klemmflansches 460 geführte Anschlagbuchse wird hier durch den Klemmflansch in ihrer axialen Lage festgehalten.

Dabei ist der Klemmflansch in üblicher Weise in axialer Richtung aufgeschlitzt, so daß zwei Schenkel gebildet sind, die mittels einer Schraube zueinander verspannbar sind.

Statt einer üblichen Schraube ist hier ein handelsüblicher Klemmhebel 447 mit Außengewinde vorgesehen, bei dem zwischen dem Hebel und einem Gewindeschaft eine Verzahnung angebracht ist, um die Verdrehstellung des Hebels zum Gewindeschaft entsprechend einem günstigsten Spannwinkel verändern zu können.

Für die axiale Lagefixierung des Klemmflansches sind hier drei um 120° versetzte Distanzbuchsen 459 vorgesehen, die in etwas größer ausgebildeten Bohrungen des Klemmflansches untergebracht sind und die über einen Deckel 457 gegen eine obere Stirnseite des Lagergehäuses hin fest verschraubt sind, wobei die dafür erforderlichen Schrauben durch die Distanzbuchsen hindurchgeführt sind. Dadurch ist für den Klemmflansch mit etwas axialem Spiel ein Anschlag einerseits gegen die obere Stirnfläche des Lagergehäuses und andererseits gegen eine untere Stirnfläche des Deckels 457 gebildet.

Durch den Deckel 457 ist dann auch ein Gegenlager für das obere Ende der Druckfeder 458 gebildet.

Wird nun die Klemmwirkung des Klemmflansches durch Lösen des Klemmhebels 447 aufgehoben, dann ist die Anschlagbuchse 456 in axialer Richtung frei beweglich.

Die Druckfeder 458 schiebt dann die Anschlagbuchse über den Anschlagbolzen mit nach unten, wobei der Schutzbügel entsprechend angehoben wird (siehe Fig. 16).

Damit nun die Anschlagbuchse auch automatisch mit nach oben geschoben wird, wenn der Schutzbügel von Hand etwas weiter nach unten geschwenkt wird, ist eine weitere Druckfeder 461 wirksam zwischen dem Lagergehäuse und der Anschlagbuchse angebracht.

Um nun die geeignete Anschlagstellung der Anschlagbuchse bzw. des Anschlagbolzens einzustellen, muß der Schutzbügel nach dem Lösen des Klemmhebels lediglich von Hand in eine gewünschte Gebrauchslage gebracht werden, wo die Gebrauchslage dann nach dem Festziehen des Klemmhebels durch die axiale Lagefixierung der Anschlagbuchse festgelegt ist.

In der Darstellung Fig. 17 oben ist statt eines Klemmflansches eine Rändelschraube 478 od. dgl. vorgesehen, welche axial in die Anschlagbuchse eingeschraubt ist und mit ihrem Schraubenkopf einen Anschlag gegen den Deckel 457 bildet, so daß die Anschlagbuchse ebenfalls in ihrer Axialstellung festgehalten ist.

Um hier die Axialstellung der Anschlagbuchse verändern zu können, muß der Schutzbügel in seiner Gebrauchslage erst von Hand etwas nach unten gedrückt werden, damit der Anschlagbolzen und damit auch die Rändelschraube etwas angehoben werden, so daß die Rändelschraube von der Spannkraft der Druckfeder 458 entlastet ist. Durch Verdrehen der Rändelschraube ist dann die Anschlagstellung ebenfalls veränderbar.

Fig. 18 zeigt einen SiPKW ohne Vordach über Windschutzscheibe, wodurch sich der Luftwiderstand verringert und womit aber auch auf die vielen Vorzüge eines Vordaches verzichtet ist.

Fig. 19 zeigt einen abschwenkbar nach vorne um eine horizontale Querachse 376 am Armaturenbrett gelagerten Beifahrerkasten 375, der in dargestellter Normallage des Fahrzeugvorderteiles durch eine zwischen der Unterseite des Beifahrerkastens und der vorderen Stirnseite des Fahrzeughinterteiles wirksam angelenkte Druckfeder 377 in einer hinteren Anschlagschwenkstellung festgehalten ist.

Eine als Druckfeder ausgebildete, am beifahrerseitigen Tragarm 387 des Fahrzeugvorderteiles angelenkte Gegenfeder 378 erzeugt hier über einen schwenkbar an der vorderen Stirnseite des Hinterteiles gelagerten Hebel 379 und eine am vorderen Schwenkende dieses Hebels angelenkte Zugstange 381, deren oberes Ende an der Vorderseite des Beifahrerkastens angelenkt ist, nur ein geringes Gegendrehmoment, welches bestrebt ist, den Beifahrerkasten von der Beifahrerin 108 wegzuschwenken.

Zwecks Unterbringung der Druckfeder 377 ist hier an der vorderen Stirnseite des Hinterteiles unterhalb des Armaturenbrettes eine Einbuchtung 385 vorgesehen, innerhalb der eine Lasche 386 befestigt ist, gegen die sich die Druckfeder mit ihrem unteren Federende abstützt.

Dabei ist für die Druckfeder eine schwenkbar an der Unterseite des Beifahrerkastens gelagerte Führungsstange vorgesehen, die mit ihrem unteren Schwenkende mit etwas seitlichem Spiel verschiebbar in der Lasche geführt ist.

Für die als Druckfeder ausgebildete Gegenfeder 378 ist ebenfalls eine Führungsstange vorgesehen, die hier schwenkbar am beifahrerseitigen Tragarm 387 des Fahrzeugvorderteiles gelagert ist und mit ihrem nach unten weisenden Schwenkende durch eine ebenfalls am vorderen Schwenkende des Hebels 379 schwenkbar gelagerte Stangenführung 380 hindurchgeführt ist.

Dabei stützt sich die Gegenfeder mit ihrem unteren Federende über die Stangenführung gegen den Hebel 379, der hier schwenkbar in der Einbuchtung 385 des Fahrzeuginnenraumes gelagert ist, ab.

Der Hebel 379, die Zugstange 381, sowie die beiden Führungsstangen sind jeweils schwenkbar in einer vertikalen Längsebenen an ihren Anlenkpunkten gelagert.

Als Fußstütze ist für eine Beifahrerin 108 ein hochklappbarer Deckel 282 vorgesehen, hinter dem eine Kammer gebildet ist, in der beispielsweise Werkzeug oder Verbandszeug unterbringbar ist.

Fig. 20 zeigt den Beifahrerkasten 375 in seiner vorderen Endschwenkstellung bei abgeschwenktem Fahrzeugvorderteil.

Die Krafteinwirkung, mit der die Gegenfeder 378 bestrebt ist, den Beifahrerkasten von der Beifahrerin 108 wegzuschwenken, ist hier gleich groß oder größer wie die Krafteinwirkung, mit der die Druckfeder 377 bestrebt ist, den Beifahrerkasten in seine hintere Anschlagschwenkstellung zurückzuschwenken.

Durch die allmählich nachlassende Widerstandskraft des Beifahrerkastens aufgrund der beim Abschwenken des Vorderteiles zunehmenden Druckkraft der Gegenfeder 378 wird die Armkraft der Beifahrerin beim Abfangen ihrer Eigengeschwindigkeit nicht überfordert und den tatsächlichen Erfordernissen angepaßt.

Somit werden Verletzungen in den Hand- und Armgelenken und auch Verletzungen der inneren Organe bei einem Aufprall weitgehend vermieden, zumal die Beifahrerin durch die Abschwenkbarkeit des Fahrzeugvorderteiles und dessen Nachgiebigkeit optimal Zeit hat, ihren Aufprall durch aktiven Einsatz ihrer Arme und Beine abzufangen und die Nachgiebigkeit des Beifahrerkastens den Verzögerungsweg gegenüber dem Fahrzeuginnenraum verlängert. Beim Abfangen ihrer Eigengeschwindigkeit wird die Beifahrerin durch das Auffangnetz 345, welches Brust und Kopf gleichzeitig zurückhält, erforderlichenfalls auch noch unterstützt.

Gegenüber einem engangliegenden Sicherheitsgurt, der durch seine sofortige Abfangwirkung bei gleichzeitigem Abknicken des Kopfes nach vorne ein Abfangen der Eigengeschwindigkeit durch aktiven Einsatz der Arme und Beine während der Verzögerungsphase des Fahrzeuginnenraumes geradezu verhindert, ist bei einem Auffangnetz durch die zeitliche Verzögerung seiner Abfangwirkung die Heftigkeit eines Aufpralles in das Netz schon wesentlich abgeschwächt.

Die Eigengeschwindigkeit ist bekanntlich im Moment eines Aufpralles am größten und kann dann nur noch abnehmen.

Als Anschlag für das Vorderteil in seiner unteren Anschlagschwenkstellung sind beidseits Schwingmetallpuffer 284 am unteren Querträger 522 des Hinterteiles befestigt, wobei als Gegenanschlag Vertikalstützen 536 am Rahmen des Vorderteiles vorgesehen sind, welche beidseits auf den Außenseiten des Vorderteiles vom oberen Querträger 521 nach unten abstehen.

Fig. 21 zeigt einen als SiKfz ausgebildeten Frontlenker in Seitansicht mit einem samt Vorderradaufhängung abschwenkbar um eine horizontale Querachse 263 am Fahrzeughinterteil 261 gelagerten Fahrzeugvorderteil 260, das durch wirksam zwischen dem Hinterteil und dem Vorderteil angebrachte Stoßdämpfer-Federeinheiten 265,266' gegen beidseits am Hinterteil angebrachte Anschläge 264 angedrückt bzw. in Normallage gehalten ist. Die Anschläge 264 sind hier an der Unterkante der etwas nach innen abgesetzten Fahrerkabine an deren Rückseite angebracht.

Die Stoßdämpfer-Federeinheiten 265, 266' sind seitlich des Si-Frontlenkers unterhalb des Fahrzeuginnenraumes zwischen dem Fahrzeugvorderteil und beidseits vom Innenraum nach unten abstehenden Stützwänden 340 untergebracht, wobei in den Seitenwänden des Frontlenkers Aussparungen 339 vorgesehen sind.

Die horizontale Querachse für die Schwenklagerung des Vorderteiles ist zweckmäßigerweise durch zwei zueinander fluchtende Achsbolzen 263 auf den Außenseiten gebildet, wobei die Achsbolzen hinter den Fahrersitzen entsprechend erhöht gegenüber der Stirnseite des Vorderteiles jeweils an einer nach innen gezogenen Stützwand 322 des Fahrzeuginnenraumes befestigt bzw. angeflanscht sind, so daß bei einem Aufprall eine ausreichend große Hebelwirkung erzielt ist, um ein Abschwenken des Vorderteiles zu bewirken (siehe auch Fig. 22 u.23).

Durch die nach innen gezogenen Stützwände 322 sind seitlich des Innenraumes Schächte 321 gebildet, die hier, falls eine abgeschlossene Fahrerkabine vorgesehen ist, auf der Vorderseite durch eine im Bereich der Schächte etwas verstärkte Trennwand 324 und auf der Rückseite durch entsprechend dem Schwenkwinkel des Vorderteiles etwas schräg nach hinten gerichtete Wandungen 325 begrenzt sind.

In die Schächte hinein ragen nun beidseits zwei von unteren Trägern 311 (siehe Fig. 24) des Fahrzeugvorderteiles vertikal nach oben abstehende Stützen 312, wobei die Stützen an ihrem oberen Ende mit entsprechend ausgebildeten Lageraugen 279 für die Schwenklagerung des Vorderteiles um die Achsbolzen 263 ausgestattet sind (siehe Fig. 22 u.24). Dabei weisen die Lageraugen zueinander fluchtende, mit wartungsfreien Lagerbuchsen oder Lagerelementen ausgestattete Bohrungen auf, durch welche die Achsbolzen hindurchgeführt sind. Auf der Außenseite sind die Achsbolzen durch Lagerplatten 323 abgestützt, welche die Schächte 321 überbrücken und eine entsprechende Bohrung für die zusätzliche Lagerung der Achsbolzen aufweisen. Dabei sind die Lagerplatten von außen an den, in diesem Bereich stabil ausgebildeten Seitenwänden des Frontlenkers befestigt.

Die axiale Fixierung des Vorderteiles ist hier durch das auf der Fahrerseite etwas breiter ausgeführte Lagerauge 279 verwirklicht, indem dasselbe zwischen einem am Achsbolzen 263 angebrachten Bund und der Lagerplatte 323 eingepaßt ist, während das Lagerauge auf der Beifahrerseite etwas schmäler gehalten und seitlich distanziert ist.

Über eine zwischen den hinteren Fortsätzen der beiden Träger 311 befestigte, in Querrichtung zum Frontlenker unter der Fahrerkabine hindurchgeführte Traverse 316 sind die beiden spiegelbildlich ausgebildeten Seitenteile 311, 312 des Fahrzeugvorderteiles zu einer stabilen Einheit verschraubt (siehe Fig. 24).

Auf der Vorderseite der durch Kotflügel 310 abgedeckten Träger 311 sind hier wegen der gegenüber einem PKW wesentlich wuchtigeren Ausführung eines Frontlenkers nicht zu stabile, als Knautschzone dienende und leicht auswechselbare Frontteile 313 an den entsprechend ausgebildeten Trägern befestigt.

Vor den Frontteilen ist an den Trägern 311 etwas nachgiebig über entsprechend ausgebildete, nach vorne abstehende Verbindungsteile 317 eine Stoßstange 315 befestigt, wobei die Stoßstange etwas distanziert von den Frontteilen an den Verbindungsteilen festgeschraubt ist (siehe Fig. 24).

Zwischen den Frontteilen bzw. den Kotflügeln ist nun ein Gepäckkasten 314 mit einem nach hinten aufklappbaren Deckel untergebracht (siehe Fig. 22), wobei der Gepäckkasten auf seiner Unterseite über einen strichliert (unsichtbar) angedeuteten, nach hinten gezogenen Absatz etwas mehr Distanz zur vorderen Stoßstange aufweist, als oberhalb des Absatzes. Dabei ist der Gepäckkasten schwenkbar zwischen den Trägern 311 im Bereich der Kotflügel befestigt und nach Lösen einer Verriegelung über die Stoßstange nach unten abklappbar und auch leicht demontierbar, damit größere Reparaturen am Motor usw. leichter durchführbar sind.

Durch Abschwenken des Fahrzeugvorderteiles aufgrund einer Vollbremsung und anschließendem Aufprall gegen einen PKW 5 (siehe Fig. 23), wird ein über seine Lenksäule 359 axial verschiebbar gelagertes Lenkrad 350 mittels einer Gelenkwelle 336, die zwischen der Lenksäule und einem hier nicht dargestellten, am Fahrzeugvorderteil angebrachten Lenkmechanismus kardanisch gelagert ist, von einem Fahrer 3 weggezogen (siehe Fig. 23a).

Dabei ist die Ausziehbarkeit der Gelenkwelle 336 durch eine zwischen deren Wellenhälften wirksam angebrachte, als Druckfeder ausgebildete Gegenfeder 358' erschwert, so daß die Gegenfeder beim Abschwenken des Vorderteiles mit zunehmender Krafteinwirkung auf die Lenksäule einwirkt und das Lenkrad entgegen der Krafteinwirkung einer Druckfeder 360 in eine vordere Anschlagstellung drängt, während die Druckfeder 360 das Lenkrad über seine Lenksäule in eine hintere Anschlagstellung drängt.

Beim Abschwenken des Vorderteiles in seine untere Anschlag-Schwenkstellung werden die Stützen 312 des Vorderteiles gegen beidseits in den seitlichen Schächten 321 des Fahrzeuginnenraumes befestigte Schwingmetallpuffer 284 angedrückt.

Die Schächte sind durch abnehmbare Deckel 326 abgedeckt (siehe Fig. 22).

Zweckmäßigerweise ist für den Frontlenker ebenfalls ein doppelwandiges Vordach mit einem aufklappbaren Deckel 39 und eine um die Schwenkachse eines Wischbügels gewölbte Windschutzscheibe 26 vorgesehen, wobei unter dem Deckel ein Scheibenwischerantrieb entsprechend der EP-A- 0 190 677 im Dach untergebracht ist.

Eine in der Windschutzscheibe vorgesehene Mulde, über der das Wischblatt in seiner Ruheschwenkstellung berührungslos zur Scheibe gehalten ist, ist zweckmäßigerweise beifahrerseitig vorgesehen (siehe Fig. 22).

Die Stoßdämpfer 266' der beiden Stoßdämpfer-Federeinheiten sind hier beispielsweise doppelwirkend ausgebildet, wobei ihre Dämpfkraft beim Abschwenken des Vorderteiles durch eine Steuereinheit 560 gesteuert wird (siehe Fig. 35), während ihre Dämpfkraft beim Zurückschwenken des Vorderteiles durch eine in ihrem Kolben 513 eingebaute Drossel 554 bestimmt ist.

Um den Anschlag des Vorderteiles bzw. der Stützen 312 gegen die beidseits des Hinterteiles angebrachten Anschlagklötze 264 beim Zurückschwenken des Vorderteiles zu dämpfen, sind beidseits in den Stützen befestigte Schwingmetallpuffer 318 und Endlagenstoßdämpfer 540 mit Niveauausgleich vorgesehen (siehe Fig. 33).

Wahrscheinlich sind derlei Endlagenstoßdämpfer handelsüblich, -jedenfalls diente hier als Anregung lediglich ein im großen ADAC- Ratgeber auf Seite 48 dargestellter Stoßdämpfer mit Niveauausgleich, dessen Funktionsweise aber nicht exakt erläutert ist.

Fig. 22 zeigt gemäß Schnitt 22-22 zu Fig. 21 einen SiFrontlenker in Draufsicht.

Der Fahrzeuginnenraum ist hier, wie beispielsweise bei Transportfahrzeugen üblich, durch eine Trennwand 324 abgeteilt, so daß eine gegenüber dem rückwärtigen Nutzraum abgeschlossene Fahrerkabine gebildet ist.

Gegenüber einer kegelförmig gewölbten Windschutzscheibe ist der Motorraum 349 stirnseitig flach oder leicht nach vorne durchgewölbt ausgebildet, so daß an den Seitenflanken des Motorraumes hier nicht dargestellte Spiegeleinrichtungen gemäß der EP-A-0 190 677 mit zusätzlichen Verbesserungen anbringbar sind (siehe Fig. 38).

Das Getriebe 331 mit Gangschaltung ist zwischen dem Fahrer- und Beifahrersitz angebracht.

Fig. 23 zeigt einen SiFrontlenker während einer Massenkarambolage auf einer Autobahn.

Der Schwenkwinkel des Fahrzeugvorderteiles nach unten um die Querachse 263 ist hier trotz vorhergehender Vollbremsung und anschließendem Aufprall gegen einen PKW 5 etwas übertrieben dargestellt, damit die in der Beschreibung zu Fig. 21 erläuterten Funktionen beim Anschlag des Vorderteiles gegen das Hinterteil auch verbildlicht sind.

Bei einem hier dargestellten mittelschweren Aufprall sollte also das Vorderteil trotz vorhergehender Vollbremsung noch nicht ganz in seine untere Anschlagschwenkstellung gedrückt sein.

Die Deformation der Frontteile 313, in Längsrichtung gemessen, sollte durch den Aufprall allerdings mindestens so groß sein wie die Deformation des Heckteiles bei einem PKW 5, möglichst jedoch größer, da die Fahrzeuginsassen des PKW's bei einer weiteren Deformation durch einen stärkeren Aufprall einer wesentlich grösseren Verletzungsgefahr ausgesetzt sind, wie der Fahrer und Beifahrer des Frontlenkers.

Ein Kraftradfahrer 329 mit einem SiKrad (siehe Fig. 25) konnte trotz eines erheblich verkürzten Bremsweges gegenüber einem üblichen Krad einen Aufprall gegen den Frontlenker nicht mehr verhindern, -kommt aber mit relativ leichten Verletzungen davon, weil der SiFrontlenker heckseitig entsprechend freundlich ausgebildet ist und weil er seine Fahrgeschwindigkeit vor dem Aufprall optimal verzögern konnte, ohne daß er dabei ins Schleudern kam bzw. beim Abbremsen schon über sein Krad hinweggeschleudert wurde.

Für den Antrieb des Frontlenkers ist hier ein unter dem Armaturenbrett untergebrachter Motor 330 mit angebautem Getriebe 331 vorgesehen. Über eine zwischen dem Getriebe und einem Zwischenlager 333 gelagerte vordere Kardanwelle 332 und eine zwischen dem Zwischenlager und einem Differentialgetriebe 335 gelagerte hintere Kardanwelle 334 wird nun das Antriebsmoment in üblicher Weise über die hinteren Antriebswellen auf die Hinterräder übertragen.

Bei einem Omnibus ist der Antriebsraum gegenüber dargestelltem Frontlenker wie üblich heckseitig vorgesehen.

Fig. 24 zeigt bis auf einen hier demontierten Gepäckkasten 314 (siehe Fig. 22) und einen nicht dargestellten Lenkmechanismus für die Vorderräder mit dessen Befestigungsmöglichkeit ein komplettes Fahrzeugvorderteil 260 eines SiFrontlenkers.

Die beiden, jeweils aus einem Träger 311 mit daran befestigtem Kotflügel 310, sowie einer vom hinteren Ende des Trägers vertikal nach oben ragenden Stütze 312 bestehenden Seitenteile des Vorderteiles, welche zueinander spiegelbildlich ausgeführt sind, sind hier über eine zwischen den Trägern untergebrachte Traverse 316 zu einer stabilen Einheit verschraubt oder bei entsprechender Ausbildung der Achsbolzen 263 (siehe Fig. 22) miteinander verschweißt. Dabei sind die hinteren Fortsätze der Träger auch als Trittbrett nutzbar, um dem Fahrer bzw. einem Beifahrer den Einstieg in die Fahrerkabine zu erleichtern (siehe Fig. 21).

An den hinteren Stirnseiten der Träger sind Lagerböcke für die Schwenklagerung zweier Stoßdämpfer-Federeinheiten 265, 266 angebracht, wobei die Stoßdämpfer 266 hier wie üblich durch eine in ihren Kolben untergebrachte Drossel das Zurückschwenken des Vorderteiles dämpfen, während beim Abschwenken jeweils ein im Kolben vorgesehenes Rückschlagventil den Durchgang durch den Kolben öffnet. Dabei wirkt dann der Stoßdämpfer ähnlich einer Luftfeder. Innerhalb der Einheiten 265, 266 sind nun zusätzlich zwei Stoßdämpfer 266" wirksam zwischen der Traverse 316 des Vorderteiles und den Stützwänden 340 des Hinterteiles (siehe Fig. 21) angeordnet, wobei die Dämpfkraft dieser Stoßdämpfer beim Abschwenken des Vorderteiles durch eine gemeinsame Steuereinheit 560 gesteuert wird, indem die Anschlüsse der beiden Stoßdämpfer miteinander in Verbindung gebracht sind. Die Wirkungsweise der Stoßdämpfer 266" ist in der Beschreibung zu Fig. 34 erläutert.

Beim Zurückschwenken des Vorderteiles wirken die Stoßdämpfer 266" dann aufgrund eines in deren Kolben 513' eingebauten Rückschlagventiles 553 ähnlich einer Luftfeder und unterstützen somit die Druckkraft der in den Einheiten 265,266 vorgesehenen Druckfedern 265.

Als Vorderradaufhängung sind hier beispielsweise bei Lieferwägen übliche Blattfederpakete 337 an den Trägern 311 befestigt, während eine übliche Starrachse 338 an den Blattfederpaketen anmontiert ist.

Fig. 25 zeigt ein SiKrad 13" mit beidseits angebrachten Stoßdämpfer-Federeinheiten 265, 266', die jeweils in vertikaler Einbaulage schwenkbar in der vertikalen Längsebenen einerseits an einem Tragarm 387 des Fahrzeugvorderteiles 260 und andererseits an der Unterseite eines Tragrahmens 530 des Fahrzeughinterteiles 261 gelagert sind.

Dabei wird die Dämpfkraft der Stoßdämpfer 266' der Einheiten beim Abschwenken des Vorderteiles über eine gemeinsame Steuereinheit 560 (siehe Fig. 37) gesteuert, während deren Dämpfkraft beim Zurückschwenken des Vorderteiles durch eine jeweils in deren Kolben 513 untergebrachte Drossel 554 bestimmt ist.

Über die Druckfedern 265 der beiden Einheiten wird nun das abschwenkbar um eine horizontale Querachse 263 am Fahrzeughinterteil gelagerte Fahrzeugvorderteil über den Tragarm 387 gegen einen am vorderen Ende des Tragrahmens 530 angebrachten Anschlag 264 angedrückt und in seiner normalen Schwenkstellung festgehalten. Dabei weist der Tragrahmen hier im Bereich eines an üblicher Stelle plazierten Treibstofftankes mehr die Form eines zweckmäßigerweise doppelwandig ausgebildeten Steges auf.

Das Zurückschwenken des Vorderteiles durch das Eigengewicht des SiKrades und die Druckfedern 265 wird in der oberen Endschwenkstellung des Vorderteiles noch zusätzlich durch einen im Tragarm eingesetzten Schwingmetallpuffer 318 abgeschwächt.

Dabei ist der Schwingmetallpuffer so ausgelegt, daß er in der dargestellten Normalstellung des Vorderteiles bei normaler Belastung des SiKrades noch etwas übersteht bzw. Kraftreserve hat, so daß also ein harter Anschlag des Tragarmes gegen den Anschlag 264 verhindert ist.

Während das Vorderteil im wesentlichen aus dem Tragarm und einer schwenkbar am vorderen Schwenkende des Tragarmes gelagerten Telegabel mit daran befestigtem Vorderrad besteht, setzt sich das Fahrzeughinterteil im wesentlichen aus einem üblichen Tragrahmen 530 mit darin untergebrachtem Antriebsaggregat 262 und einer üblichen Hinterradaufhängung zusammen.

Die Querachse 263 des SiKrades ist etwa im hinteren Kniebereich eines Fahrers unter dem Treibstofftank gelagert.

Über zwei beidseits einer Lenkgabel 506, 507, 508, 516 befestigte Lenkbolzen 516 ist ein Lagerbolzen 508 der Lenkgabel axial fluchtend und verschiebbar zu einem Lagerbolzen 503 einer Telegabel 501, 502, 503, 510 in entsprechend angebrachten Führungshülsen 517 der Telegabel gelagert, wobei die Führungshülsen nach oben abstehend am unteren Lagerflansch 501 der Telegabel auf deren Rückseite angeflanscht sind (siehe auch Fig. 25a).

Dabei ist die Telegabel in üblicher Schräglage schwenkbar über ihren Lagerbolzen 503 in einem, am vorderen Schwenkende des Tragarmes 387 angebrachten Lagergehäuse 500 gelagert, während die Lenkgabel schwenkbar über ihren Lagerbolzen 508 in einem Lagergehäuse 504 gelagert ist, welches über einen nach hinten abstehenden Lagerarm 505 schwenkbar in der vertikalen Längsebenen an einer Schwinge 509 gelagert ist, die ihrerseits nach unten abstehend schwenkbar in der vertikalen Längsebenen knapp vor dem Treibstofftank am Tragahmen 530 des Fahrzeughinterteiles gelagert ist.

Beim Abschwenken des Vorderteiles wird also nun die Telegabel mit ihren Führungshülsen 517 etwas nach unten von den Lenkbolzen 516 der Lenkgabel abgezogen (siehe Fig. 31), wobei jedoch die Lenkbarkeit erhalten bleibt, weil über die Führungshülsen und die Lenkbolzen die fluchtende Anordnung des Lagerbolzens 508 der Lenkgabel zum Lagerbolzen 503 der Telegabel stets gewährleistet ist.

Eine an einem oberen Lagerflansch 507 der Lenkgabel festgeklemmte Lenkstange 350' wird beim Abschwenken des Fahrzeugvorderteiles zwangsläufig nach vorne weggeschwenkt, wobei ihre jeweilige Stellung beim Abschwenken durch die sich verändernde Schrägstellung der axial verschiebbar zur Telegabel gelagerten Lenkgabel und durch die sich zwangsläufig verändernde Schwenkstellung der Schwinge 509 bestimmt ist.

Zweckmäßigerweise sind die Führungshülsen der Telegabel mit ihren Lagerbohrungen für die Lenkbolzen der Lenkgabel bis knapp unter einen unteren Lagerflansch 506 der Lenkgabel hochgezogen.

Dabei sind zwischen den unteren Lagerflanschen der beiden Gabeln Faltenbälge 518 befestigt (siehe Fig. 29), um die Lenkbolzen in ihrem Führungsbereich vor Verschmutzung zu schützen.

Fig. 26 zeigt eine schwenkbar am Tragarm 387 des Fahrzeugvorderteiles 260 gelagerte Telegabel mit einem Lagerbolzen 503, an dessen Enden ein unterer Lagerflansch 501 und ein oberer Lagerflansch 502 für eine übliche Klemmbefestigung zweier Stoßdämpfer-Federeinheiten 510 fest aufgebracht ist.

Dabei sind die bei Krafträdern üblichen Einheiten gegenüber einem Lagergehäuse 500 des Tragarmes bzw. der Telegabel etwas nach vorne versetzt zwischen den Lagerflanschen festgeklemmt (siehe Fig. 28)

Zwischen den unteren Enden der Einheiten ist, wie üblich, ein Vorderrad drehbar befestigt, das jedoch wegen der Vorverlegung der beiden Einheiten gegenüber der Schwenkachse der Telegabel auf der Hinterseite der Einheiten gelagert ist, so daß das Vorderrad mit seiner Lagerachse, wie üblich, noch vor der nach unten verlängert gedachten Schwenkachse der Telegabel angeordnet ist (siehe Fig. 25).

Auf der Hinterseite des unteren Lagerflansches 501 der Telegabel sind beidseits des Lagerbolzens 503 zwei nach oben abstehende Führungshülsen 517 angeflanscht (siehe Fig. 29), in denen eine Lenkgabel über Lenkbolzen 516 axial verschiebbar gelagert ist.

Fig. 27 zeigt gemäß Schnitt 27-27 zu Fig. 26 einen abschwenkbar (in der vertikalen Längsebenen) um eine horizontale Querachse 263 am Tragrahmen 530 des Fahrzeughinterteiles 261 gelagerten Tragarm 387 in Draufsicht.

Am vorderen Schwenkende des Tragarmes 387 ist eine Telegabel mit beidseits angeordneten Stoßdämpfer-Federeinheiten 510 schwenkbar um eine in üblicher Schräglage in der vertikalen Längsebenen nach unten gerichtete Achse gelagert.

Dabei sind die beiden Einheiten 510 zwischen einem unteren Lagerflansch 501 und einem oberen Lagerflansch 502 der Telegabel festgeklemmt.

Im Bereich von zwei am unteren Lagerflansch befestigten, nach oben abstehenden Führungshülsen 517 für die Lenkbolzen 516 einer Lenkgabel, ist der obere Lagerflansch nach innen abgesetzt, so daß in der Mitte des oberen Flansches ein nach hinten abstehender Steg für seine Befestigung am Lagerbolzen der Telegabel gebildet ist.

Ein Achsbolzen 263 für die Schwenklagerung des Tragarmes 387 ist hier fest zwischen beidseits am Tragarm vorgesehenen Lageraugen 279 und schwenkbar in einem Tragrahmen 530 des Fahrzeughinterteiles angebrachten Lagerauge gelagert, wobei das Lagerauge spielfrei zwischen den beiden Lageraugen 279 des Tragarmes eingepaßt ist.

Fig. 28 zeigt gemäß Schnitt 28-28 zu Fig. 26 die Schwenklagerung einer Telegabel in Draufsicht auf ihre untere Lagerplatte 501. Der Lagerbolzen 503 der Telegabel ist in einem, am vorderen Schwenkende eines Tragarmes 387 angebrachten Lagergehäuse 500 gelagert, wobei die Lagerachse des Gehäuses von vorne gesehen senkrecht zur Lagerachse der beiden Lageraugen 279 des Tragarmes ausgerichtet ist.

An der Hinterseite des unteren Lagerflansches 501 sind Führungshülsen 517 für die Lenkbolzen 516 einer Lenkgabel zweckmäßigerweise in gleicher Höhe zum Lagerbolzen 503 der Telegabel angebracht, so daß also auch die Lenkbolzen 516 in gleicher Höhe zum Lagerbolzen 508 der Lenkgabel angeordnet sein müssen (siehe Fig. 30), damit die beiden Lagerbolzen der Gabeln in montiertem Zustand – fluchtend zueinander angeordnet – dieselbe Schwenkachse bilden (siehe Fig. 25a).

Am Tragarm 387 sind jeweils schwenkbar um eine horizontale Querachse seitlich angebrachte Stoßdämpfer-Federeinheiten 265, 266' angelenkt, die mit ihrem entgegengesetzten, unteren Ende jeweils schwenkbar um eine horizontale Querachse an der Unterseite des Tragrahmens 530 am Fahrzeughinterteil angelenkt sind (siehe Fig. 25).

Fig. 29 zeigt eine Lenkgabel mit einem Lagerbolzen 508, an dessen Enden ein unterer Lagerflansch 506 und ein oberer Lagerflansch 507 für eine Klemmbefestigung zweier Lenkbolzen 516 fest aufgebracht ist.

Dabei dient der obere Lagerflansch auch zur üblichen Befestigung einer Lenkstange 350' mittels zweier klemmlaschen 529.

Die Lenkgabel ist mit ihrem Lagerbolzen 508 axial fluchtend und verschiebbar zu einem Lagerbolzen 503 der Telegabel über ihre Lenkbolzen 516 in entsprechend angeordneten Führungshülsen 517 der Telegabel gelagert, wobei die Führungshülsen auf der Unterseite eines unteren Lagerflansches 501 der Telegabel angeflanscht und mit ihren Lagerbohrungen bis knapp unter einen unteren Lagerflansch 506 der Lenkgabel hochgezogen sind, so daß die Lenkbolzen möglichst knapp unterhalb ihres unteren Lagerflansches in den Führungshülsen geführt sind.

Zwischen dem unteren Lagerflansch der Lenkgabel und dem unteren Lagerflansch der Telegabel sind Faltenbälge 518 über die Führungshülsen gestülpt, so daß die Lenkbolzen in ihrem Führungsbereich vor Verschmutzung geschützt sind.

Für die Lagerung der Lenkgabel bzw. ihres Lagerbolzens 508 ist ein Lagergehäuse 504 vorgesehen, das über einen nach hinten abstehenden Lagerarm 505 und über eine Schwinge 509 mit dem Fahrzeughinterteil in gelenkige Verbindung gebracht ist (siehe Fig. 30).

Fig. 30 zeigt gemäß Schnitt 30-30 zu Fig. 29 ein Lagergehäuse 504 für eine Lenkgabel in Draufsicht mit einem nach hinten abstehenden Lagerarm 505, über den das Lagergehäuse schwenkbar um eine horizontale Querachse an einer Schwinge 509 gelagert ist, die ihrerseits schwenkbar um eine horizontale Querachse am Tragrahmen 530 des Fahrzeughinterteiles 261 in einem am Tragrahmen angebrachten Lagerauge gelagert ist.

Dabei ist zwischen der Schwinge und dem Lagerauge etwas axiales Spiel vorgesehen, damit sich die Lenkgabel über ihre Lenkbolzen nach der Telegabel ausrichten kann und eine einwandfreie Führung der Lenkbolzen in den Führungshülsen der Telegabel gewährleistet ist.

Fig. 31 zeigt das Bremsverhalten eines SiKrades 13″ bei einem scharfen Bremsvorgang.

Obwohl die Stoßdämpfer-Federeinheiten 510 der Telegabel beim Abbremsen um einen angenommenen Federweg f nachgegeben haben, wurde hier die Querachse 263 durch die beim Abbremsen bewirkte Schubkraft zwischen dem Vorder- und Hinterteil des SiKrades um einen angenommenen Betrag h, der über eine Steuereinheit 560 einstellbar bzw. durch die eingestellte Dämpfkraft der Stoßdämpfer 266' bestimmt ist, angehoben, so daß der Fahrersitz vorne um das Hinterrad, dessen Federungsstellung hier als unverändert angenommen ist, hochgeschwenkt wurde.

Beim Anheben der Querachse um den Antiblockierhub h wird aufgrund der Massenträgheit der Maschine und des Fahrers der Anpreßdruck beider Reifen gegen die Fahrbahn erhöht, so daß ein Blockieren der Bremsen wesentlich erschwert ist und auch ein höheres Bremsmoment auf die Fahrbahn übertragbar ist.

Man kann also den Hub h, ohne sich schämen zu müssen, als Antiblockierhub bezeichnen, weil sich durch Erhöhung des Reifendruckes gegen die Fahrbahn auch kürzere Bremswege erzielen lassen wie durch Lockerung der Bremskraft mittels einer Antibremsblockierverhinderungseinrichtung.

Beim Abbremsen eines SiKrades wird ein Fahrer durch das Anheben seines Sitzes fest gegen denselben angedrückt, so daß er nicht so leicht nach vorne rutscht, was auch noch durch den Nachlaufweg $s_1$ des Hinterrades bzw. des Fahrersitzes gegen das Vorderrad hin eingeschränkt ist.

Zudem gibt auch noch das Lenkrad um einen Betrag $s_2$ nach vorne hin nach, so daß der Fahrer beim Abfangen seiner Eigengeschwindigkeit die günstigste Winkelstellung seiner Arme länger aufrecht erhalten kann, wenn sein Oberkörper bei einem scharfen Bremsmanöver oder bei einem Aufprall gewaltsam nach vorne gedrückt wird und seine Armkraft überfordert ist.

Der Schwingmetallpuffer 318 hat sich beim Abheben des Tragarmes 387 vom Anschlag 264 weg etwas entspannt, so daß er nun etwas weiter über die Oberkante des Tragarmes hinausragt wie in angespanntem Zustand bei normaler Schwenkstellung des Vorderteiles. Für die Begrenzung der Schwenkbarkeit des Fahrzeugvorderteiles nach unten ist am Tragrahmen 530 ein Anschlag 284 vorgesehen, der ebenfalls als Schwingmetallpuffer oder dgl ausgebildet sein kann und der hier gegen einen auf der Oberseite des Tragarmes vorgesehenen, die beiden seitlichen Schenkel des Tragarmes verbindenden Steg 519 gerichtet ist.

Fig. 32 zeigt einen Endlagen-Stoßdämpfer 540 mit Niveauausgleich, der hier speziell für einen SiPKW jeweils wirksam zwischen einem Tragarm 387 des Fahrzeugvorderteiles 260 und einem Anschlag 264 des Fahrzeughinterteiles 261 angeordnet ist, wobei der Stoßdämpfer die Krafteinwirkung des ebenfalls zwischen dem Tragarm und dem Anschlag angeordneten Schwingmetallpuffers 318 unterstützt und das Zurückschwenken des Vorderteiles nach einem scharfen Bremsvorgang in dessen Normal- bzw. oberen Endschwenkstellung abschwächst bzw. dämpft.

Durch die jeweils beidseits des Fahrzeuges angeordneten Stoßdämpfer und die Schwingmetallpuffer, welche hier in den Tragarmen eingelassen und befestigt sind, ist also ein harter Anschlag der Tragarme des Vorderteiles gegen die Anschläge des Hinterteiles vermieden.

In vorliegendem Ausführungsbeispiel ist für den Endlagen-Stoßdämpfer ein mit einem Kolben 542 und einem Pumpenstössel 541 ausgestatteter Stössel 541, 542 vorgesehen, der über seinen Kolben und ein Tellerfederpaket 543 gegen einen Druckbolzen 544 wirkt und denselben gegen den Anschlag 264 des Hinterteiles andrückt. Der Stössel ist axial verschiebbar einerseits über seinen Pumpenstössel 541 in einem Zylinderrohr 546 und andererseits über seinen im Durchmesser größer ausgebildeten Kolben 542 in einem Zylinderrohr 548 gelagert, wobei dieses Zylinderrohr den erweiterten Fortsatz des Zylinderrohres 546 bildet.

Während das am Ende des Stoßdämpfers angeordnete Zylinderrohr 546 für den Pumpenstössel 541 durch eine abschließende stirnseitige Wandung zu einer Pumpenkammer 546 ausgebildet ist, deren Abdichtung der Pumpenstössel übernimmt, ist durch das größere Zylinderrohr 548 für den Kolben 542 eine Druckkammer 548 gebildet, die durch die stirnseitig vorgesehene Wandung zwischen dem Zylinderrohr 546 und dem Zylinderrohr 548 einerseits und durch den Kolben 542 andererseits begrenzt ist und deren Abdichtung durch den Kolben gewährleistet ist.

Die Druckkammer 548 ist hier über eine radial angebrachte Bohrung mit einem Druckbehälter 549 in Verbindung gebracht, wobei der Druckbehälter die Druckkammer koaxial umschließt, so daß ein abgeschlossener Behälter mit kreisringförmigem Querschnitt gebildet ist.

Für die Befestigung des so gebildeten Endlagenstoßdämpfers ist am entgegengesetzten Ende der Pumpenkammer 546 ein stirnseitig angeordneter Befestigungsflansch vorgesehen, über den der Stoßdämpfer am Tragarm 387 bzw. auf der Innenseite des im Querschnitt U-förmig ausgebildeten Tragarmes an dessen, die beiden seitlichen Schenkel verbindenden Steg angeflanscht ist.

Die Kammern 546 und 548, sowie der Druckbehälter 549 sind mit Hydrauliköl aufgefüllt, wobei der Druckbehälter im oberen Teil eine Stickstoff-Gasfüllung enthält, die unter Druck steht.

Durch den Gasdruck wird also nun der Stössel 541, 542 über das Öl und seinen Kolben 542 gegen das Tellerfederpaket 543 angedrückt, das seinerseits über den Druckbolzen 544 gegen den Anschlag 264 des Hinterteiles einwirkt und somit die Krafteinwirkung des Schwingmetallpuffers 318 gegen den Anschlag unterstützt bzw. bestrebt ist, das Fahrzeugvorderteil um die Querachse 263 des SiPKW's nach unten abzuschwenken.

Der Druckbolzen 544 ist dabei axial verschiebbar mit seinem, dem Druckfederpaket zugewandten dickeren Bolzenende im verlängerten Zylinderrohr 548 gelagert und mit seinem dünneren, als Zapfen ausgebildeten Bolzenende durch den Befestigungsflansch des Stoßdämpfers hindurch nach außen geführt bzw. im Flansch gelagert. Durch übliche Fahrbahnunebenheiten, sowie auch aufgrund einer Veränderung in der Fahrgeschwindigkeit werden nun dadurch bewirkte Schwingbewegungen des Vorderteiles über den Druckbolzen auf das Tellerfederpaket und den Schwingmetallpuffer übertragen, wobei über das Tellerfederpaket auch der über die Ölfüllung unter Gasdruck stehende Stössel 541, 542 in etwas gedämpftere Schwingungen versetzt wird.

Durch die Schwingbewegungen des Pumpenstössels 541 wird nun Öl über ein als Saugventil angeordnetes Rückschlagventil 545 aus einem drucklosen Behälter 550 in die Pumpenkammer 546 gesaugt und über ein als Druckventil angeordnetes Rückschlagventil 547 aus der Pumpenkammer in den Druckbehälter 549 bzw. in die Druckkammer 548 gepumpt.

Durch die Pumpwirkung des Stössels erhöht sich nun der Druck der Gasfüllung und somit über den Kolben 542 des Stössels auch die Vorspannung der Tellerfedern.

Sobald nun der Stössel beim Zusammendrücken der Tellerfedern über einen durch den Innenraum des Federpaketes hindurchgeführten, am Kolben des Stössels angebrachten Zapfen stirnseitig gegen den Druckbolzen 544 zum Anliegen gebracht ist, wird jedoch Öl aus der Druckkammer bzw. aus dem mit der Druckkammer in Verbindung gebrachten Druckbehälter über eine quer durch das Zylinderrohr 546 des Stoßdämpfers hindurchgeführte Ölablaßleitung 552 in den drucklosen Behälter 550 zurückgeleitet, wobei die Ölrückführung durch eine am Umfang des Pumpenstössels 541 angebrachte Einschnürung 551 ermöglicht ist, welche den Durchlaß durch das Zylinderrohr öffnet, sobald der am Stössel angebrachte, durch das Tellerpaket hindurchgeführte Zapfen stirnseitig gegen den Druckbolzen 544 zum Anliegen gebracht ist.

Die Druckkraft des Druckbolzens gegen den Anschlag 264 des Hinterteiles wird also bei üblicher Beladung des Fahrzeuges mit nur einem Fahrer durch die Pumpwirkung des Stössels nur geringfügig erhöht, da der Öldruck nach Erreichen eines bestimmten Maximalwertes über die Ölablaßleitung ständig wieder abgebaut wird, so daß der Fahrzeuginnenraum seine horizontale Lage nahezu unverändert beibehält.

Bei höherem Ladegewicht werden nun im Stillstand des Fahrzeuges die Schwingmetallpuffer 318, sowie die Stoßdämpfer 540 etwas zusammengedrückt, wobei sich der Fahrzeuginnenraum vorne etwas nach unten neigt. Dadurch wird der Druckbolzen bei gleichzeitigem Zusammendrücken der Tellerfedern gegen den Stössel 541, 542 hart zum Anliegen gebracht und drückt denselben in die Druckkammer 548, wodurch sich der Druck der Gasfüllung erhöht.

Gleichzeitig erhöht sich auch der Druck der Schwingmetallpuffer entsprechend dem erhöhten Ladegewicht, bis schließlich ein Gleichgewichtszustand eintritt.

Durch die während der Fahrt aufgrund üblicher Fahrbahnunebenheiten ausgelösten Schwingbewegungen des Pumpenstössels wird nun der Stössel mit zunehmender Kraft gegen den zum Anliegen gebrachten Druckbolzen angepreßt, bis sich der Druck in der Druckkammer 548 nach kurzer Fahrstrecke ausreichend erhöht hat, um den Druckbolzen 544 wieder in dargestellte Lage, die der horizontalen Lage des Fahrzeuginnenraumes entspricht, zurückzudrücken.

Ein weiteres Ausfahren des Druckbolzens wird jedoch wiederum durch die Ölablaßleitung 552 bzw. durch die Einschnürung 551 am Pumpenstössel, welche den Ölrückfluß ermöglicht, verhindert. Somit ist auch bei voller Beladung des SiPKW's eine exakte Endschwenkstellung des Vorderteiles in seiner Normallage garantiert, wobei durch die Druckkrafterhöhung der beidseits am Fahrzeug angebrachten Endlagenstoßdämpfer auch eine, dem erhöhten Ladegewicht entsprechende verstärkte Endlagendämpfung gewährleistet ist.

Fig. 33 zeigt einen Endlagenstoßdämpfer 540 ähnlich der Ausführung Fig. 32, jedoch mit separat angeordnetem Druckbehälter 549, so daß sich der Stoßdämpfer auch horizontal wirkend einbauen läßt, wie dies bei einem SiFrontlenker 13' (siehe Fig. 21) dargestellt ist. Dabei ist der Stoßdämpfer hier jeweils wirksam zwischen einer Stütze 312 des Fahrzeugvorderteiles 260 und einem Anschlagklotz 264 des Fahrzeughinterteiles 261 angeordnet an der Stütze des Vorderteiles bzw. auf der Innenseite der im Querschnitt U-förmig ausgebildeten Stütze an derem die beiden seitlichen Schenkel verbindenden Steg angeflanscht, wobei der Stoßdämpfer einen in der Stütze eingesetzten Schwingmetallpuffer 318 beim Zurückschwenken des Vorderteiles nach einem scharfen Bremsvorgang in seiner Dämpfwirkung unterstützt.

Fig. 34 zeigt einen Stoßdämpfer 266″, der im Zusammenwirken mit üblichen Stoßdämpfer-Federeinheiten 265, 266 das Abschwenken des Fahrzeugvorderteiles bei einem scharfen Bremsvorgang dämpft bzw. das Zusammendrücken der Druckfedern 265 der Einheiten erschwert, wobei der Stoßdämpfer 266″ beim Ausfahren seiner Kolbenstange ähnlich einer Luftfeder wirkt und die Druckfedern beim Zurückschwenken des Vorderteiles entgegen der Dämpfkraft der Stoßdämpfer 266 der Einheiten unterstützt.

Die Dämpfkraft des Stoßdämpfers 266″ beim Abschwenken des Vorderteiles bzw. beim Einschieben seiner Kolbenstange wird hier über eine, aus den Drosselventilen 511, 556 u.559, einem Druckregelventil 557 und einem Überdruckventil 558 zusammengesetzten Steuereinheit 560 gesteuert, wobei sich die Dämpfkraft des Stoßdämpfers bei entsprechender Einstellung der Ventile automatisch den gegebenen Fahrbahnverhältnissen anpaßt, so daß ein Anheben des Fahrzeugschwerpunktes bei einem scharfen Bremsvorgang entsprechend der jeweiligen, beim Abbremsen erzeugten Schubkraft zwischen dem Vorder- und Hinterteil des SiKfz'es mehr oder weniger erschwert ist.

Dabei wird das Einschieben des Kolbens 513' in die Kammer H des Stoßdämpfers über die Anschlußleitung a der Steuereinheit durch zwei parallel angeordnete Drosselventile 511, 556, sowie ein hinter diesen Drosseln angeordnetes Drosselventil 559 gedämpft.

Das Drosselventil 559 hat hier lediglich die Aufgabe, eingangsseitig einen gewissen Druckanstieg bzw. Staudruck zu erzeugen, wobei die Druckerhöhung beim Abschwenken des Vorderteiles vor der Drossel 559 von derem Durchgangsquerschnitt und von der Geschwindigkeit abhängig ist, mit welcher der Kolben eingeschoben wird.

Um nun bei erhöhtem Druckanstieg (Staudruck) vor der Drossel 559 die Dämpfkraft des Stoßdämpfers zu erhöhen bzw. die Kolbengeschwindigkeit zu verringern, ist in Durchflußrichtung des Öles gesehen hinter der Drossel 556 ein Druckregelventil 557 vorgesehen, das über eine ausgangsseitige Steuerleitung bei ansteigendem Staudruck vor der Drossel 559 seinen Durchgangsquerschnitt verringert bzw. bei zu hoher Kolbengeschwindigkeit seinen Durchgang verschließt, so daß damit auch der Durchgang durch die Drossel 556 gesperrt ist.

Bei rutschigen Fahrbahnverhältnissen, wo also die bei einem scharfen Bremsvorgang erzeugte Schubkraft zwischen dem Vorder- und Hinterteil des SiKfz'es geringer ist wie bei griffigen Fahrbahnverhältnissen, ist also hier durch die beiden parallel angeordneten Drosseln 511 u.556 die geringste Dämpfkraft des Stoßdämpfers garantiert, weil entsprechend der kleineren Schubkraft auch die Kolbengeschwindigkeit geringer ist, so daß das Druckregelventil 557 geöffnet bleibt.

Somit ist bei Glatteis ein Anheben des Fahrzeugschwerpunktes weitgehendst erleichtert und aufgrund der dadurch bewirkten Druckkrafterhöhung der Reifen gegen die Fahrbahn auch die Standfestigkeit des Fahrzeuges entsprechend erhöht, so daß ein Blockieren der Bremsen weitgehend erschwert ist.

Bei einem scharfen Bremsvorgang auf griffiger Fahrbahn wird der Durchgang durch die Drossel 556 in Folge des überhöhten Druckes vor der Drossel 559 aufgrund der höheren Kolbengeschwindigkeit über das Druckregelventil 557 zunehmend erschwert bzw. gesperrt, so daß sich die Dämpfkraft des Stoßdämpfers automatisch erhöht, weil dann der Öldurchlaß letztendlich auf den Durchgangsquerschnitt der Drossel 511 beschränkt ist.

Bei einem Frontalaufprall, bei dem Schubkraft zwischen den beiden Fahrzeugteilen übliche Werte übersteigt, ist es jedoch zweckmäßig, die Dämpfkraft des Stoßdämpfers über die Drosselventile zu umgehen, um einen Abschwenken des Fahrzeugvorderteiles möglichst wenig Widerstand durch den Stoßdämpfer entgegenzusetzen.

Zu diesem Zweck ist direkt zwischen den Anschlüssen a und b der Steuereinheit ein Überdruckventil 558 vorgesehen, das bei einem bestimmten Eingangsdruck öffnet und das einen ausreichend großen Durchgangsquerschnitt aufweist, um den Strömungswiderstand möglichst gering zu halten.

Die dargestellten Ventile sind hier lediglich zwecks Ermittlung der günstigsten Drosselquerschnitte bzw. Rückstellkräfte (hier durch eine Druckfeder zum Ausdruck gebracht) einstellbar ausgeführt, wobei die Praxis ergeben muß, welche Einstellmöglichkeit zwischen einem Maximal- und einem Minimalwert gegebenenfalls einem Fahrer überlassen werden kann und welche Funktionen gegebenenfalls im Stoßdämpfer unterbringbar sind (siehe Prospekt i 63 der Firma Festo KG, BRD, dem bei der Ausarbeitung vorliegender Steuerung eine gewisse Anregung zu verdanken ist, obwohl oder weil das Ersatzbild mit der Schnittdarstellung nicht ganz übereinstimmt).

Beim Einschieben des Kolbens 513' in die Kammer H des Stoßdämpfers wird Öl über die Steuereinheit 560 in einen unter dem Druck einer Gasfüllung 515 stehenden Druckbehälter $L_1$, sowie über eine Verbindungsleitung zwischen den Kammern $L_1$ und $L_2$ des Stoßdämpfers auch in die Kammer $L_2$ hineingedrückt.

Dabei erhöht sich der Druck der Gasfüllung entsprechend der in den Druckbehälter $L_1$ eingebrachten Ölmenge, die dem Volumen der in den Stoßdämpfer eingeschobenen Stoßstangenlänge entspricht. Über die Gasfüllung wirkt dann der Stoßdämpfer 266" beim Ausfahren seiner Kolbenstange ähnlich einer Luftfeder, wobei seine Druckkraft dem Produkt aus "Querschnitt der Stoßstange" und "Druck in der Kammer $L_1$" entspricht.

Voraussetzung für die Funktion als Stoßdämpfer beim Einschieben und als "Luftfeder" beim Ausfahren der Kolbenstange ist jedoch ein zweckmäßigerweise im Kolben 513' eingebautes Rückschlagventil 553 (ohne Drossel 554, wie bei einem Stoßdämpfer 266' - siehe Fig. 35 bis 37), dessen Funktion hier über eine strichpunktiert angedeutete Bypaßleitung zwischen den Kammern H und $L_2$ des Stoßdämpfers versinnbildlicht ist.

Dabei ist das Rückschlagventil so angeordnet, daß es beim Einschieben der Kolbenstange schließt, so daß hier der Öldurchfluß durch die Steuereinheit 560 gewährleistet ist,- und beim selbsttätigen Ausfahren der Kolbenstange öffnet.

Beim Ausfahren der Kolbenstange wird dann der im Druckbehälter $L_1$ herrschende Öldruck über die Verbindungsleitung zwischen den Kammern $L_1$ und $L_2$, sowie über das Rückschlagventil 553 sowohl auf die kolbenstangenseitige, kreisringförmige Fläche des Kolbens 513', als auch auf die größere Stirnfläche des Kolbens übertragen, sodaß der Kolben aufgrund der gegen die größere Stirnfläche gerichteten größeren Druckkraft nach außen geschoben wird. Der Stoßdämpfer drückt also ein Fahrzeugvorderteil im eingebauten Zustand gegen einen Anschlag 264 des Fahrzeughinterteiles (siehe Fig. 32 u.33) und erschwert somit durch seine Druckkraft, ebenso wie das Ladegewicht eines SiAutomobiles das Abschwenken des Vorderteiles bei einem scharfen Bremsvorgang, wobei er die Druckfedern 265 der Stoßdämpfer- Federeinheiten 265, 266 unterstützt (siehe Fig. 1 u.24).

Um nun bei erhöhtem Ladegewicht die Druckkraft des Stoßdämpfers zu mindern bzw. einen gewissen Ausgleich zu schaffen, ist ein Druckübersetzer 561 vorgesehen, der hier mit einem axial verschiebbar in einem entsprechend ausgebildeten Gehäuse gelagerten Doppelkolben 562 ausgestattet ist.

Der Doppelkolben besteht aus einem kleineren und einem größeren Kolben, wobei der als Zapfen ausgebildete kleinere Kolben axial abstehend vom größeren Kolben den Abschluß einer Druckkammer R bildet, während der größere Kolben mit seiner dem Zapfen zugewandten Kreisringfläche den Abschluß eines über den Kolben unter Gasdruck oder Federdruck (Tellerfederpaket) stehenden Druckbehälters $L_3$ bildet.

Während nun die Druckkammer R des Druckübersetzers 561 an den Druckbehältern 549 der beiden für ein SiAutomobil vorgesehenen Endlagenstoßdämpfer 540 (siehe Fig. 32 u.33) angeschlossen ist, steht der Druckbehälter $L_3$ des Druckübersetzers über eine hier strichpunktiert angedeutete Verbindungsleitung mit dem Druckbehälter $L_1$ eines Stoßdämpfers 266" für einen SiPKW (siehe Fig. 1) bzw. mit den Druckbehältern $L_1$ der beiden Stoßdämpfer 266" für einen SiFrontlenker (siehe Fig. 24) in Verbindung.

Bei erhöhtem Ladegewicht steigt nun der Druck in der Kammer R des Druckübersetzers aufgrund des Druckanstieges in den Druckbehältern 549 der Endlagenstoßdämpfer entsprechend an, sodaß der Doppelkolben 562 über seinen kleineren Kolben mit der größeren Stirnfläche seines größeren Kolbens gegen die Gasfüllung bzw. ein Druckfederpaket des Druckbehälters $L_3$ angedrückt wird. Dadurch vergrößert sich das Füllvolumen des Druckbehälters $L_3$, was zur Folge hat, daß Öl vom Druckbehälter $L_1$ des Stoßdämpfers 266" in den Druckbehälter $L_3$ des Druckübersetzers fließt.

Entsprechend der Verringerung der Ölmenge im Druckbehälter $L_1$ des Stoßdämpfers 266" verringert sich auch dessen Druckkraft, so daß ein durch ein höheres Ladegewicht erschwertes Abschwenken des Fahrzeugvorderteiles durch die verminderte Druckkraft des Stoßdämpfers wieder egalisiert oder etwas erleichtert ist.

Somit ist das Bremsverhalten eines SiAutomobils nach dem RIAM-Sicherheitssystem auch automatisch dem jeweiligen Ladegewicht angepaßt (RIAM kommt von Right Infallible Auto Mobile).

Der Stoßdämpfer 266" kann auch kombiniert mit einer Druckfeder 265 zu einer Stoßdämpfer- Federeinheit 265, 266" ausgebildet sein.

Fig. 35 zeigt einen Stoßdämpfer 266', dessen Dämpfkraft beim Einschieben der Kolbenstange bzw. Abschwenken des Fahrzeugvorderteiles über eine Steuereinheit 560 gesteuert und beim Ausziehen seiner Kolbenstange bzw. Zurückschwenken des Vorderteiles durch eine in seinem Kolben 513 eingebaute Drossel 554 bestimmt ist. Dabei ist im Kolben zusätzlich zur Drossel, hintereinander angeordnet, auch noch ein Rückschlagventil 553 untergebracht, während zwischen dem Anschluß b (Ausgang) der Steuereinheit und einem hier separat angeordneten Druckbehälter $L_1$ des Stoßdämpfers ein Rückschlagventil 512 vorgesehen ist, das beim Ausziehen der Kolbenstange einen Ölrückfluß vom Druckbehälter $L_1$ zur Steuereinheit verhindert, sodaß die Dämpfkraft des Stoßdämpfers beim Zurückschwenken des Vorderteiles lediglich durch die im Kolben eingebaute Drossel 554 bestimmt ist.

Beim Einschieben der Kolbenstange wird dann der Durchgang durch diese Drossel über das Rückschlagventil 553 gesperrt.

Durch den separat angeordneten Druckbehälter $L_1$ kann der Stoßdämpfer auch horizontal wirkend eingebaut werden, was bei einer entsprechenden Ausbildung auch bei einem Stoßdämpfer 266″ gemäß Fig. 34 möglich ist.

Der Stoßdämpfer 266′ ist hier kombiniert mit einer Druckfeder 265 zu einer Stoßdämpfer- Federeinheit 265, 266′ ausgebildet.

Dabei ist zum Schutz der Kolbenstange vor Verschmutzung (bei ein. SiKrad, -siehe Fig. 25) ein über die Druckfeder gestülpter Faltenbalg oder ein Schutzrohr vorgesehen (siehe großer ADAC- Ratgeber, Seite 48), was aber hier in den Funktionsdarstellungen nicht berücksichtigt ist.

Bei der Anwendung eines Schutzrohres ist der kolbenstangenseitige Anschluß des Stoßdämpfers zweckmäßigerweise durch die Wandung des Zylinderrohres hindurch nach hinten geführt oder durch ein, das Zylinderrohr koaxial umfassendes Rohr (vgl. Fig. 32) gebildet, so daß der Anschluß zur Kammer $L_2$ des Stoßdämpfers auf dessen Rückseite anbringbar ist.

Fig. 36 zeigt eine Stoßdämpfer- Federeinheit 265, 266′, die im Prinzip der Ausführung gemäß Fig. 35 entspricht, wobei jedoch hier der Druckbehälter $L_1$ des Stoßdämpfers 266′ in bekannter Weise durch ein nach hinten verlängertes Zylinderrohr gebildet ist.

Dabei ist die Kammer $L_1$ des Druckbehälters durch einen Trennkolben 514 oder eine Membrane von der Gasfüllung 515 getrennt, sodaß die Einheit auch horizontal wirkend in Anwendung gebracht werden kann, was bei einer entsprechenden Ausbildung auch mit einem Stoßdämpfer 266″ gemäß Fig. 34 möglich ist.

Fig. 37 zeigt zwei Stoßdämpfer- Federeinheiten 265, 266′ mit doppelwirkenden Stoßdämpfern 266′, deren Dämpfkraft beim Einschieben ihrer Kolbenstangen bzw. beim Abschwenken des Fahrzeugvorderteiles durch eine gemeinsame Steuereinheit 560 gesteuert wird. Dabei sind deren Kammern H (Highpressure) miteinander in Verbindung gebracht am Anschluß a und die Kammern $L_1$ der Druckbehälter $L_1$ miteinander in Verbindung gebracht über ein Rückschlagventil 512 am Anschluß b der Steuereinheit angeschlossen.

Die dargestellte Tandemanordnung der beiden mit einem Trennkolben 514 oder einer Membrane ausgestatteten Stoßdämpfer 266′ ist vor allem für ein SiKrad (siehe Fig. 25) empfehlenswert, wo die Stoßdämpfer beim Umlegen des Krades in horizontale Lage gebracht werden und wo die Unterbringung eines zusätzlichen Stoßdämpfers 266″ bei der Anwendung zweier Stoßdämpfer- Federeinheiten 265, 266 ein eigenes Problem und auch nur dann überlegenswert wäre, wenn eine Beifahrerin mehr wie zwei Zentner wiegt (was gefährlich ist, wenn man eine Kurve fährt u. die sich auf die falsche Seite legt).

Fig. 38 zeigt eine fahrerseitig angeordnete, schwenkbar an einem SiPKW befestigte Spiegeleinrichtung 20 in Gebrauchslage bei geschlossener Fahrertüre 103.

Eine im Prinzip gleich ausgebildete Spiegeleinrichtung ist auch auf der Beifahrerseite angebracht bzw. an einem SiFrontlenker. Die Spiegeleinrichtung weist eine um die Schwenkachse eines Wischbügels gewölbte Ausblickscheibe auf, in welche eine Mulde eingeformt ist, damit das Wischblatt in seiner Ruhelage berührungslos zur Scheibe gehalten ist (siehe EP-A-0 190 677).

Zwischen der Spiegeleinrichtung 20 und einem Halter 12 mit seinen beiden Achsen 17 u.18 ist hier in Abweichung zur Europ. Patentanmeldung 0 190 677 eine Einrasteinrichtung 300 vorgesehen, um zu verhindern, daß die Spiegeleinrichtung beim Öffnen einer Fahrertüre 103 über einen Gelenkhebel 21 um eine vertikal nach oben abstehende Achse 18 des Halters 12 gegen eine stark nach vorne durchgewölbte Windschutzscheibe 26 des SiPKW's angeschwenkt wird.

Die Einrasteinrichtung 300 ist auf der Unterseite der Spiegeleinrichtung anmontiert (siehe auch Fig. 40) und bildet zusammen mit der nach oben abstehenden Achse 18 des Halters, um welche die Spiegeleinrichtung schwenkbar gelagert ist, im eingerasteten Zustand eine kompakte formschlüssige Verbindung zwischen der Spiegeleinrichtung und dem Halter.

Somit wird die Spiegeleinrichtung beim Öffnen der Fahrertüre über den Gelenkhebel 21 um eine nach unten ragende Schwenkachse 17 des Halters nach außen abgeschwenkt (siehe Fig. 39).

Dabei ist die vertikal nach unten ragende Schwenkachse des Halters schwenkbar in einem seitlich an einem vorderen Ansatz 293 des Fahrzeughinterteiles 261 befestigten Lagergehäuse 19 gelagert. Unter dem vorderen Ansatz 293 sind auf den Außenseiten desselben die beiden Tragarme 387 des Fahrzeugvorderteiles 260 für dessen Schwenklagerung um die Achsbolzen 263 des SiPKW's untergebracht (siehe Fig. 2).

Um auch im ausgerasteten Zustand der Einrasteinrichtung 300 zu verhindern, daß die Spiegeleinrichtung um die nach oben ragende Achse 18 des Halters herum nach innen gegen die Windschutzscheibe anschwenkbar ist, ist an der Unterseite der Spiegeleinrichtung ein Anschlag 306 gegen den Halter 12 angebracht (siehe auch Fig. 40).

Als zusätzliche Absicherung ist auch noch ein üblicher Anschlag zwischen dem Halter und seinem Lagergehäuse 19 vorgesehen, der jedoch erst dann wirksam wird, wenn der Halter aufgrund einer äußeren Gewalteinwirkung etwas über seine dargestellte Gebrauchslage G hinaus nach innen geschwenkt wird.

Nach einem Öffnungswinkel der Fahrertüre von beispielsweise 70° (siehe Schwenkstellung R der Türe in Fig. 39) ist der Halter 12 durch Ausschwenken der Spiegeleinrichtung über den Gelenkhebel 21 in eine Schwenkstellung R (Raststellung) gebracht, in der zwischen dem Halter und seinem Lagergehäuse eine übliche Einrasteinrichtung vorgesehen ist, so daß damit auch für die Türe eine Raststellung gebildet ist.

Nach einem Öffnungswinkel von hier beispielsweise 80° der Türe ist nun in einer Schwenkstellung A derselben auch der Halter in eine dieser Stellung entsprechende Schwenkstellung A (Anschlagstellung) gebracht, in der zwischen dem Halter und seinem Lagergehäuse 19 ein Anschlag vorgesehen ist, der ein weiteres Ausschwenken des Halters verhindert.

Zweckmäßigerweise ist im Gelenkhebel 21 eine Druckfeder untergebracht, gegen deren Krafteinwirkung die beiden Gelenkköpfe des Hebels etwas zusammenschiebbar sind, damit der Anschlag für die Türe etwas gedämpft ist und damit auch der zwischen dem Halter und seinem Gehäuse vorgesehene Anschlag keiner übermäßigen Stoßbelastung ausgesetzt ist, wenn die Türe gewaltsam gegen den Endanschlag angedrückt wird.

Die im Gelenkhebel vorgesehene Druckfeder ist selbstverständlich über einen entsprechend angebrachten Anschlag im Hebel auf Vorspannung gehalten.

Zu den Stellungen G (Gebrauchslage), R (Raststellung) und A (Anschlagstellung) der Türe und des Halters ist in Fig. 39 auch die jeweils dazugehörige Stellung G, R und A des Gelenkhebels 21 aufgezeigt.

Die punktierten Linien zeigen schematisch in Blickrichtung a eines hier nicht dargestellten Fahrers dessen Blickumlenkung über einen Einblickspiegeleinsatz 1 und einen Ausblickspiegeleinsatz 2 in Fahrrichtung b, sowie in Blickrichtung a' des Fahrers dessen Blickumlenkung über einen Rückspiegel 10 in Gegenfahrrichtung c. Auf der Außenseite des Rückblickspiegels ist in vertikaler Längsrichtung desselben eine zusätzliche Blinkleuchte 221 für die Anzeige eines Fahrrichtungswechsels angebracht.

Eine als Gepäckraumdeckel dienende, schwenkbar um eine horizontale Querachse 299 gelagerte Fronthaube 106 ist bei einem SiPKW auch bei eingeschwenkten Spiegeleinrichtungen jederzeit vorne hochklappbar, so daß sich das Aus- und Einschwenken der Spiegeleinrichtungen beim Öffnen der Fronthaube erübrigt.

Um die unter der Spiegeleinrichtung liegende Partie des vorderen Ansatzes 293, sowie die entsprechende untere Partie der Spiegeleinrichtung gut zugänglich reinigen zu können, muß die Einrasteinrichtung 300 (siehe Fig. 40) ausgeklinkt werden, damit der Halter mit der Einrichtung bei geschlossener Fahrertüre von Hand in seine Raststellung R ausschwenkbar ist (siehe Fig. 41).

Die Spiegeleinrichtung ist dann in "Putzstellung" gebracht.

Fig. 39 zeigt eine Spiegeleinrichtung 20 bei geöffneter Fahrertüre 103 mit einem in seine Raststellung R ausgeschwenkten Halter 12 der Spiegeleinrichtung.

Über einen Gelenkhebel 21 ist somit auch die Türe in einer Raststellung R festgehalten

Beim weiteren Ausschwenken der Türe wird deren Schwenkbarkeit in einer Anschlagstellung A durch einen zwischen dem Halter und seinem Lagergehäuse 19 gebildeten Anschlag begrenzt, wobei der Anschlag der Türe über die Spiegeleinrichtung gegen den Halter durch eine in einem Gelenkhebel 211 wirksam untergebrachte Druckfeder gedämpft ist.

Fig. 40 zeigt gemäß Schnitt 40-40 zu Fig. 39 einen Längsschnitt durch eine an der Unterseite der Spiegeleinrichtung an derem Rahmenboden 89 befestigte Einrasteinrichtung 300.

Dabei ist hier eine als beidarmig wirkender Hebel ausgebildete Klinke 302 vorgesehen, um eine formschlüssige Verbindung zwischen der Spiegeleinrichtung und dem Halter 12 über die nach oben abstehende Achse 18 des Halters herzustellen (siehe Fig. 38). Zwecks Lagerung der Klinke 302 sind auf der Unterseite des Rahmenbodens 89 zwei stabile Lageraugen 301 mit entsprechenden Bohrungen für die Lagerung einer horizontal angeordneten Achse 303 angeformt, wobei die Achse schwenkbar in den beiden Lageraugen gelagert und axial fixiert ist.

Zwischen den beiden Lageraugen ist nun als beidarmig wirkender Hebel ausgebildete Klinke fest auf der Achse aufgepaßt, wobei die Klinke senkrecht zur Längsrichtung des Halters angeordnet ist und den Halter auf dessen Unterseite mit ihrem inneren Schwenkende umfaßt, während an ihrem äußeren Schwenkende eine Druckfeder 304 wirksam zwischen dem Rahmenboden und der Klinke angeordnet ist. Dabei drückt die Druckfeder das äußere Schwenkende der Klinke nach unten und über ihre Schwenkachse 303 deren inneres Schwenkende nach oben.

Der Formschluß zwischen der Spiegeleinrichtung und dem Halter ist nun einerseits durch den auf der Außenseite des Halters an den Lageraugen 301 befestigten Anschlag 306 und andererseits durch eine am inneren Schwenkende der Klinke angeformte, nach oben abgewinkelte, leicht ballig ausgebildete Stirnfläche 307 gebildet, wobei die Stirnfläche der Innenseite des Halters zugewandt ist.

Dabei ist die Innenseite des Halters im Bereich der ballig ausgebildeten Stirnfläche 307 etwas angeschrägt bzw. der balligen Stirnfläche tangential angepaßt.

Über die Druckfeder wird also nun die Klinke 302 mit dieser balligen Stirnfläche nach oben gegen die angeschrägte Innenseite des Halters angedrückt, wodurch auch der Anschlag 306 entsprechend einer über die Schräge der Innenseite bewirkten horizontalen Kraftkomponente gegen die Außenseite des Halters angedrückt wird.

Dabei ist der Anschlag 306 als Leiste ausgebildet und auf der Innenseite der beiden Lageraugen 301 befestigt.

Am äußeren Schwenkende der Klinke ist nun auf deren Unterseite ein Kugelknopf 305 befestigt, der über eine Stiftschraube bzw. einen Schaft etwas nach unten absteht.

Durch Anheben des Kugelknopfes wird bei gleichzeitigem Anspannen der Druckfeder das innere Schwenkende der Klinke um die Achse 303 herum nach unten abgeschwenkt, so daß die Einrasteinrichtung ausgerastet ist und die Spiegeleinrichtung über den Kugelknopf in "Putzstellung" ausschwenkbar ist (siehe Fig. 41). Dabei muß die Fahrertüre geschlossen sein.

Für das Wiedereinrasten der Klinke ist stirnseitig an derem inneren Schwenkende eine Anlauffläche 308 vorgesehen, so daß die Spiegeleinrichtung auch durch bloßes Anschwenken gegen den Halter wieder in formschlüssige spielfreie Verbindung zum Halter einrastbar ist. Auch ist es möglich, die Klinke durch Öffnen der Fahrertüre wieder in Raststellung zu bringen (vergleiche Fig. 41 und 39).

Fig. 41 zeigt eine Spiegeleinrichtung 20 in "Putzstellung" mit einem in seine Raststellung R ausgeschwenkten Halter 12 bei geschlossener Fahrertüre.

Vor dem Ausschwenken der Spiegeleinrichtung mußte die Klinke 302 durch Anheben des Kugelknopfes 305 erst ausgeklinkt werden.

Dabei wird die Spiegeleinrichtung beim Ausschwenken etwas um die vertikal nach oben abstehende Achse 18 des Halters 12 herumgeschwenkt.

In dargestellter "Putzstellung" kann die von der Spiegeleinrichtung abgedeckte Partie des vorderen Ansatzes 293 des Fahrzeughinterteiles gut zugänglich gesäubert werden. Ebenso natürlich auch die entsprechende Partie der Spiegeleinrichtung.

Zusammenfassend sei noch erwähnt, daß verschiedene Einrichtungen, die hier nur im Zusammenhang mit einem SiPKW dargestellt sind, wie beispielsweise ein Schutzbügel für den Fahrer oder ein abschwenkbar gelagerter Beifahrerkasten für den Beifahrer auch bei einem SiFrontlenker in Anwendung gebracht sind, wobei in letzterem Fall eine übliche Zugstange mit einer eingebauten Druckfeder, welche einem Auseinanderziehen der beiden Zugstangenhälften entgegenwirkt (vgl. Fig. 23a), wirksam zwischen der Vorderseite des Beifahrerkastens und dem Fahrzeugvorderteil angeordnet bzw. angelenkt ist.

Umgekehrt kann ein SiPKW auch entsprechend einem SiFrontlenker gemäß Fig. 21 mit Stoßdämpfer-Federeinheiten 265,266', deren Stoßdämpfer in beiden Richtungen eine durch eine Drossel gesteuerte bzw. bestimmte Dämpfkraft bewirken, ausgestattet sein.

Auch kann ein Schutzbügel für die Insassen eines SiOmnibusses oder SiKleinbusses in einem, eine Sitzlehne für mehrere Personen durchringenden Rohr gelagert sein, wobei dann die Lehne entsprechend der Darstellung Fig. 12a ausgebildet ist und wobei dann zweckmäßigerweise wieder Einzelsitze gemäß Fig. 12 in Anwendung gebracht sind, die jeder einzeln in einen Kindersitz verwandelt werden können.

Dabei ist in Bezug auf die Darstellung Fig. 12a noch zu erwähnen, daß hier ein zwischen dem Ausstellkeil 417 und der Kopfstütze 436 vorgesehenes Rückenpolster zweckmäßigerweise auf der Oberseite einer entsprechend ausgebildeten Brücke 424 (bzw. bei einer Lehne für mehrere Personen auf den Oberseiten der für jede einzelne Person vorgesehenen Brücken) befestigt ist.

Eine Schutzabdeckung für ein SiKrad zwischen einem am Tragrahmen des SiKrades befestigten Treibstofftank und einer Schwinge 509, die bei einem scharfen Bremsvorgang nach vorne vom Treibstofftank weggeschwenkt wird, ist in den Darstellungen Fig. 25 und 31 nur strichpunktiert dargestellt und kann stabil sein oder flexibel.

## Ansprüche

1. **Sicherheitskraftfahrzeug** bestehend aus einem Fahrzeugvorderteil und einem Fahrzeughinterteil, sowie dazugehörigen Schutzeinrichtungen **dadurch gekennzeichnet,** daß ein samt Vorderradaufhängung abschwenkbar um eine horizontale Querachse (263) an einem Fahrzeughinterteil (261) gelagertes Fahrzeugvorderteil (260) eines SiKfz'es (13, 13', 13") durch mindestens eine wirksam zwischen den beiden Fahrzeugteilen (260, 261) angeordnete Druckfeder (265) gegen einen am Hinterteil angebrachten Anschlag (264) angedrückt und in seiner normalen Schwenklage festgehalten ist, wobei mindestens ein wirksam zwischen den beiden Fahrzeugteilen angeordneter Stoßdämpfer (266 bzw. 266') vorgesehen ist, der das Zurückschwenken des Vorderteiles nach einem Abschwenken desselben dämpft.

2. Sicherheitskraftfahrzeug nach Anspruch 1 **dadurch gekennzeichnet,** daß ein das Zurückschwenken des Fahrzeugvorderteiles (260) dämpfender Stoßdämpfer (266') so ausgebildet ist, daß er auch beim Abschwenken des Vorderteiles eine durch mindestens eine Drossel (511) steuerbare Dämpfkraft bewirkt oder daß zusätzlich zu einem Stoßdämpfer (266), der nur das Zurückschwenken des Vorderteiles dämpft, mindestens ein wirksam zwischen den beiden Fahrzeugteilen (260, 261) angeordneter Stoßdämpfer (266") vorgesehen ist, der nur beim Abschwenken des Vorderteiles eine durch mindestens eine Drossel (511) steuerbare Dämpfkraft bewirkt, während er beim Zurückschwenken des Vorderteiles eine dem Öldruck in seinem Druckbehälter ($L_1$) entsprechende Druckkraft bewirkt.

3. Sicherheitskraftfahrzeug nach Anspruch 1 und 2 **dadurch gekennzeichnet,** daß ein jeweils das Zurückschwenken des Fahrzeugvorderteiles (260) dämpfender, einfach wirkender Stoßdämpfer (266) oder ein in beiden Richtungen wirkender Stoßdämpfer (266') zusammen mit einer Druckfeder (265) zu einer Stoßdämpfer- Federeinheit (265, 266 oder 265, 266') kombiniert ist und daß zweckmäßigerweise beidseits des SiKfz'es Stoßdämpfer-Federeinheiten (265, 266 oder 265, 266') mit einfach wirkenden Stoßdämpfern (266) oder mit doppelwirkenden Stoßdämpfern (266') angebracht sind und daß bei Einheiten, deren Stoßdämpfer (266) nur das Zurückschwenken des Vorderteiles dämpfen, gegebenenfalls auch ein hier zusätzlich in Anwendung gebrachter Stoßdämpfer (266"), der nur das Abschwenken des Vorderteiles dämpft, zusammen mit einer Druckfeder (265) zu einer Stoßdämpfer-Federeinheit (265, 266") kombiniert ist.

4. Sicherheitskraftfahrzeug nach Anspruch 2 **dadurch gekennzeichnet,** daß die Dämpfkraft eines Stoßdämpfers (266' bzw. 266"), über den das Abschwenken des Fahrzeugvorderteiles (260) gedämpft ist, beim Einschieben seines Kolbens (513 bzw. 513') in seine Hochdruckkammer (H) über eine Steuereinheit (560) gesteuert ist, wobei in der Steuereinheit in Öldurchflußrichtung gesehen eine Drossel (511) und parallel dazu eine Drossel (556) mit einem dahinter angeordneten Druckregelventil (557) vorgesehen sind und wobei hinter dieser Anordnung eine weitere Drossel (559) vor einer Anschlußleitung zu einem Druckbehälter ($L_1$) bzw. zu einer kolbenstangenseitigen Kammer ($L_2$) des Stoßdämpfers in den Steuerkreis eingebaut ist und wobei zwischen der Hochdruckkammer und dieser Anschlußleitung ein Überdruckventil (558) vorgesehen ist, welches über eine eingangsseitige Steuerleitung bei einem bestimmten Maximaldruck in der Hochdruckkammer seinen Durchgang öffnet, so daß ein Abschwenken des Vorderteiles bei einem heftigen Aufprall erleichtert

ist, während sich die Dämpfkraft des Stoßdämpfers bei einem scharfen Bremsvorgang über das Druckregelventil (557) automatisch den Fahrbahnverhältnissen anpaßt.

5. Sicherheitskraftfahrzeug nach Anspruch 1 **dadurch gekennzeichnet,** daß als Endlagendämpfung in einer oberen Anschlagschwenkstellung des Fahrzeugvorderteiles (260) jeweils ein Schwingmetallpuffer (318) wirksam zwischen einem Tragarm (387) bzw. einer Stütze (312) des Vorderteiles und einem Anschlag (264) des Fahrzeughinterteiles (261) angeordnet ist, wobei der Schwingmetallpuffer zweckmäßigerweise im Tragarm bzw. in der Stütze eingesetzt und befestigt ist und so angeordnet bzw. ausgelegt ist, daß ein harter Anschlag des Tragarmes bzw. der Stütze gegen den Anschlag des Hinterteiles beim Zurückschwenken des Vorderteiles verhindert ist.

6. Sicherheitskraftfahrzeug nach Anspruch 5 **dadurch gekennzeichnet,** daß es als Personenkraftwagen bzw. Frontlenker-Lastkraftwagen ausgebildet ist und daß als zusätzliche Endlagendämpfung in der oberen Anschlagschwenkstellung des Fahrzeugvorderteiles (260) jeweils zusätzlich zu einem Schwingmetallpuffer (318) ein Endlagenstoßdämpfer (540) mit Niveauausgleich zwischen dem Tragarm (387) bzw. der Stütze (312) des Vorderteiles und dem Anschlag (264) des Fahrzeughinterteiles (261) angeordnet ist, wobei der Endlagenstoßdämpfer zweckmäßigerweise am Tragarm bzw. an der Stütze angeflanscht ist und mit einem unter Gasdruck stehenden Druckbehälter (549), sowie mit einem, aus einem Kolben (542) und einem Pumpenstössel (541) bestehenden Stössel (541, 542) ausgestattet ist und aufgrund üblicher Schwingungen des Vorderteiles während der Fahrt über seinen Pumpenstössel einen dem Zuladegewicht des Fahrzeuges entsprechenden Druck im Druckbehälter erzeugt, so daß der unter diesem Druck stehende Kolben (542) des Stössels mit einer entsprechenden Druckkraft über ein Tellerfederpaket (543) oder direkt über einen durch den Innenraum des Federpaketes hindurchgeführten Zapfen gegen einen Druckbolzen (544) und über denselben gegen den Anschlag (264) des Hinterteiles einwirkt und daß in einer, der Normallage des Vorderteiles entsprechenden Axialstellung des Stössels (541, 542) ein Ölrückfluß aus dem Druckbehälter (549) in einen drucklosen Behälter (550) ermöglicht ist.

7. Sicherheitskraftfahrzeug nach Anspruch 2, 5 und 6 **dadurch gekennzeichnet,** daß es als Personenkraftwagen bzw. Frontlenker-Lastkraftwagen ausgebildet ist und daß bei einem zusätzlich in Anwendung gebrachten Stoßdämpfer (266"), der nur das Abschwenken des Fahrzeugvorderteiles (260) dämpft, während er beim Zurückschwenken des Vorderteiles eine dem Öldruck in seinem Druckbehälter ($L_1$) entsprechende Druckkraft bewirkt, zwischen seinem Druckbehälter und dem Druckbehälter (549) des Endlagenstoßdämpfers (540) ein Druckübersetzer (561) wirksam angebracht ist, wobei der Druckbehälter ($L_1$) des Stoßdämpfers (266") mit einem unter Gasdruck oder Federdruck stehenden Druckbehälter ($L_3$) des Druckübersetzers und der Druckbehälter (549) des Endlagenstoßdämpfers (540) mit einer Druckkammer (R) des Druckübersetzers in Verbindung gebracht ist und daß der mit einem Doppelkolben (562) ausgestattete Druckübersetzer so ausgebildet ist, daß sich bei einem Druckanstieg in seiner Druckkammer (R) das Füllvolumen in seinem Druckbehälter ($L_3$) entgegen der Krafteinwirkung der Gasfüllung bzw. der Druckfeder vergrößert, so daß Öl vom Druckbehälter ($L_1$) des Stoßdämpfers in den Druckbehälter ($L_3$) des Druckübersetzers fließt, wodurch sich die Druckkraft des Stoßdämpfers (266") verringert, so daß ein durch ein höheres Ladegewicht erschwertes Abschwenken des Vorderteiles durch die verringerte Druckkraft des Stoßdämpfers wieder erleichtert und ein gewisser Ausgleich geschaffen ist.

8. Sicherheitskraftfahrzeug nach Anspruch 1 **dadurch gekennzeichnet**, daß es als Personenkraftwagen bzw. Frontlenker-Lastkraftwagen ausgebildet ist und daß eine Windschutzscheibe (26) (13) bzw. (13') um eine vertikale Schwenkachse eines Wischbügels (33) gewölbt ist, wobei der Wischbügel in einem doppelwandigen, durch einen Deckel (39) abgedeckten Dach gelagert ist, das gegebenenfalls zu einem Vordach ausgebildet über die Windschutzscheibe hinausgezogen ist, wobei dann eine Regenwasserauffangwanne (159) über der Windschutzscheibe in einen Dachboden (280) eingeformt ist, während im vorderen Teil des Vordachbodens eine weitere Wanne (240) zum Auffangen von Regenwasser mit am Grund der Wanne angebrachten Ablauflöchern (242) eingeformt ist, wobei der Grund von außen nach innen ein Gefälle aufweist und daß das doppelwandige Dach zumindest bei einem Sicherheits-Personenkraftwagen zu einem Vordach über einer Heckscheibe (26a) mit einem eigenen Deckel (39a) und einer Regenwasserauffangwanne (159a) ausgebildet ist, wobei in dieser Wanne ein Wasserbehälter (77'), sowie ein Getriebmotor für den Antrieb des Wischbügels (33) eingebaut sind und wobei gegebenenfalls auch ein Wischbügel (33a) für eine um seine vertikale Achse gewölbte Heckscheibe (26a) in üblicher Weise an diesen Antrieb angekoppelt ist und daß eine übliche, automatische Wassereinspritzeinrichtung im Dach untergebracht ist, über welche intervallmäßig Wasser in das Dach einspritzbar ist.

9. Sicherheitskraftfahrzeug nach Anspruch 1 **dadurch gekennzeichnet**, daß es als Personenkraftwagen bzw. Frontlenker-Lastkraftwagen ausgebildet ist und daß beidseits des Fahrzeuges Spiegeleinrichtungen (20) angebracht sind, wobei zwischen der Spiegeleinrichtung und einem Halter (12, 17, 18) mit einer nach unten ragenden Schwenkachse (17) für die Schwenklagerung des Halters und einer nach oben ragenden Achse (18) für die Schwenklagerung der Spiegeleinrichtung um den Halter eine Einrasteinrichtung (300) mit einer an der Unterseite der Spiegeleinrichtung schwenkbar gelagerten, als beidarmig wirkender Hebel ausgebildeten Klinke (302) vorgesehen ist und wobei durch die Klinke über die nach oben ragende Achse des Halters eine formschlüssige Verbindung zwischen der Spiegeleinrichtung und dem Halter ermöglicht ist, indem ein als Leiste ausgebildeter Anschlag (306) an der Innenseite zweier für die Schwenklagerung der Klinke vorgesehener Lageraugen (301) befestigt ist und einen Anschlag gegen die Außenseite des Halters bildet, während der innere Hebelarm der Klinke den Halter auf seiner Unterseite umfaßt und mit einer nach oben abgewinkelten, ballig ausgebildeten, gegen die Innenseite des Halters gerichtete Stirnfläche (307) versehen ist, so daß die Stirnfläche mittels einer Druckfeder (304), die zwischen einem Rahmenboden (89) der Spiegeleinrichtung und einem äußeren, mit einem Kugelknopf (305) versehenen Hebelarm der Klinke wirksam angeordnet ist, über eine für die Lagerung der Klinke vorgesehene Schwenkachse (303) nach oben gegen eine an der Innenseite des Halters vorgesehene Schräge angedrückt ist und einen Anschlag gegen die Innenseite des Halters bildet und daß der Halter über seine nach unten ragende Schwenkachse (17) in einem seitlich an einem vorderen Ansatz (293) des Fahrzeughinterteiles (261) befestigten Lagergehäuse (19) gelagert ist, wobei zwischen dem Halter und dem Lagergehäuse in einer üblichen Raststellung (R) einer Türe (103) eine übliche Einrastvorkehrung und in einer üblichen Anschlagstellung (A) der Türe ein Anschlag vorgesehen ist und daß ein zwischen der Türe und der Spiegeleinrichtung angelenkter Gelenkhebel (21) in üblicher Weise so ausgebildet ist, daß seine Gelenkköpfe entgegen der Krafteinwirkung einer im Hebel untergebrachten Druckfeder zueinander verschiebbar sind.

10. Sicherheitskraftfahrzeug nach Anspruch 1 **dadurch gekennzeichnet**, daß es als Personenkraftwagen bzw. Frontlenker-Lastkraftwagen ausgebildet ist und daß ein für einen Fahrer (3) vorgesehenes Lenkrad (350) über seine Lenksäule (359) axial verschiebbar gelagert ist, wobei das Lenkrad über eine auf die Lenksäule einwirkende Druckfeder (360), deren entgegengesetztes Federende gegen die vordere Stirnseite des Fahrzeughinterteiles (261) einwirkt, in eine hintere Anschlagstellung gedrängt ist und wobei eine als Druckfeder ausgebildete Gegenfeder (358 bzw. 358') vorgesehen ist, die mit zunehmendem Abschwenkwinkel des Fahrzeugvorderteiles (260) mit zunehmender Druckkraft auf das vordere Ende der Lenksäule einwirkt und das Lenkrad entgegen der Krafteinwirkung der Druckfeder (360) in eine vordere Anschlagstellung drängt und daß zwischen dem vorderen Ende der Lenksäule und einem üblichen, am Fahrzeugvorderteil angebrachten Lenkmechanismus eine übliche, ausziebare Gelenkwelle (361 bzw. 336) kardanisch gelagert ist.

11. Sicherheitskraftfahrzeug nach Anspruch 10 **dadurch gekennzeichnet,** daß es als Personenkraftwagen ausgebildet ist und daß die als Druckfeder ausgebildete Gegenfeder (358) wirksam zwischen einem an der Rückseite des Fahrzeugvorderteiles (260) an dessem stabilen Rahmen angebrachten oberen Querträger (521) und einem nach vorne abstehenden unteren Hebelarm eines schwenkbar an der vorderen Stirnseite des Fahrzeughinterteiles (261) gelagerten, beidarmig wirkenden Winkelhebels (355) angelenkt ist, während ein nach oben abstehender oberer Hebelarm des Winkelhebels am vorderen Ende der Lenksäule (359) angelenkt ist.

12. Sicherheitskraftfahrzeug nach Anspruch 10 **dadurch gekennzeichnet,** daß es als Frontlenker-Lastkraftwagen ausgebildet ist und daß die als Druckfeder ausgebildete Gegenfeder (358') wirksam zwischen den beiden Wellenhälften der zwischen der Lenksäule (359) und dem Lenkmechanismus kardanisch gelagerten Gelenkwelle (336) untergebracht ist, wobei die beiden Wellenhälften in üblicher Weise so ausgebildet sind, daß die Gegenfeder einem Auseinanderziehen der Wellenhälften entgegenwirkt.

13. Sicherheitskraftfahrzeug nach Anspruch 1 **dadurch gekennzeichnet,** daß es als Personenkraftwagen bzw. Frontlenker-Lastkraftwagen ausgebildet ist und daß ein für einen Beifahrer (108) vorgesehener Beifahrerkasten (375) abschwenkbar nach vorne um eine auf seiner Unterseite horizontal angeordnete Querachse (376) gelagert ist, wobei der Beifahrerkasten eine um diese Querachse gewölbte Oberseite aufweist und über eine an seiner Unterseite angelenkte Druckfeder (377), deren entgegengesetztes Federende an der vorderen Stirnseite des Fahrzeughinterteiles (261) angelenkt ist, in eine hintere Anschlagschwenkstellung gedrängt ist und daß eine als Druckfeder ausgebildete Gegenfeder (378) vorgesehen ist, die mit zunehmendem Abschwenkwinkel des Fahrzeugvorderteiles (260) mit zunehmender Druckkraft auf die Vorderseite des Beifahrerkastens einwirkt und den Beifahrerkasten entgegen der Krafteinwirkung der Druckfeder (377) in eine vordere Anschlagschwenkstellung drängt.

14. Sicherheitskraftfahrzeug nach Anspruch 13 **dadurch gekennzeichnet,** daß es als Personenkraftwagen ausgebildet ist und daß die als Druckfeder ausgebildete Gegenfeder (378) wirksam zwischen einem beifahrerseitigen Tagarm (387) bzw. dem oberen Querträger (521) des Fahrzeugvorderteiles (260) und einem vorderen Schwenkende eines schwenkbar an der vorderen Stirnseite des Fahrzeughinterteiles (261) gelagerten Hebels (379) angelenkt ist, wobei zwischen dem vorderen Schwenkende des Hebels und der Vorderseite des Beifahrerkastens (375) eine Zugstange (381) jeweils mit ihren Enden angelenkt ist.

15. Sicherheitskraftfahrzeug nach Anspruch 13 **dadurch gekennzeichnet,** daß es als Frontlenker-Lastkraftwagen ausgebildet ist und daß eine als Druckfeder ausgebildete Gegenfeder in einer üblichen, aus zwei Hälften bestehenden ausziehbaren Zugstange untergebracht ist, wobei die beiden Zugstangenhälften so ausgebildet sind, daß die Gegenfeder einem Auseinanderziehen der beiden Zugstangenhälften entgegenwirkt und daß die Zugstange mit ihren Enden einerseits am Fahrzeugvorderteil (260) und andererseits an der Vorderseite des Beifahrerkastens (375) angelenkt ist.

16. Sicherheitskraftfahrzeug nach Anspruch 1 **dadurch gekennzeichnet,** daß es als Personenkraftwagen bzw. Frontlenker-Lastkraftwagen ausgebildet ist und daß für die Fahrzeuginsassen ein aus einer horizontal angeordneten Querachse (351 bzw. 351a) und zwei Armen (344 bzw. 344a) bestehender Schutzbügel vorgesehen ist, wobei die Arme an den Enden der Querachse radial abstehend einerseits über eine Rasterscheibe (365') und andererseits über eine Nockenscheibe (445) an der Querachse befestigt sind und wobei die Querachse etwa in Nackenhöhe einer mittelgroßen Person schwenkbar und axial verschiebbar in einem, eine Sitzlehne (372) durchringenden Rohr (369) oder in einem hinter einer Sitzlehne (420) mittelbar oder unmittelbar am Fahrzeughinterteil (261) befestigten Lagergehäuse (439) gelagert ist und daß der Schutzbügel durch einen mittelbar oder unmittelbar am Fahrzeughinterteil axial verschiebbar gelagerten, stangenförmig ausgebildeten Auslöser (348'), der mit seinem oberen Stangenende mittels einer Druckfeder (364) in Eingriff zu seiner Rasterscheibe gehalten ist, in seiner Bereitschafts-Schwenkstellung festgehalten ist, wobei zwischen dem unteren Stangende des Auslösers und einem für die Schwenklagerung des Fahrzeugvorderteiles (260) vorgesehenen Lagerauge (279) ein üblicher Bowdenzug (262 bzw. 262a) wirksam angelenkt ist, so daß der Eingriff zwischen dem Auslöser und der Rasterscheibe durch Abschwenken des Vorderteiles entgegen der Krafteinwirkung der Druckfeder (364) lösbar ist und der Schutzbügel mittels einer koaxial zu seiner Querachse angeordneten, als Druckfeder ausgebildeten gewundenen Biegefeder (368') durch deren Umfangskraft in eine Gebrauchs-Schwenkstellung abschwenkbar ist, wo durch eine mittelbar oder unmittelbar am Hinterteil befestigte Anschlageinrichtung (440) und eine an der Nockenscheibe des Bügels angeformte Anschlagnase (446) ein Anschlag für den Bügel gebildet ist und daß für das Wiederhochschwenken des Bügels ein in der Sitzlehne (372) untergebrachter Getriebemotor (448) bzw. ein mittelbar oder unmittelbar am Hinterteil befestigter Getriebemotor (448a) mit einer an seinem Wellenende befestigten Kurbel (443, 444) vorgesehen ist, wobei der Getriebemotor über einen üblichen Kurbeltrieb (443, 444, 537, 538) jeweils durch eine Umdrehung seiner Kurbel über eine axial verschiebbar gelagerte Druckstange (538) des Kurbeltriebes und eine an der Nockenscheibe des Bügels angeformte Nocke (445) das Wiederhochschwenken des Bügels in seine Bereitschafts- Schwenkstellung bewirkt und daß die Wirkverbindung zwischen der Nocke und der Einrichtung zum Wiederhochschwenken des Bügels durch axiales Verschieben des Bügels bei gleichzeitigem Lösen des Eingriffs zwischen seiner Rasterscheibe und dem Auslöser unterbunden ist, indem dann die Nocke in einer Axialstellung des Bügels, in welcher dessen Rasterscheibe mit ihrer äußeren Stirnseite durch die Axialkraft der gewundenen Biegefeder (368') gegen das obere Stangenende des Auslösers angedrückt ist, in eine axial versetzte Lage zur Druckstange (538) des Kurbeltriebes gebracht ist und daß bei einem Schutzbügel für Fondinsassen in einer hier vorgesehenen äußersten Axialstellung des Bügels auch die Wirkverbindung zwischen der Anschlageinrichtung (440) und der an der Nockenscheibe angeformten Anschlagnase (446) unterbunden ist, indem dann die Anschlagnase in eine axial versetzte Lage zu einem Anschlagbolzen (455) der Anschlageinrichtung gebracht ist und wobei dann der Anschlagbolzen einen axial wirkenden Anschlag gegen die Anschlagnase bildet und den Bügel entgegen der Druckkraft der gewundenen Biegefeder (368') in seiner Axiallage festhält.

17. Sicherheitskraftfahrzeug nach Anspruch 16 **dadurch gekennzeichnet,** daß die Arme (344 bzw. 344a) eines Schutzbügels in einer Beereitschafts- Schwenkstellung desselben in Längsrichtung einer Lehne (372 bzw. 420) oder vertikal nach oben abstehend an ihrer Querachse (351 bzw. 351a) befestigt sind, wo sie dicht unter dem Dachboden nach vorne abgewinkelt sind und daß an den vorderen Schwenkenden eines Schutzbügels für Fondinsassen eine gut abgepolsterte Querstrebe (433, 434) zwischen den Armen befestigt ist, wobei die Arme auch zweiteilig ausgebildet sein können, indem zwischen den nach oben abstehenden Armschenkeln (344' bzw. 344a') und den nach vorne abstehenden Armschenkeln (344" bzw. 344a") eine gut abgepolsterte, horizontal angeordnete Querachse (563 bzw. 563a) angebracht ist, an deren Enden die beiden nach vorne abstehenden Armschenkel befestigt sind und um welche dieselben schwenkbar um die oberen Schwenkenden der nach oben abstehenden Armschenkel gelagert sind und daß hinter der Querachse des Schutzbügels an den Außenseiten der Lehne zwei horizontal nach außen abstehende Achsbolzen (565 bzw. 565a) über je zwei Stege am Rohr (369) für die Lagerung des Bügels befestigt bzw. an den Lagerflanschen des Lagergehäuses (439) angeflanscht sind und daß an den Achsbolzen zwei Zugstangen (564) angelenkt sind, wobei die Zugstangen jeweils über übliche Gelenkköpfe mit ihrem unteren Ende schwenkbar an einem Achsbolzen und mit ihrem oberen Ende schwenkbar um eine horizontale Querachse an einem nach vorne abstehenden Armschenkel gelagert sind, so daß die nach vorne abstehenden Armschenkel entsprechend dem gewählten Abstand zwischen der Querachse (563 bzw. 563a) für die Schwenklagerung der nach vorne abstehenden Armschenkel und den Anlenkpunkten der Zugstangen an diesen Armschenkeln beim Abschwenken des Schutzbügels mehr oder weniger gegen die Lehne angeschwenkt werden und daß zwischen den nach vorne abstehenden Armschenkeln der einteilig ausgebildeten Arme (344 bzw. 344a) bzw. der zweiteilig ausgebildeten Arme (344', 344" bzw. 344a', 344a") jeweils ein Auffangnetz (345 bzw. 345a) aufgespannt ist, welches gegebenenfalls mit seinen Rändern auch an einer Querstrebe (433, 434) bzw. an der Querachse (563 bzw. 563a) für die Schwenklagerung der nach vorne abstehenden Armschenkel befestigt ist und daß bei einteilig ausgebildeten Armen (344a) eines hinteren Schutzbügels statt einer Querachse (563a) ein elastischer Querstrang (435) zwischen den Knickstellen der Arme aufgespannt ist und daß an den äußeren, nach oben abstehenden Armschenkeln jeweils ein Schläfenschutzbügel (520 bzw. 520a) in geeigneter Höhe anmontiert ist, wobei der Schläfenschutzbügel jeweils über einen an seiner Vorderseite befestigten Halter aus Federstahl oder einen entsprechend nachgiebig ausgebildeten Halter an der Innenseite des äußeren Armes angebracht ist.

18. Sicherheitskraftfahrzeug nach Anspruch 16 und 17 **dadurch gekennzeichnet,** daß hinter einer nach vorne abschwenkbar gelagerten Rücksitzlehne (420) für Fondinsassen bzw. unterhalb eines Lagergehäuses (439) für einen hinteren Schutzbügel ein Regal (438) am Fahrzeughinterteil (261) befestigt ist, wobei das Regal für einen Sicherheits-Personenkraftwagen (13) zweckmäßigerweise so ausgebildet ist, daß auch ein Reserverad (450) im Regal unterbringbar ist und daß zwischen dem Regal und einem heckseitig angeordneten Antriebsraum (262) eine Trennwand (286) angebracht ist, in der gegebenenfalls eine durch eine abnehmbare Abdeckung abgedichtete Öffnung vorgesehen ist, so daß der Antriebsraum auch vom Fahrzeuginnenraum aus zugänglich gemacht ist.

19. Sicherheitskraftfahrzeug nach Anspruch 1 **dadurch gekennzeichnet,** daß es als Personenkraftwagen ausgebildet ist und daß die horizontale Querachse (263) durch zwei auf den Außenseiten des Fahrzeuges angebrachte, zueinander fluchtende Achsbolzen (263) gebildet ist, wobei die Achsbolzen dicht unter einer Windschutzscheibe (26) möglichst im hinteren Bereich eines an üblicher Stelle angeordneten Armaturenbrettes jeweils fest zwischen zwei vom stabilen Rahmen des Fahrzeughinterteiles (261) nach vorne abstehenden Lagerstegen (278) gelagert sind und daß für die Schwenklagerung des Fahrzeugvorderteiles (260) um diese Achsbolzen zwei vom stabilen Rahmen des Vorderteiles nach hinten abstehende, an einem oberen Querträger (521) des Vorderteiles befestigte Tragarme (387), an deren hinteren Enden jeweils ein Lagerauge (279) befestigt ist, vorgesehen sind und daß als Anschlag (264) für das Vorderteil in dessen Normalschwenkstellung beidseits ein die Lagerstege überbrückender, gegen den jeweils zugeordneten Tragarm gerichteter Querriegel (264) vorgesehen ist, während als Anschlag in der unteren Endschwenkstellung des Vorderteiles beidseits Schwingmetallpuffer (284) vorgesehen sind, wobei diese Schwingmetallpuffer an der vorderen Stirnseite des Hinterteiles an einem, am stabilen Rahmen des Hinterteiles angebrachten unteren Querträger (522) befestigt sind und gegen beidseits am Rahmen des Vorderteiles angebrachte Vertikalstützen (536), die vom oberen Querträger (521) des Vorderteiles nach unten gezogen sind, gerichtet sind.

20. Sicherheitskraftfahrzeug nach Anspruch 1, 3 bis 7 und 19 **dadurch gekennzeichnet**, daß es als Personenkraftwagen ausgebildet ist und daß das Fahrzeugvorderteil (260) als Gepäckraum mit einer üblichen, nach hinten aufklappbaren Fronthaube (106) ausgebildet ist und daß in Anwendung gebrachte Stoßdämpfer- Federeinheiten (265, 266), deren Stoßdämpfer (266) nur das Zurückschwenken des Vorderteiles dämpfen, zusammen mit mindestens einem Stoßdämpfer (266″), über den die Dämpfkraft beim Abschwenken des Vorderteiles gesteuert ist oder Stoßdämpfer-Federeinheiten (265, 266′), deren Stoßdämpfer (266′) in beiden Richtungen eine durch mindestens eine Drossel bestimmte bzw. gesteuerte Dämpfkraft bewirken, in vertikaler Einbaulage jeweils wirksam zwischen dem oberen Querträger (521) an der Hinterseite des Vorderteiles und dem unteren Querträger (522) an der Vorderseite des Fahrzeughinterteiles (261) angeordnet bzw. angelenkt sind.

21. Sicherheitskraftfahrzeug nach Anspruch 1 **dadurch gekennzeichnet**, daß es als Frontlenker-Lastkraftwagen ausgebildet ist und daß die horizontale Querachse (263) durch zwei auf den Außenseiten des Fahrzeuges angebrachte, zueinander fluchtende Achsbolzen (263) gebildet ist, wobei die Achsbolzen hinter der Fahrerkabine des Fahrzeughinterteiles (261) und oberhalb der vorderen Stirnseite eines am Fahrzeugvorderteil (260) angebrachten, nach vorne abstehenden Gepäckkastens (314) jeweils fest zwischen einer nach innen gezogenen Stützwand (322) eines dadurch gebildeten Schachtes (321) in der Außenwand des Hinterteiles und einer den Schacht überbrückenden Lagerplatte (323) gelagert sind und daß für die Schwenklagerung des Vorderteiles um diese Achsbolzen zwei von seitlich angeordneten, unter der Fahrerkabine nach hinten geführten Trägern (311) vertikal nach oben abstehende Stützen (312) mit an den oberen Enden befestigten Lageraugen (279) vorgesehen sind, wobei die Stützen in den erwähnten, entsprechend dem vorgesehenen Abschwenkwinkel des Vorderteiles ausgebildeten seitlichen Schächten des Hinterteiles untergebracht sind und daß der Gepäckkasten nach vorne abschwenkbar und abnehmbar zwischen den seitlichen, spiegelbildlich ausgeführten Trägern (311), an denen beidseits Kotflügel (310) befestigt sind, an deren Vorderseite gelagert ist, wobei zwischen den Trägern eine quer unter der Fahrerkabine hindurchgeführte Traverse (316) befestigt ist und daß als Anschlag (264) für das Vorderteil in dessen Normalschwenkstellung beidseits ein Anschlagklotz (264) an der unteren Rückseite der Fahrerkabine innerhalb der Schächte (321) gegen die Stützen (312) des Vorderteiles angebracht ist, während als Anschlag in der unteren Endschwenkstellung des Vorderteiles beidseits Schwingmetallpuffer (284) an den hinteren Wandungen (325) der Schächte an deren Unterseite befestigt sind, wobei die Schwingmetallpuffer gegen die Hinterseite der Stützen gerichtet sind und daß vor den Kotflügeln auswechselbare Frontteile (313) zweckmäßigerweise an den entsprechend ausgebildeten Trägern (311) befestigt sind und daß eine vordere Stoßstange (315) über entsprechend nachgiebig ausgebildet Verbindungteile (317) ebenfalls an den Trägern befestigt ist.

22. Sicherheitskraftfahrzeug nach Anspruch 1, 3 bis 7 und 21 **dadurch gekennzeichnet**, daß es als Frontlenker-Lastkraftwagen ausgebildet ist und daß in Anwendung gebracht Stoßdämpfer- Federeinheiten (265, 266), deren Stoßdämpfer (266) nur das Zurückschwenken des Fahrzeugvorderteiles (260) dämpfen, zusammen mit mindestens einem Stoßdämpfer (266″), über welchen die Dämpfkraft beim Abschwenken des Vordeteiles gesteuert ist oder Stoßdämpfer-Federeinheiten (265, 266′), deren Stoßdämpfer (266′) in beiden Richtungen eine durch mindestens eine Drossel bestimmte bzw. gesteuerte Dämpfkraft bewirken, in horizontaler Einbaulage jeweils wirksam zwischen einer hinteren Stirnseite eines Trägers (311) bzw. einer hinteren Stirnseite der Traverse (316) und einer von der Bodenfläche des Fahrzeuginnenraumes nach unten abstehenden Stützwand (340) angeordnet bzw. angelenkt sind.

23. Sicherheitskraftfahrzeug nach Anspruch 16 **dadurch gekennzeichnet**, daß für eine Sitzlehne (372 bzw. 420), bei der für die Lagerung eines Schutzbügels ein die Lehne durchdringendes Rohr (369) vorgesehen ist, jeweils pro Fahrzeuginsasse eine um das Rohr schwenkbar gelagerte Kopfstütze (436) vorgesehen ist, wobei der Kern der Kopfstütze in seiner Dicke der Dicke der Lehne entspricht und wobei die Kopfstütze auf der Vorderseite ein tangential vom Kern abstehendes Kopfteil aufweist, das in seiner Dicke maximal der halben Dicke der Lehne entspricht und wobei in der Lehne eine der Breite der Kopfstütze entsprechende Aussparung vorgesehen ist, die auf der Rückseite der Lehne entsprechend der Länge des Kopfteiles nach unten gezogen ist und im unteren Teil der Dicke des Kopfteiles entspricht, so daß die Kopfstütze außen bündig in die nach unten gezogene Aussparung der Lehne einschwenkbar ist und daß eine übliche Arretiereinrichtung für die beiden Endlagen der Kopfstütze an der Oberseite der Lehne am Rohr (369) befestigt ist, wobei die Kopfstütze ein entsprechend stabil ausgebildetes Gegenlager für die Arretiereinrichtung besonders in ihrer Gebrauchslage aufweist.

24. Sicherheitskraftfahrzeug nach Anspruch 1 **dadurch gekennzeichnet**, daß es als Personenkraftwagen bzw. Frontlenker-Lastkraftwagen ausgebildet ist und daß für einen Mitinsassen ein aus einer Sitzplatte (392) und einem darauf angebrachten Sitzpolster (390) bestehender Sitz (390, 392) vorgesehen ist, wobei der Sitz über beidseits an seiner Sitzplatte befestigte Lagerflansche (393 u. 393a) in Fahrrichtung hochschwenkbar um eine obere Querachse (395) eines, von einem Kind (408) aus gesehen, hinteren, aus zwei Querachsen (395 u. 396) und zwei Stützen (394 u. 394a) bestehenden Stützbügels gelagert ist und daß dieser Stützbügel in Gegenfahrrichtung hochschwenkbar um seine untere Querachse (396) in einer Sitzwanne (400 bzw. 400') gelagert ist, wobei an der Sitzplatte eine Anschlagfläche (428) gegen die beiden Stützen des hinteren Stützbügels angeformt ist, so daß der auf der Unterseite seiner Sitzplatte mit einer gepolsterten Kinderlehne (391) ausgestattete Sitz in einer dadurch gebildeten Anschlagschwenkstellung eine Lehne für das Kind bildet und daß an der Sitzwanne eine ebenfalls gegen die Stützen des hinteren Stützbügels gerichtete Anschlagfläche (429) angeformt ist, so daß der hintere Stützbügel in einer geeigneten Schräglage gehalten ist und daß auf der Unterseite des mit einer Kinderlehne versehenen Sitzes ein aus einer Sitzplatte (427) und einem darauf angebrachten Kindersitzpolster (406) bestehender Klappsitz (406, 427) abschwenkbar um die obere Querachse (395) des hinteren Stützbügels gelagert ist, wobei für die Schwenklagerung des Klappsitzes beidseits Lagerlaschen (413) an der Sitzplatte des Klappsitzes befestigt sind und wobei die Lagerlaschen nach oben abstehend so an dieser Sitzplatte befestigt sind, daß sie ein Abschwenken des Klappsitzes über eine bestimmte, untere Gebrauchsschwenkstellung hinaus nach unten verhindern, indem sie hier einen Anschlag gegen die Anschlagfläche (428) der Sitzplatte (392) des Sitzes (390, 392) bilden und daß an der Vorderseite des Klappsitzes ein schwenkbar um eine obere Querachse (403) gelagerter, aus zwei Querachsen (403 u. 404) und zwei Stützen (402) bestehender vorderer Stützbügel über seine obere Querachse und zwei für die Lagerung derselben vorgesehene Lageraugen (409) an der Unterseite der Sitzplatte des Klappsitzes befestigt ist, wobei für die Schwenklagerung des vorderen Stützbügels um seine untere Querachse (404) in einer oberen, normalen Gebrauchsschwenkstellung des Klappsitzes beidseits Rasten (405) so in der Sitzwanne befestigt sind, daß auch der entprechend ausgebildete vordere Stützbügel in Gegenfahrrichtung hochschwenkbar in den in geeigneter Schräglage angebrachten Einschnitten (431) der Rasten gelagert ist und daß an der Sitzwanne eine die Schwenkbarkeit des vorderen Stützbügels begrenzende, gegen die Stützen (402) gerichtete Anschlagkante (414) angeformt ist, wobei an der Sitzwanne beidseits jeder Stütze Laschen angebracht sind, welche bis knapp vor die Stützen nach hinten gezogen sind oder dieselben überlappen und daß für die Arretierung des Sitzes (390, 392) in seiner Gebrauchsschwenkstellung als Lehne eine übliche Arretiereinrichtung zwischen dem Sitz und dem hinteren Stützbügel vorgesehen ist, indem beispielsweise eine Stütze (394) dieses Stützbügels entgegen der Krafteinwirkung einer koaxial zu einer Querachse (396) des Bügels angeordneten Druckfeder (399) axial verschiebbar nach innen zu den Querachsen des hinteren Stützbügels gelagert und mit einem axial nach außen abstehenden Arretierbolzen (397) versehen ist, der in der Gebrauchslage des Sitzes als Lehne durch die Krafteinwirkung der Druckfeder in eine am zugehörigen Lagerflansch (393) angebrachte Radialnut (401) einrastbar ist, wobei die in Umfangsrichtung zur oberen Querachse (395) des hinteren Stützbügels verlaufende Radialnut so am Lagerflansch angebracht ist, daß eine geringe Schwenkbarkeit des als Lehne umfunktionierten Sitzes in Gegenfahrrichtung ermöglicht ist und daß eine Sitzwanne (400') zweckmäßigerweise so ausgebildet ist, daß sie unter eine Lehne (372 bzw. 420) einschiebbar ist, wobei eine übliche Längsführung und eine übliche Arretiereinrichtung zwischen der Sitzwanne und einer dafür vorgesehenen Auflagefläche (452) unterhalb der Sitzwanne angebracht ist und daß an der Sitzplatte (392) des Sitzes (390,392) beidseits der Kindersitzlehne ein Haltegurt (480) mit den Enden seiner Gurthälften befestigt ist.

25. Sicherheitskraftfahrzeug nach Anspruch 23 und 24 **dadurch gekennzeichnet**, daß es als Personenkraftwagen bzw. Frontlenker-Lastkraftwagen ausgebildet ist und daß in einer für einen Sitz (390,392) vorgesehenen Lehne (372 bzw. 420), welche schwenkbar um eine die Lehne durchdringende Querachse (416) gelagert ist, jeweils pro Sitz ein nach vorne um diese Querachse ausschwenkbar gelagerter Ausstellkeil (417) in einer entsprechenden Aussparung der Lehne untergebracht ist, wobei zwischen dem Ausstellkeil und einer rückseitigen Aussparung im oberen Teil der Lehne ein Ablagebrett (418) untergebracht ist und daß das Ablagebrett mit seiner entsprechend ausgebildeten unteren Kante ausklipsbar um eine auf der oberen Stirnseite des Ausstellkeiles befestigte Achse (422) schwenkbar gelagert ist und mit seiner oberen Kante über eine beidseits nach außen abstehende Achse (423) in üblicher Weise zwischen beidseits angebrachten, vertikal angeordneten Führungsbügeln (419) verschiebbar geführt ist, wobei das Ablagebrett etwa in der Mitte so abgeknickt ist, daß es in der Ausstellage des Ausstellkeiles eine horizontale Tischfläche bildet und daß die Führungsbügel zweckmäßigerweise auf der Unterseite einer in die rückseitige Aussparung der Lehne eingesetzten Brücke (424) befestigt sind, wobei die Brücke ihrerseits zweckmäßigerweise an der Innenseite einer für die Lehne vorgesehenen Rückwand (425) befestigt ist und daß ein üblicher Blasebalg (421) als "Kinder-Airbag" wirksam zwischen dem Ausstellkeil und der Rückwand befestigt ist.

26. Sicherheitskraftfahrzeug nach Anspruch 1 **dadurch gekennzeichnet,** daß es als Personenkraftwagen bzw. Frontlenker-Lastkraftwagen ausgebildet ist und daß auch für die Scheinwerferscheiben ein doppelwandiges Vordach mit je einer Regenwasser-Auffangwanne vorgesehen ist, wobei die Scheinwerferscheiben, falls überhaupt erforderlich, jeweils um eine vertikale Schwenkachse eines Wischbügels gewölbt sind und daß gegebenenfalls an geeigneter Stelle ein als Auswärtsblickspiegel umfunktionierter Rückblickspiegel beidseits am Fahrzeug angebracht ist, um Verkehrsampeln besser ins Auge fassen zu können wenn man dicht davor steht, so daß dadurch eine hundertprozentige Sicherheit im Straßenverkehr erzielt ist, -beim Warten auf das grüne Lichtzeichen.

27. Sicherheitskraftfahrzeug nach Anspruch 1 **dadurch gekennzeichnet,** daß es als Kraftrad ausgebildet ist und daß die horizontale Querachse (263) für die Schwenklagerung des Fahrzeugvorderteiles (260) um das Fahrzeughinterteil (261) durch einen Achsbolzen (263) gebildet ist, wobei der Achsbolzen etwa im (hinteren) Kniebereich eines Fahrers unterhalb eines an üblicher Stelle am Hinterteil angebrachten Treibstofftankes angeordnet ist und daß die Vorderradaufhängung durch eine in üblicher Schräglage schwenkbar am Vorderteil gelagerte Telegabel (501, 502, 503, 510) mit beidseits nach unten abstehenden Stoßdämpfer- Federeinheiten (510) für die übliche Befestigung eines Vorderrades gebildet ist, wobei die Einheiten wie üblich zwischen einem unteren Lagerflansch (501) und einem oberen Lagerflansch (502) und die Lagerflansche wie üblich an den Enden eines Lagerbolzens (503) der Telegabel befestigt sind und daß die Telegabel über diesen Lagerbolzen in einem am vorderen Schwenkende eines Tragarmes (387) angebrachten Lagergehäuse (500) gelagert ist, wobei der Tragarm seinerseits schwenkbar in der vertikalen Längsebenen über den Achsbolzen (263) des SiKrades an einem Tragrahmen (530) des Hinterteiles gelagert ist und daß dieser Achsbolzen zweckmäßigerweise fest zwischen beidseits am Tragarm angebrachten Lageraugen (279) und lose schwenkbar in einem am Tragrahmen des Hinterteiles angebrachten Lagerauge gelagert ist.

28. Sicherheitskraftfahrzeug nach Anspruch 27 **dadurch gekennzeichnet,** daß die beiden für die Befestigung des Vorderrades vorgesehenen Stoßdämpfer- Federeinheiten (510) der Telegabel (501, 502, 503, 510) gegenüber dem Lagerbolzen (503) der Telegabel nach vorne versetzt zwischen den Lagerflanschen (501 u. 502) der Telegabel befestigt sind und daß auf der Hinterseite des unteren Lagerflansches (501) zweckmäßigerweise in einer Flucht zum Lagerbolzen der Telegabel zwei beidseits nach oben abstehende Führungshülsen (517) an der Unterseite dieses Lagerflansches angeflanscht sind und daß in diesen Führungshülsen eine mit zwei Lenkbolzen (516) und einem Lagerbolzen (508) ausgestattete Lenkgabel (506, 507, 508, 516) über ihre Lenkbolzen axial fluchtend und verschiebbar mit ihrem Lagerbolzen zum Lagerbolzen (503) der Telegabel gelagert ist, wobei bei Lenkbolzen zwischen einem unteren Lagerflansch (506) und einem oberen Lagerflansch (507) der Lenkgabel und die Lagerflansche an den Enden des Lagerbolzens (508) der Lenkgabel befestigt sind und daß das Vorderrad auf der Hinterseite der Stoßdämpfer- Federeinheiten (510) zwischen denselben gelagert ist, so daß das Vorderrad mit seiner Lagerachse wie üblich noch etwas vor der nach unten verlängert gedachten Schwenkachse der Telegabel angeordnet ist und daß am oberen Lagerflansch (507) der Lenkgabel wie üblich eine Lenkstange (350') befestigt ist, wobei die axial verschiebbar über ihre Lenkbolzen (516) in den Führungshülsen (517) der Telegabel gelagerte Lenkgabel schwenkbar über ihren Lagerbolzen (508) in einem Lagergehäuse (504) mit einem nach hinten abstehenden Lagerarm (505) gelagert ist und wobei dieses Lagergehäuse über seinen Lagerarm schwenkbar in der vertikalen Längsebenen an einer Schwinge (509) gelagert ist, welche ihrerseits nach unten abstehend schwenkbar in der vertikalen Längsebenen unmittelbar vor dem Treibstofftank am Tragrahmen (530) des Fahrzeughinterteiles gelagert ist.

29. Sicherheitskraftfahrzeug nach Anspruch 27 **dadurch gekennzeichnet,** daß die Schwenkbarkeit des Fahrzeugvorderteiles (260) nach unten durch einen am Tragrahmen (530) des Fahrzeughinterteiles (261) angebrachten Anschlag (284), der gegebenenfalls als Schwingmetallpuffer ausgebildet ist, begrenzt ist, wobei der Anschlag gegen eine am Tragarm (387) des Vorderteiles vorgesehene Anschlagfläche gerichtet ist und wobei die Anschlagfläche zweckmäßigerweise durch einen Steg (519) gebildet ist, welcher beidseits vorgesehene Schenkel des Tragarmes auf deren Oberseite verbindet.

30. Sicherheitskraftfahrzeug nach Anspruch 1, 3, 4 und 27 **dadurch gekennzeichnet,** daß es als Kraftrad ausgebildet ist und daß wirksam zwischen dem Fahrzeugvorderteil (260) und dem Fahrzeughinterteil (261) zweckmäßigerweise zwei Stoßdämpfer- Federeinheiten (265, 266') angeordnet sind, bei denen die Stoßdämpfer (266') beim Abschwenken des Vorderteiles eine durch eine gemeinsame Steuereinheit (560) gesteuerte Dämpfkraft bewirken, während die Dämpfkraft der Stoßdämpfer beim Zurückschwenken des Vorderteiles durch eine zweckmäßigerweise in deren Kolben (513) eingebaute Drossel (554) bestimmt ist, und daß die Stoßdämpfer- Federeinheiten jeweils in vertikaler Einbaulage beidseits des SiKrades schwenkbar um eine horizontale Querachse einerseits am Tragarm (387) des Vorderteiles und andererseits am Tragrahmen (530) des Hinterteiles an dessen vorderer Unterseite gelagert sind.

## Claims

1. Safety motor vehicle with protection devices **characterised in that** a front part (260) of a safety motor vehicle (13, 13', 13"), which inclusive of the front-wheel suspension is pivoted in such a way around a horizontal transversal axis (263) installed at the back part of the vehicle (261), that it can be slued down, is pressed against a buffer (264) installed at the back part and held in its regular swivelling position by at least one pressure spring (265) which is effectively installed between the two parts of the vehicle (260, 261), being provided at least one shock absorber (266, i.e. 266') which is attached effectively between the two parts of the vehicle and which has the function of cushioning the bouncing back of the front part after its tilting down.

2. Safety motor vehicle as set forth in claim 1, **characterised in that** a shock absorber (266') with the function to cushion the tilting back of the front part of the vehicle (260) is designed in such a way that it develops, also when the front part tilts down, a cushioning power controllable by at least one choker valve (511) or that, in addition to a shock absorber (266) that merely cushions the tilting back of the front part, at least one shock absorber (266") is provided that is effectively installed between the two parts of the vehicle (260, 261) and that, only when the front part tilts down, develops a cushioning power controllable at least by one choker valve (511), while, when the front part tilts back it develops a pressure force corresponding to the oil pressure in the pressure vessel (L1).

3. Safety motor vehicle as set forth in claims 1 and 2, **characterised in that** a single-acting shock absorber (266) with the function to cushion only the bouncing back of the front part of the vehicle (260), or a double-acting shock absorber (266'), that is, a shock absorber acting in both directions, in combination with a pressure spring (265), works as a shock absorber-spring unit (265, 266 or 265, 266') and in that, in consideration of the usefulness of the construction, on both sides of the safety motor vehicle are installed shock absorber-spring units (265, 266 or 265, 266') with singleacting (266) shock absorbers or with double-acting shock absorbers (266') and in that units the shock absorbers (266) of which solely are to cushion the bouncing back of the front part of the vehicle can possibly also be provided with an additionally applied shock absorber (266") which has the mere function to cushion the tilting down of the front part and is combined with a pressure spring (265), both of them thus forming a shock absorber- spring unit (254, 266").

4. Safety motor vehicle as set forth in claim 2, **characterised in that** the cushioning power of a shock absorber (266' i.e. 266") with the function to cushion the tilting down of the front part of the vehicle (260) is regulated by means of a control unit when inserting its piston (513 i.e. 513') into its high pressure receiver (H), being the inside of the control unit (560) provided with one choker valve (511), and, placed in parallel, with another choker valve (556), both installed in the direction of the oil flow, and being the second choker valve combined with a pressure relief valve (557) placed successively to the preceding choker valve and being these two choker valves followed by another choker valve (559) fit into the control circuit in such a way that is placed behind the two ones above mentioned choker valves and in front of a link circuit leading to a pressure vessel (L1), i.e. to a receiver (L2) of the shock absorber that is placed at the tail piece of the piston rod, and being provided an over-pressure-valve (558) between the high pressure receiver and this link circuit, which, at a certain maximum pressure in the high pressure receiver, opens its passage through a control circuit at the side of the opening so that an easier tilting down of the front part of the vehicle in the situation of an intensive collision is facilitated while, in the situation of an intensive braking- process, the cushioning power of the shock absorber automatically adapts to the road conditions through the pressure relief valve (557).

5. Safety motor vehicle as set forth in claim 1, **characterised in that** once the vehicle has reached the buffer at the upper swivelling position, which serves as cushioning in the final upper position of the front part of the vehicle (260) a rubber metal buffer (318) is effectively installed between each bracket (387), i.e. each lug (312) of the front part of the vehicle and its corresponding buffer (264) at the back part of the vehicle (261), being, in consideration of the usefulness of the construction, the rubber metal buffer placed in the bracket, i.e. the lug and attached to it and designed in such a way that it will prevent a strong impact of the bracket, i.e. the lug against the back part of the vehicle when tilting back the front part of the vehicle.

6. Safety motor vehicle as set forth in claim 5 **characterised in that** it is designed as passenger car (13) or a cab-over-engine truck (13') and in that, once the front part of the vehicle (260) has reached the buffer at the upper swivelling position, as cushioning in the final position of the front part of the vehicle there will be, in addition to each rubber metal buffer (318), a buffer cushioning the final position (540) provided with a level-neutralising function that works between the bracket (387), i.e. the lug (312) of the front part of the vehicle and the buffer (264) of the back part of the vehicle (261) and, taking into consideration the usefulness of the construction, being the buffer at the final position flange-mounted at the bracket, i.e. at the lug and provided with a pressure vessel (549) which is under gas pressure as well as with a tappet (541, 542) consisting of a piston (542) and a pump tappet (541) and that the buffer at the final position, owing to the normal vibrations of the front part of the vehicle while in motion, generates through its pump tappet a pressure in the pressure receiver corresponding to the weight of the useful load of the vehicle so that the piston (542) of the tappet, being under this pressure, exercises an equivalent force of pressure onto a setbolt (544) and via this one onto the buffer (264) of the back part of the vehicle either by means of a stack of cup springs (543) or directly via a trunnion leading through the interior of the stack of springs, and in that an axial position of the tappet (541, 542), corresponding to the regular swivelling position of the front part of the vehicle, allows a reflux of oil from the pressure vessel (549) into a vessel that is not under pressure (550).

7. Safety motor vehcile as set forth in claims 2, 5 and 6 **characterised in that** it is designed as a passenger car (13) or a cab-over-engine truck (13') and in that, when additionally applying a buffer (266″) which solely is to cushion the tilting down of the front part of the vehicle (260) while, when tilting back the front part of the vehicle, it exercises a force of pressure corresponding to the oil pressure prevailing in its pressure vessel (L1), a pressure intensifier (561) is effectively installed between its pressure vessel and the pressure vessel (549) of the buffer in the final position (540), being the pressure vessel (L1) of the buffer (266″) connected with a pressure vessel (L3) which is under gas or spring pressure and part of the pressure intensifier and being the pressure vessel (549) of the buffer at the final position (540) connected with a pressure receiver (R) of the pressure intensifier and in that the pressure intensifier which is provided with a double piston (562) is designed in such a way that, with increasing pressure in the pressure receiver (R) the filling volume in its pressure vessel (L3) expands opposed to the force impact exercised by the gas filling, i.e. the pressure spring, so that oil flows from the pressure receiver (L1) of the buffer into the pressure receiver (L3) of the pressure intensifier which reduces the pressure force of the buffer (266″) so that a tilting down of the front part impeded by an increased load of weight will, in return, be made easier and be neutralised by the diminished pressure force of the buffer.

8. Safety motor vehicle as set forth in claim 1 **characterised in that** it is designed as a passenger car (13) or a cab-over-engine truck (13') and that a windshield (26) is curved around a vertical sluable axis of a wiper strap (33) pivoted in a double-walled roof covered by a top (39), being the roof, which can possibly be designed as a canopy roof and be prolonged in such a way that it projects over the windshield and being installed above the windshield a rain water collector (159) integrated into the bottom of the roof (280) while in the front part of the bottom of the canopy roof another collector (240) with the function of collecting rain water and provided with water drains (242) ; will be integrated, being the bottom, when looked at from the edge towards the centre, provided with a gradient, and in that the double-walled roof is, at least in the case of a safety motor vehicle designed as a passenger car (13), provided with a canopy roof projecting over a rear window (26a) and eqipped with an own top (39a) and a rain water collector (159a), being fit in the said rain water collector a water container (77′) as well as a back-geared motor for the propulsion of the wiper strap (33) and being possibly also a wiper strap (33a) for a rear window (26a), which is curved around the vertical swingable axis of the wiper strap, typically connected to this propulsion in the usual way. A typical automatic water splashing installation, which allows the intervalled injection of water into the roof, is placed in the roof.

9. Safety motor vehicle as set forth in claim 1 **characterised in that** it is designed as a passenger car (13) or cab-over-enginge truck and that mirror installations are affixed on both sides of the vehicle, being installed between the mirror installation and a mounting device (12, 17, 18) with a downward-projecting sluable axis (17) for the pivot bearing of the mounting device as well as an upward-projecing axis (18) for the pivot bearing of the mirror installation around the mounting-device, a catching device (300) with a latch (302), pivoted at the underside of the mirror installation and formed as a lever effective at both arms, facilitating the said latch, by means of the upward-directed axis of the mounting-device a form-fit joining between the mirror installation and the mounting device because a buffer designed as a shoulder (306) is affixed at the inside of two trunnion pins (301) provided for the pivot bearing of the latch and therefore forms a buffer against the outside of the mounting device, while the inner lever arm of the latch encircles the mounting device at its underside and is designed to have a fore-part (307) which forms an angle upward, is crowned, and designed in such a way that it is directed against the inside of the mounting device so that the fore-part, by means of a pressure spring (304) which is effectively installed between a bottom part of the frame (89) of the mirror installation and an outer lever arm of the latch provided with a spherical button (305), is, via a sluable axis (303) provided for the bearing of the latch, pressed upward against a bevel provided at the inside of the mounting device and forms a buffer against the inside of the mounting device, and in that, by means of its downward-directed sluable axis (17), the mounting device is pivoted in a bearing housing (19) attached sideways at a fore-part (293) of the back part of the vehicle (261), being provided a buffer between the mounting device and the bearing housing, in a normal lock-in position (R) of a vehicle door (103), a typical snap-in locking device, and, in a typical limit stop position (A) of the door an articulated lever (21), which is articulated between the door and the mirror installation, is typically designed in such a way that its condyles are, opposed to the force impact exercised by a pressure spring fit in the lever, moveable towards each other.

10. Safety motor vehicle as set forth in claim 1 **characterised in that** it is designed as a passenger car (13) or a cab-over-engine truck (13') and in that a steering wheel (350) provided for a driver (3) is pivoted axially via its steering pillar (359), being the steering wheel maintained in a backmost limit stop position (360), via a pressure spring which is effective through the steering pillar and the oppposite end of which exercises pressure against the frontmost fore-part of the back part of the vehicle (261), and being provided a counterspring designed as a pressure spring (358' i.e. 358) which exercises pressure onto the front end of the steering pillar, a pressures which increases as the angle of the front part of the vehicle (260) widens when tilting down, and which, in opposite direction to the pressure force exercised by the pressure spring, pushes the steering wheel into a frontmost limit stop position, and in that a telescopic universal-joint propeller shaft (361 i.e. 336) is mounted on gimbals between the front end of the steering pillar and a typical steering mechanism, installed at the front part of the vehicle.

11. Safety motor vehicle as set forth in claim 10, **characterised in that** it is designed as a passenger car (13) and in that the counterspring designed as pressure spring (358) is, with an articulated function, effectively articulated between an upper crossmember installed at the rear side of the front part of the vehicle (260) i.e. at the stabil frame (521) of the rear side of the front part of the vehicle (260) and a lower lever arm, projecting toward the front, that is part of an angled lever with effect at both arms, which is pivoted at the frontmost fore-part of the back part of the vehicle (261), while an upward-projecting, upper lever arm of the angled lever, is articulated at the front end of the steering pillar.

12. Safety motor vehicle as set forth in claim 10 **characterised in that** that it is designed as a cab-over-engine truck (13') and that the counterspring (358') designed as a pressure spring is effectively installed between the two halves of the universal-joint propeller shaft (336) mounted on gimbals between the steering pillar (359) and the steering mechanism, being the two halves of the shaft typically designed in such a way that the counterspring counteracts against an extension of the two halves.

13. Safety motor vehicle as set forth in claim 1 **characterised in that** it is designed as a passenger car (13) or a cab-over-engine truck (13') and that a front seat passenger cabin (375) provided for a front seat passenger (108) is pivoted around a horizontally installed transversal axis (376) and can be tilted down towards the front around this transversal axis, being the front seat passenger cabin provided with a topside arched around this transversal axis and maintained in a far end swivelling position at the buffer via a pressure spring (377), the opposite end of which is articulated at the front fore-part of the back part of the vehicle (261), and which is articulated at the underside of the front seat passenger cabin, and in that a counterspring (378) designed as a pressure spring is provided which, with an increasing angle of the front part of the vehicle (260) when swivelled down, develops a correspondingly increasing counteracting pressure onto the front part of the front seat passenger cabin and forces, opposite to the force developed by the pressure spring (377), the front seat passenger cabin into a frontmost swivelling position at the buffer.

14. Safety motor vehicle as set forth in claim 13 **characterised in that** it is designed as a passenger car (13) and that the counterspring (378) designed as pressure spring is effectively articulated between a bracket (387) at the side of the front seat passenger, or the upper crossmember of the frame (521) of the front part of the vehicle (260) and a frontmost end of the swivelling extent of a lever (379) which is sluably pivoted at the front fore-part of the back part of the vehicle (261), being articulated a connecting rod (381) with both ends between the frontmost end of the swivelling extent of the lever and the fore-part of the front seat passenger cabin (375).

15. Safety motor vehicle as set forth in claim 13 **characterised in that** it is designed as a cab-over-engine truck (13') and that a counterspring designed as pressure spring is fit in a typical telescopic connecting rod which is formed by two halves, being the two halves of the connecting rod designed in such way that the counterspring counteracts against an extension of these two halves and that the connecting rod is articulated with one end at the front part of the vehicle (260) and with the other end at the fore-part of the front seat passenger cabin (375).

16. Safety motor vehicle as set forth in claim 1 **characterised in that** it is designed as a passenger car (13) or a cab-over-engine truck (13') and that it is provided with a protective shackle for the passengers of the vehicle, consisting the shackle of a horizontally installed transversal axis (351 or 351a) and two arms (344 or 344a), and being the said arms affixed at the ends of the transversal axis, i.e. on one side, radially projecting, via a notched disk (365') and on the other via an eccentric disk (445), and being the sluable and axially moveable transversal axis, which is located at approximately the level of the neck of a mediumsized passenger, pivoted in a tube (369) which penetrates a back rest (372), or integrated in a bearing housing (439), which is affixed behind a back rest (420) mediately or immediately at the back part of the vehicle (261) and in that the protective shackle is maintained in its inoperative swivelling position through a bar-shaped tripping device (348') which is pivoted axially moveable and which, at the upper end of its bar, is engaged with the notched disk of the protective shackle via a pressure spring (364), being a Bowden cable (262 or 262a) effectively articulated between the lower end of the bar of the tripping device and a trunnion pin (279) provided for the pivot bearing of the front part of the vehicle (260) so that the catching between the tripping device and the notched disk is releaseable through a swivelling down of the front part contrary to the force impact exercised by the pressure spring (364) and so that the protective shackle can be swivelled down into an operational swivelling position by means of a helical spiral spring (368') i.e. by the peripheral force of a helical spiral spring which is installed coaxially to the transversal axis of the protective shackle and which is designed as a pressure spring, being provided for the operational swivelling position a limit stop device (440) that forms a buffer for the shackle against a trip dog (446) which is integrated into the eccentric disk of the shackle, and in that for the swivelling upward of the shackle there is provided a back-geared motor (448) which is fit into the back rest (372) or a back-geared motor (448a) which is attached mediately or inmediately at the back part of the vehicle and both of which are provided with a crank (443, 444) attached to the drive mandrel of the back-geared motor, causing the said back-geared motor the returning of the shackle into its inoperative swivelling position via the description of one revolution of the crank of a typical crank mechanism (443, 444, 537, 538) via a forcing lever (538) of the crank mechanism which is pivoted axially moveable and through a cam (445) integrated in the eccentric disk of the shackle, and in that the coinciding effect between the cam and the swing-back installation of the shackle through an axial shifting of the shackle with a simultaneous release of the catching between its notched disk and the tripping device is neutralized by driving the cam, which is placed in an axial position of the shackle where the notched disk of the said shackle is being pressed with its outer fore-part against the upper end of the bar of the tripping device by the axial force of the helical spiral spring (338'), into a position that is axially offset against the forcing lever of the crank mechanism, and in that the coinciding effect between the limit stop device (440) and the trip dog (446) which is integrated into the eccentric disk is neutralized in the case of a protective shackle for back-seat passengers, when this protective shackle is in an outmost axial position as here intended, by thereupon driving the trip dog into a position which is axially offset against a trip pin (455) of the stop limit device, and forming thereupon the trip pin an axially effective buffer against the trip dog and maintaining the shackle in its axial position contrary to the pressure force of the helical spiral spring (368').

17. Safety motor vehicle as set forth in claim 16 **characterised in that** in the inoperative swivelling position of a protective shackle, its arms (344 or 344a) are affixed longitudinally along a back rest (372 or 420) or vertically and upward-projecting along the transversal axis (351 or 351a) of the shackle, and in that, closely under the bottom of the roof of the vehicle, the said arms are angled towards the front, and in that in the case of a protective shackle for back seat passengers a well-padded cross-strut (433, 434) is affixed between the frontmost ends of the arms, with the possibility of designing the arms in two pieces, by installing between the upward-projecting the arms (344' or 344a) and the angle sides of the arms (344" or 344") which are projecting towards the front a well-padded, horizontally affixed transversal axis (563 or 563a), at the ends of which the two angle sides of the arms are attached which are projecting towards the front and by sluably pivoting the angle sides of the arms, which are projecting towards the front, at the upper swivelling ends of the upward-projecting angle sides of the arms via the said transversal axis, being affixed behind the transversal axis of the protective shackle at the outer lateral parts of the back rests two steering pivot pins (565 or 565a) which are horizontally projecting towards the outside and on which two connecting rods (564) are articulated, and being each lower end of the said connecting rods sluably pivoted at a steering pivot pin through typical swivel heads and being each upper end of the said connecting rods pivoted around a horizontal transversal axis at an angle side of the arm which is projecting towards the front, so that when swinging down the protective shackle, the said angle sides of the arms which are projecting towards the front are tilted towards the back rest, and that between the angle sides of the arms designed either in one piece (344 or 344a) which are projecting towards the front, or between the angle sides of the arms designed in two pieces there will be tented a receiving net (345 or 345a), being the rims of the said receiving net possibly attached at a cross-strut (433, 434) or a transversal axis (563 or 563a) provided for the protective shackle, and in that in the case of a protective shackle with arms designed in one piece and intended especially for back-seat passengers there will be tented an elastic cross-tie (435) for the additional attachment of the receiving net (345a) between the points of buckle of the arms, and in that at each angle side of the arms of the protective shackles placed at the outer sides of the vehicle and projecting upwards there will be installed a temple protection shackle (520 or 520a), being this temple protection shackle attached at the inside of each respective angle side of the arm via a holder made of spring steel or a correspondingly designed expandable holder which is affixed at the fore-part of the said temple protection shackle.

18. Safety motor vehicle as set forth in claims 16 and 17 **characterised in that** a shelf (438) will be affixed at the back part of the vehicle (261) underneath a bearing housing (439) for a rear protective shackle i.e. in front of a tailsided engine space (262), being the shelf, in the case of a safety motor vehicle designed as a passenger car (13), possibly designed in such a way that at the same time a spare wheel (450) can be placed in the shelf, and in that a partition wall (286) is fit between the shelf and the engine space which will possibly be provided with an opening sealed by a removeable cover, so that, via this opening, the engine space can also be made accessible from the interior of the vehicle.

19. Safety motor vehicle as set forth in claim 1 **characterised in that** it is designed as a passenger car (13) and that the horizontal transversal axis (263) for the pivot bearing of the front part of the vehicle (260) is formed at the back part of the vehicle (261) by two pivot pins (263) which are in alignment to each other and affixed at the outsides of the vehicle, running each pivot pin, closely under a windscreen (26), and, as possible, in the rear area of a typically placed dashboard, on bearings that are firmly installed between two Lagerstegen (278) that are projecting from the stabil frame of the back part of the vehicle towards the front, and in that two lugs (387) attached at the crossmembers of the frame (521) of the front part of the vehicle, which are projecting from the stabil frame of the front part of the vehicle towards the back and both of which are provided with a trunnion pin (279) at their end, are provided for the pivot bearing of the front part of the vehicle around these pivot pins, and in that, in order to form a buffer (264) for the front part in its regular swivelling position, at both sides of the said front part a crossbar (264) is provided which is directed towards the corresponding lug and which bridges the Lagerstege while, in order to form a buffer at the lower final swivelling position of the front part, there will at the frontmost fore-part of the back part and on both sides of it be rubber metal buffers (284) attached on a lower crossmember of the frame (522) which struts the stabil frame of the back part, being the rubber metal buffers directed against vertical brackets (536) which are attached on both sides of the frame of the front part and which run downwards from the upper cross member of the frame (521) of the front part.

20. Safety motor vehicle as set forth in claims 1, 3 to 7 and 19 **characterised in that** it is designed as a passenger car (13) and that the front part of the vehicle (260) is designed as a boot with a typical hingeback front bonnet (106) and in that each of the shock absorber-spring units (265, 266 or 265, 266' or 265, 266") and each shock absorber (266"), that is brought to be applied, is, in a vertical installation position, effectively installed or pivoted between the upper crossmember of the frame (521) at the back side of the front part of the vehicle and the lower crossmember of the frame (522) at the back side of the front part of the vehicle (261).

21. Safety motor vehicle as set forth in claim 1 **characterised in that** it is designed as a cab-over engine truck (13') and that the horizontal transversal axis (263) for the pivot bearing of the front part of the vehicle (260) at the back part of the vehicle (261) is formed by two pivot pins (263) that are in alignment to each other and attached at the outer sides of the vehicle, being, behind the driver's cabin of the back part and above a luggage boot (314), projecting towards the front and attached at the front part, each pivot pin pivoted firmly between a supporting wall (322), which runs to the inside and belongs to a niche (321) formed into the outer side of the back part and a base plate bridging this niche, and in that two vertically installed lugs (312) are provided for the pivot bearing of the front part each of which are attached at a longitudinal beam girder (311) that is installed at the outer side of the vehicle and that runs underneath the driver's cabin and the ends of which are designed as trunnion pins (279), being the said longitudinal beam girder placed in the niches (321) installed at both sides of the back part and designed corresponding to the provided swivelling angle of the front part, and in that the removeable luggage boot, which is pivoted between the two longitudinal beam girders (311), which are designed in a mirror image manner and on which typical wings are affixed, is designed in such a way that it can be swivelled down towards the front, being a traverse (316) installed crossways underneath the driver's cabin with its ends at the inside of the longitudinal beam girders and thus forming the said traverse a strutting, and in that in order to form a buffer (264) for the front part in its regular swivelling position a stop block (264) directed against the brackets (312) of the front part is installed on both sides at the lower rear side of the driver's cabin within the niches (312), while as a buffer in the lower final swivelling position of the front part both sides are provided with a rubber metal buffer (284) attached at the undersides of the backmost walls (plural) (325) of the niches, being the rubber metal buffers directed against the back side of of the brackets, and in that in front of the wings exchangeable front parts (313) are attached to the correspondingly designed longitudinal beam girders (311), and in that a frontmost bumper (315) is attached to the longitudinal beam girders via some connecting parts that are designed with the corresponding flexibility.

22. Safety motor vehicle as set forth in claims 1, 3 to 7 and 21 **characterised in that** it is designed as a cab-over-engine truck (13') and in that each of the shock absorber-spring units (265, 266 or 265, 266' or 265, 266") and shock absorbers (266") that are brought to be applied is effectively attached i.e. pivoted in a horizontal installment position between a backmost fore-part of a longitudinal beam girder (311) i.e. of a traverse (316) and a supporting wall (340) which is projecting downward from the bottom surface of the back part of the vehicle (261).

23. Safety motor vehicle as set forth in claim 16 **characterised in that** for a backrest (372) with a penetrating tube (369) for the pivot bearing of a protective shackle, for each passenger of the vehicle a head rest (436) is provided which is sluably pivoted around the tube, corresponding the thickness of the core of the head rest to the thickness of the back rest and forming the head rest at its front side a head piece which is tangentially projecting from the core and the thickness of which corresponds at most to half of the thickness of the back rest, and in that at the back rest a niche corresponding to the width of the head rest and which runs downward at the rear side of the back rest is provided, so that the head piece of the rest is retractable into the downward-running niche at the rear side of the back rest, and in that for both final swivelling positions of the head rest a typical locking device is attached at the top side of the back rest, so that, especially in its operative position, the rest is stabilised sufficiently.

24. Safety motor vehicle as set forth in claim 1 **characterised in that** it is designed as a passenger car (13) or a cab-over-engine truck (13') and in that, for a passenger of the vehicle, a seat (390) is provided consisting of a seat face (392) and a seat cushion (390) installed upon it, being the said seat pivoted in such a way that, through downward-projecting bearing flanges (393 and 393a) affixed at both sides of its face, it can be slued upward into the travel direction of the vehicle around an upper transversal axis (395) of a supporting yoke consisting of two transversal axes and two brackets (394 and 394a), and in that this supporting yoke, which is, when viewed from a seated child, a rear supporting yoke, is pivoted around its lower transversal axis (396) in a seat pan (400 or 400') in such a way that it can be swivelled up into the opposite travel direction of the vehicle, being a stop face integrated into the seat face (392) and against the two brackets of the supporting yoke, so that the seat provided with a padded children's back (391) affixed at the underside of its seat face forms, in a position where it has reached the buffer at the upper swivelling position, a back for the child, and in that a stop face (429) which is also directed against the brackets of the supporting yoke is integrated into the seat pan, so that the supporting yoke is maintained, in an appropriate slant, in the position where it has reached the buffer at the upper swivelling position, and in that at the underside of the seat a folding seat (406, 427), consisting of the face of a children's seat (427) and the padding of a children's seat (406) affixed on top of it, is pivoted around the upper transversal axis (395) of the rear supporting yoke in such a way that it can be tilted down, being affixed at the face of a children's seat pivot splice straps (413) which are projecting upwards on both sides for the pivot bearing of the folding seat, and being the pivot splice straps attached in such a way that they prevent a swivelling down of the folding seat beyond a certain swivelling position because underneath a provided operative swivelling position of the folding seat they form a buffer against the buffer surface (428) of the seat face (392) provided for the seat (390, 392), and that at the front side of the folding seat (392) a front supporting yoke, consisting of two transversal axes (403 and 404) and two brackets (402), is sluably pivoted around its upper transversal axis (403) at the underside of the face of the children's seat, and that, for a pivot bearing of the front supporting yoke around its lower transversal axis (404), indentation notches (405, 431) are affixed on both sides of the seat pan, being the said indentation notches arranged in such a way that the front supporting yoke, the height of which is adapted to the height of the operative swivelling position of the folding seat, is likewise pivoted in the indentation notches in such a way that it can be swivelled upward into the opposite travel direction of the vehicle, and in that for the setting of the seat (390, 392) in its operative swivelling position as a back rest a typical device for setting is provided between the seat and the rear supporting yoke, by pivoting, for example, a bracket (394) of the rear supporting yoke in such a way against the force impact exercised by a pressure spring (399) which is arranged coaxially to the lower transversal axis (396) of the shackle, that it is, in relationship to the transversal axes of the bracket, axially moveable to the inside, and by providing it with an axially outward- projecting locking bolt (397), and by designing the locking bolt in such a way that, in the the operative position of the seat as a back rest it is engageable into a groove (401) through the pressure exercised by a pressure spring, which, running in circumferential direction in relation to the upper transversal axis, is affixed to the corresponding bearing flange (393) of the seat, having the groove such a dimension that it facilitates that the seat, which is transformed to a back rest, slues only slightly into the opposite travel direction and that, taking into consideration the usefulness of the construction, a seat pan (400) is pivoted shiftably in longitudinal direction of the vehicle i.e. it is pivoted insertibly under a back rest (372 or 420), being provided a typical longitudinal guiding and a typical device for setting between the seat pan and a contact surface (452) provided in the interior of the vehicle.

25. Safety motor vehicle as set forth in claims 23 and 24 **characterised in that** it is designed as a passenger car (13) or a cab-over-engine truck (13') and that a back rest (372 or 420) provided for a seat (390, 392) is sluably pivoted in a typical way, being provided for its swivelling bearing a transversal axis (416) penetrating the back rest, and that each seat is, across its width, provided with a back cushion (417) which can be swivelled towards the front around this transversal axis and which is installed in the correspondingly designed, lower niche of the back rest, and in that a table plate (418) is installed within the back rest between the back cushion and a niche on the rear side of the upper part of the back rest, being the said table plate with is correspondingly designed lower rim pivoted in such a way at a transversal axis, which is attached at the upper fore-part of the back cushion, that it can be snapped out and swivelled and being the said table plate with its correspondingly designed upper rim shiftably guided in a typical longitudinal direction of the back rest via an axis which projects outwards on both sides, and being the said table plate bent approximately in its centre such in a way that, in a front swivelling position of the back cushion in which, through the table plate and its longitudinal guiding, a buffer is formed i.e. the sluability of the back cushion is limited, it develops a horizontal table surface.

26. Safety motor vehicle as set forth in claim 1 **characterised in that** it is designed as a passenger car (13) or a cab-over-engine truck (13') and in that also for each searchlight pane a double-walled canopy roof with a rainwater collector is provided, being the searchlight panes curved around a vertical sluable axis of a wiper strap (33), and in that possibly a rear-view mirror transformed into an upward-looking mirror is installed on both sides of the vehicle and in an appropriate position in order to allow a better sight of the traffic-light when the vehicle stands closely in front of such a traffic-light.

27. Safety motor vehicle as set forth in claim 1 **characterised in that** it is designed as a motorcycle (13″) and in that the horizontal, transversal axis (263) for the swivelling bearing of the front part (260) of the vehicle is formed at the back part of the vehicle (261) by a steering pivot pin (263), being the steering pivot pin arranged approximately in the (rear) knee area of a driver below a fuel tank attached in a typical position at the back part, and in that the front-wheel suspension is developed by a telescopic fork (501, 502, 503, 510) with shock absorber-spring units (510) projecting downward on both sides and which are sluably pivoted in a typical slant at the front part for the typical attachment of a front-wheel, being the shock absorber-spring units affixed in the typical way between a lower bearing flange (501) and an upper bearing flange (502) and being the bearing flanges typically attached at the ends of a trunnion pin (503) of the telescopic fork, and in that the telescopic fork is pivoted, via this trunnion pin, in a bearing housing (500) installed at the front end of the swivelling extent of a supporting arm (387), being the supporting arm for its part sluably pivoted in the vertical longitudinal plane via the steering pivot pin (263) at a supporting frame (530) of the back part, and in that, considering the usefulness of the construction, the steering pivot pin is firmly pivoted between bearing pivots (279) installed at both sides of the supporting arm and, in a loosely sluable way, pivoted in a bearing pivot which is installed at the supporting frame of the back part.

28. Safety motor vehicle as set forth in claim 27 **characterised in that** the two shock absorber-spring units (510) of the telescopic fork (501, 502, 503, 510), which are provided for the attachment of the front-wheel, are affixed opposite the trunnion pin (503) of the telescopic fork and staggered towards the front between the bearing flanges (501 and 502) of the telescopic fork, and in that the front wheel is pivoted at the rear side of the shock absorber-spring unit, so that the pivot axis of the front-wheels is, as is typical, arranged somewhat before the imaginary extension of the swivelling axis of the telescopic fork, and in that at the rear side of the lower bearing flange (501) of the telescopic fork two upward-projecting guide irons (517) are, at both sides of the trunnion pin, flange-mounted at the underside of the said flange, and in that a steering fork (506, 507, 508, 516), which is provided with two downward-projecting steering bolts (516) that are affixed between a lower bearing flange (506) and an upper bearing flange (507) and the bearing flanges of which are affixed at the ends of a trunnion pin (508), is pivoted in the guide irons of the telescopic fork via its steering bolts in such a way that it is axially moveable and that its trunnion pins are in alignment with the trunnion pin (503) of the telescopic fork, being the steering fork sluably pivoted via its trunnion pin (508) in a bearing housing (504) with a backward-projecting bearing bracket (505), and being the said bearing housing, via its bearing bracket, sluably pivoted around a horizontal transversal axis at the upper end of a rotating shaft (509), while the rotating shaft is sluably pivoted with its lower end around a horizontal transversal axis inmediately before the fuel tank of the motorcycle at the supporting frame (530) of the back part of the vehicle (261), and in that at the upper bearing flange (507) of the steering fork a steering gear (350') is affixed in the typical way.

29. Safety motor vehicle as set forth in claim 27 **characterised in that** the sluability of the front part of the vehicle (260) downwards is limited by a buffer (284) which is installed at the supporting frame (530) of the back part of the vehicle (261) and which is possibly designed as a rubber metal buffer, being the buffer directed against a stop face which is provided at the supporting bracket (387) of the front part of the vehicle, and which is, in consideration of the usefulness of the construction, formed by a vertical plate (519) which connects the upper sides of the legs provided on both sides of the supporting bracket which, viewed from the lateral section, forms a u-sectional profile.

30. Safety motor vehicle as set forth in claims 1, 3, 4 and 27 **characterised in that** on both sides of the safety motorcycle (13″) shock absorber-spring units (265, 266′) are pivoted effectively, each in a vertical installation position, between the supporting bracket (387) of the front part and the supporting frame (530) of the back part of the vehicle (261) i.e. its frontmost underside and that, when being swivelled down the front part of the motorcycle (260), the shock absorbers (266′) of the said shock absorber-spring units develop a cushion power controlled by a joint control unit (560) while, when bouncing back the front part, the cushion power of the shock absorbers is determined by a choker valve (554) inserted in the piston (513) of the said shock absorbers.

**Revendications**

1. Véhicule de sécurité à moteur avec dispositifs de protection, caractérisé en ce que le train avant (260) d'un véhicule de sécurité à moteur (13, 13′, 13″) ainsi que la suspension de la roue avant fixés de manière pivotable autour d'un axe transversal horizontal (263) au train arrière du véhicule (261) sont pressés contre une butée (264) fixée au train arrière et retenus dans leur position de pivotement normale par au moins un ressort de pression (265) disposé de manière efficace entre les deux trains de véhicule (260, 261), un amortisseur (266 ou 266′) au moins disposé de manière efficace entre les deux trains de véhicule étant prévu pour affaiblir le déplacement-retour du train avant après son pivotement.

2. Véhicule de sécurité à moteur selon la revendication 1, caractérisé en ce qu'un amortisseur (266′) affaiblissant le déplacement-retour du train avant du véhicule (260) est conçu de manière à ce qu'il développe une force d'amortissement réglable par au moins un réducteur (511) et ceci également durant le pivotement du train avant, ou en ce qu'en plus d'un amortisseur (266) n'affaiblissant que le déplacement-retour du train avant, on prévoit l'installation d'au moins un amortisseur (266″) disposé de manière efficace entre les deux trains de véhicule (260, 261) qui, durant le pivotement seulement, développe une force d'amortissement réglable par au moins un réducteur (511), tandis que, durant le déplacement-retour du train avant, il développe une force de pression conforme à la pression d'huile dans son réservoir sous pression (L1).

3. Véhicule de sécurité à moteur selon les revendications 1 et 2, caractérisé en ce qu'un amortisseur à simple effet (266) n'affaiblissant que le déplacement-retour du train avant du véhicule (260) ou un amortisseur à effet bidirectionnel (266′) accompagné d'un ressort de pression (265) sont associés à une unité d'amortisseur-ressort (265, 266 ou 265, 266′), et en ce que, pour des raisons de fonctionnalité, on prévoit l'installation d'unités d'amortisseur-ressort (265, 266 ou 265, 266′) avec amortisseurs à simple effet (266) ou amortisseurs à double effet (266′) sur les deux cotés du véhicule de sécurité à moteur, et en ce que, dans le cas d'unités dont les amortisseurs (266) n'affaiblissent que le déplacement-retour du train avant, on prévoit, le cas échéant, qu'un amortisseur supplémentaire (266″) n'affaiblissant que le déplacement-retour du train avant accompagné d'un ressort de pression (265) soit associé à une unité d'amortisseur-ressort (265, 266″).

4. Véhicule de sécurité à moteur selon la revendication 2, caractérisé en ce qu'à l'introduction du piston (513 ou 513′) dans sa chambre à haute pression (H), la force d'amortissement d'un amortisseur (266′ ou 266″) affaiblissant le déplacement-retour du train avant du véhicule (260) est réglée par l'intermédiaire d'une unité de commande (560), ladite unité de commande étant équipée, si on suit le cours d'huile, d'un réducteur (511) et parallèlement à celui-ci d'un réducteur (556) avec une soupape limitrice de pression (557) disposée derrière ledit réducteur, et l'installation d'un réducteur supplémentaire (559) dans le circuit de commande étant prévue derrière cet arrangement avant une ligne de connexion menant à un réservoir sous pression (L1) ou bien menant à une chambre (L2) du côté de la tige du piston de l'amortisseur, et l'installation d'une soupape de décharge (558) ouvrant son passage par l'intermédiaire d'une ligne de commande située au côté de l'entrée de ladite soupape en arrivant à une pression déterminée maximale étant prévue entre la chambre à haute pression et ladite ligne de connexion de manière à ce que, dans le cas d'un choc violent, le pivotement du train avant soit facilité tandis que, dans le cas d'un freinage véhément, la force d'amortissement de l'amortisseur s'adapte automatiquement aux conditions de la chaussée par l'intermédiaire de la soupape limitrice de pression (557).

5. Véhicule de sécurité à moteur selon la revendication 1, caractérisé en ce que pour l'amortissement en position finale au moment où le train avant du véhicule (260) atteint la position de pivotement supérieure, on prévoit la disposition efficace d'un tampon caoutchouc-métal (318) entre une console (387) ou bien un support (312) du train avant et une butée (264) du train arrière du véhicule (261), le tampon caoutchouc-métal, pour des raisons de fonctionnalité, étant intégré dans la console ou le support et fixé à celle-ci ou celui-ci et disposé ou conçu de manière à ce que l'on puisse éviter un choc violent de la console ou du support contre la butée du train arrière durant le déplacement-retour du train avant.

6. Véhicule de sécurité à moteur selon la revendication 5, caractérisé en ce qu'il est conçu comme voiture particulière (13) ou comme camion à cabine avancée (13'), et en ce que pour l'amortissement supplémentaire en position finale au moment où le train avant du véhicule (260) atteint la position de pivotement supérieure, on prévoit, en plus de chaque tampon caoutchouc-métal (318), l'installation d'un tampon d'amortissement en position finale (540) avec un dispositif-retour-d'huile entre la console (387) ou le support (312) du train avant du véhicule et la butée (264) du train arrière du véhicule (261), le tampon d'amortissement en position finale étant bridé, pour des raisons de fonctionnalité, à la console ou au support et étant équipé d'un réservoir sous pression de gaz (549) ainsi que d'un poussoir (541, 542) composé d'un piston (542) et d'un tige-poussoir (541), et, à cause des vibrations usuelles du train avant durant le trajet, ledit tampon d'amortissement en position finale produisant une pression dans le réservoir sous pression par l'intermédiaire de son tige-poussoir qui correspond au poids de chargement de manière à ce que le piston (542) du poussoir qui se trouve sous cette pression, agisse, avec une force conforme à ladite pression, sur la butée (264) du train arrière par l'intermédiaire d'une rangée de ressorts Belleville (543) ou directement sur un boulon de pression (544) par l'intermédiaire d'un tenon traversant la rangée de ressorts Belleville et par l'intermédiaire dudit boulon sur la butée du train arrière, et en ce qu'il est possible que l'huile passe du réservoir sous pression (549) à un réservoir sans pression (550) quand le poussoir (541, 542) se trouve dans une position axiale qui correspond à la position de pivotement normale du train avant.

7. Véhicule de sécurité à moteur selon les revendications 2, 5 et 6, caractérisé en ce qu'il est conçu comme voiture particulière (13) ou comme camion à cabine avancée (13'), et en ce que dans le cas de l'installation d'un amortisseur supplémentaire (266") n'affaiblissant que le pivotement du train avant du véhicule (260) tandis que, durant le déplacement-retour du train avant, l'amortisseur supplémentaire développe une force de pression qui correspond à la pression d'huile dans son réservoir sous pression (L1), un transmetteur de pression (561) est installé de manière efficace entre le réservoir sous pression dudit amortisseur supplémentaire et le réservoir sous pression (549) du tampon d'amortissement en position finale (540), le réservoir sous pression (L1) de l'amortisseur (266") étant lié à un réservoir sous pression (L3) du transmetteur de pression qui se trouve sous pression de gaz ou de ressort, et le réservoir sous pression (549) du tampon d'amortissement en position finale (540) étant lié à une chambre à pression (R) du transmetteur de pression, et en ce que le transmetteur de pression équipé d'un piston double (562) est conçu de manière à ce que, dans le cas d'une élévation de la pression dans sa chambre à pression (R) le volume de remplissage dans son réservoir sous pression (L3) augmente en sens inverse de l'influence de force du contenu de gaz ou en sens inverse de l'influence de force du ressort de pression de manière à ce que de l'huile coule du réservoir sous pression (L1) de l'amortisseur au réservoir sous pression (L3) du transmetteur de pression, ceci ayant pour effet que la force de pression de l'amortisseur (266") diminue de manière à ce que le pivotement du train avant, rendu plus difficile à cause d'un poids de chargement plus élevé, soit facilité par la force de pression diminuée de l'amortisseur et de manière à ce que l'on atteigne ainsi une certaine compensation.

8. Véhicule de sécurité à moteur selon la revendication 1, caractérisé en ce qu'il est conçu comme voiture particulière (13) ou comme camion à cabine avancée (13'), et en ce qu'un pare-brise (26) est courbé autour d'un axe de pivotement vertical d'un bras d'essuie-glace (33), le bras d'essuie-glace étant logé dans un double toit recouvert d'un couvercle (39) qui, le cas échéant et dans le cas où il est conçu comme avant-toit, est prolongé sur le pare-brise, un bac collecteur de pluie (159) étant intégré dans ce cas dans le fond du toit (280) situé sur le pare-brise tandis que l'intégration d'un autre bac collecteur de pluie (240) dont le fond est pourvu de trous d'écoulement (242) et présente une inclinaison de l'extérieur vers l'intérieur est prévue dans la partie avant du fond de l'avant-toit, et en ce que le double toit, au moins dans le cas d'une voiture particulière de sécurité (13), est conçu comme avant-toit se prolongeant sur une lunette arrière (26a) pourvu d'un propre couvercle (39a) et d'un propre bac collecteur de pluie (159a), un réservoir d'eau (77') ainsi qu'un moto-réducteur pour la propulsion du bras d'essuie-glace (33) étant installés dans le bac collecteur de pluie, et un bras d'essuie-glace (33a) pour une lunette arrière (26a) courbée autour de l'axe vertical dudit bras étant accouplé, le cas échéant, audit moto-réducteur de manière usuelle, et en ce qu'un pulvérisateur d'eau automatique usuel est placé dans le toit par l'intermédiaire duquel on peut injecter par intervalles de l'eau dans le toit.

9. Véhicule de sécurité à moteur selon la revendication 1, caractérisé en ce qu'il est conçu comme voiture particulière (13) ou comme camion à cabine avancée (13'), et en ce que des dispositifs de miroirs (20) sont fixés sur les deux côtés du véhicule, l'installation d'un dispositif d'enclenchement (300) avec une poignée (302) conçu comme levier à effet sur les deux bras logée de manière pivotable sur le côté inférieure du dispositif de miroirs étant prévue entre le dispositif de miroirs et un support (12, 17, 18) pourvu d'un axe de pivotement (17) dirigé vers le bas et d'un axe (18) dirigé vers le haut permettant respectivement le logement pivotable du support et le logement pivotable du dispositif de miroirs autour dudit support, et un raccordement par forme du dispositif de miroirs et du support étant réalisable par la poignée par l'intermédiaire de l'axe du support dirigé vers le haut en fixant une butée (306) en forme de listel sur le côté intérieure de deux bossages du palier (301) prévus pour permettre le logement pivotable de la poignée, ledit listel formant en même temps une butée contre le côté extérieur du support tandis que le bras de levier intérieur de la poignée entoure le support sur son côté inférieur et tandis que ledit bras de levier est pourvu d'une surface frontale convexe (307), articulée vers le haut et se dirigeant vers le côté intérieur du support de sorte qu'un ressort de pression (304) disposé de manière efficace entre la plaque de base (89) du dispositif de miroirs et un bras de levier extérieur de la poignée pourvu d'une poignée shpérique (305) presse la surface frontal vers le haut contre une inclinaison sur le côté intérieur du support par l'intermédiaire d'un axe de pivotement (303) prévu pour le logement de la poignée, la surface frontal ayant la fonction d'une butée contre le côté intérieur du support, et en ce que le support est logé, par l'intermédiaire de son axe de pivotement (17) dirigé vers le bas, dans une boite de palier (19) fixée latéralement à un bout avant (293) du train arrière du véhicule (261), un dispositif d'enclenchement usuel et une butée usuelle étant prévus respectivement dans la position d'arrêt (R) d'une porte de véhicule (103) et dans la position de butée usuelle (A) d'une porte, et en ce qu'un levier articulé (21) fixé de manière articulé entre la porte et le dispositif de miroirs est normalement conçu de manière à ce que ses têtes articulées peuvent être déplacées l'une vers l'autre en sens inverse de l'influence de force d'un ressort de pression placé dans le levier.

10. Véhicule de sécurité à moteur selon la revendication 1, caractérisé en ce qu'il est conçu comme voiture particulière (13) ou comme camion à cabine avancée (13'), et en ce qu'un volant (350) prévu pour un conducteur (3) est logé de manière axialement déplaçable par l'intermédiaire d'une colonne de direction (359), le volant étant retenu dans une position de butée arrière par l'intermédiaire d'un ressort de pression (360) agissant sur la colonne de direction et dont le bout de ressort opposé agit sur le côté frontal avant du train arrière du véhicule (261), l'installation d'un contre-ressort (358 ou 358') conçu comme ressort de pression étant prévue qui agit sur le bout avant de la colonne de direction avec une force de pression qui augmente conformément à l'augmentation de l'angle de pivotement du train avant du véhicule (260) et qui presse le volant dans une position de butée avant en sense inverse de l'influence de force du ressort de pression (360), et en ce qu'entre le bout avant de la colonne de direction et un mécanisme de direction usuelle installé au train avant du véhicule, un arbre articulé (361 ou 336) que l'on peut allonger est logé à la Cardan.

11. Véhicule de sécurité à moteur selon la revendication 10, caractérisé en ce qu'il est conçu comme voiture particulière (13), et en ce que le contre-ressort (358) conçu comme ressort de pression est fixé de manière articulé efficace entre une traverse supérieure (521) fixée sur le côté arrière ou au châssis stable du train avant du véhicule (260) et un bras de levier inférieur dirigé vers l'avant d'un levier coudé à effet sur les deux bras (355), logé de manière pivotable sur le côté frontal avant du train arrière du véhicule (261) tandis qu'un bras de levier supérieur dirigé vers le haut du levier coudé est fixé de manière articulée au bout avant de la colonne de direction (359).

12. Véhicule de sécurité à moteur selon la revendication 10, caractérisé en ce que le contre-ressort (358) conçu comme ressort de pression est disposé de manière efficace entre les deux parties de l'arbre articulé (336) logé à la Cardan entre la colonne de direction (359) et la boîte de direction, les deux parties de l'arbre articulé étant normalement conçues de manière à ce que le contre-ressort agisse contre la séparation des deux parties de l'arbre articulé.

13. Véhicule de sécurité à moteur selon la revendication 1, caractérisé en ce qu'il est conçu comme voiture particulière (13) ou comme camion à cabine avancée (13'), et en ce qu'une cabine (375) prévue pour le convoyeur (108) est logée de manière pivotable vers l'avant autour d'un axe transversal (367) disposé horizontalement sur le côté inférieur de ladite cabine, le côté supérieur de la cabine de convoyeur étant courbé autour dudit axe transversal et étant retenu dans une position de butée arrière par l'intermédiaire d'un ressort de pression (377) fixé de manière articulée sur son côté inférieur dont le bout opposé du ressort est fixé de manière articulé sur le côté frontal avant du train arrière du véhicule (261), et en ce que l'on prévoit l'installation d'un contre-ressort (378) conçu comme ressort de pression agissant sur le côté avant de la cabine de convoyeur avec une force de pression qui augmente conformément à l'augmentation de l'angle de pivotement du train avant du véhicule (260) et qui presse la cabine de convoyeur dans une position de butée avant en sens inverse de l'influence de force du ressort de pression (377).

14. Véhicule de sécurité à moteur selon la revendication 13, caractérisé en ce qu'il est conçu comme voiture particulière (13), et en ce que le contre-ressort (378) conçu comme ressort de pression est fixé de manière articulée efficace entre une console (387) sur le côté du convoyeur ou bien la traverse supérieure (521) du train avant du véhicule (260) et le bout de pivotement avant d'un levier (379) logé de manière pivotable sur le côté frontal avant du train arrière du véhicule (261), les deux bouts d'une bielle de traction (381) étant fixés de manière articulée entre le bout de pivotement avant du levier et le côté avant de la cabine du convoyeur (375).

15. Véhicule de sécurité à moteur selon la revendication 13, caractérisé en ce qu'il est conçu comme camion à cabine avancée (13'), et en ce qu'un contre-ressort conçu comme ressort de pression repose dans une bielle de traction usuelle que l'on peut allonger composée de deux parties, les deux parties de la bielle de traction étant conçues de manière à ce que le contre-ressort agisse contre la séparation des deux parties de la bielle de traction, et en ce que les deux bouts de la bielle de traction sont fixés de manière articulée d'une part au train avant du véhicule (260) et d'autre part sur le côté avant de la cabine de convoyeur (375).

16. Véhicule de sécurité à moteur selon la revendication 1, caractérisé en ce qu'il est conçu comme voiture particulière (13) ou comme camion à cabine avancée (13') et en ce que pour la protection des passagers, on prévoit l'installation d'un étrier de protection composé d'un axe transversal horizontal (351 ou 351a) et de deux bras (344 ou 344a), les bras écartés radialement aux bouts de l'axe transversal étant fixés à l'axe transversal d'une part par l'intermédiaire d'un disque d'arrêt (365') et d'autre part par l'intermédiaire d'un disque à cames (445), et l'axe transversal étant logé de manière pivotable et axialement déplaçable, environ à hauteur de la nuque d'un passager de taille moyenne, dans un tube (369) traversant le dos de siège (372) ou dans une boîte de palier (439) fixée directement ou indirectement au train arrière du véhicule (261) derrière un dos de siège (420) et en ce que l'étrier de protection est retenu dans sa position de pivotement-attente par un déclencheur (348') logé de manière axialement déplaçable et ayant la forme d'une barre dont le bout de barre supérieur est raccordé par engrènement avec le disque d'arrêt de l'étrier de protection au moyen d'un ressort de pression (364), un câble Bowden (262 ou 262a) étant fixé de manière articulée efficace entre le bout de barre inférieur du déclencheur et un bossage du palier (279) prévu pour permettre le logement pivotable du train avant du véhicule (260) de sorte que l'engrènement entre le déclencheur et le disque d'arrêt soit déclenchable en pivotant le train avant en sens inverse de l'influence de force du ressort de pression (364), et de sorte que l'étrier de protection puisse occuper une position de pivotement en action au moyen d'un ressort spiral (368') conçu comme ressort de pression disposé coaxialement vers son axe transversal ou bien au moyen de la force périphérique du ressort spiral, c'est-à-dire une position où une butée pour l'étrier contre une came de butée (446) intégrée dans le disque à cames de l'étrier est constituée par un dispositif de butée (440), et en ce que, pour le déplacement-retour de l'étrier, on a prévu l'installation d'un moto-réducteur (448) situé dans le dos du siège (372) ou bien un moto-réducteur (448a) fixé directement ou indirectement au train arrière du véhicule pourvus respectivement d'une manivelle (443, 444) fixée à leurs cames de commande, le moto-réducteur effectuant le déplacement-retour de l'étrier à sa position de pivotement-attente par l'intermédiaire d'un mécanisme à manivelle usuel (443, 444, 537, 538) en tournant sa manivelle et par l'intermédiaire d'une tige de pression (538) dudit mécanisme à manivelle logée de manière axialement déplaçable et par l'intermédiaire d'une came (445) intégrée dans le disque à cames de l'étrier, et en ce que l'activité réciproque entre la came et le dispositif de déplacement-retour de l'étrier est annulée par le déplacement axial de l'étrier en déclenchant en même temps l'engrènement entre le disque d'arrêt dudit étrier et le déclencheur, ceci ayant pour effet un déplacement de la came en position axiale vers la tige de pression (538) du mécanisme à manivelle quand l'étrier se trouve en position axiale où le disque d'arrêt dudit étrier est pressé contre le bout de barre supérieur par la force axiale du ressort spiral (338'), et en ce que, dans le cas d'un étrier de protection pour les passagers du siège arrière, aussi l'activité réciproque entre le dispositif de butée (440) et la came de butée (446) intégrée dans le disque à cames est annulée quand l'étrier se trouve en position axiale extrême ici prévue, étant donné que la came de butée occupe une position axialement déplacée vers un boulon de butée (455) du dispositif de butée, et le boulon de butée ayant la fonction d'une butée à effet axiale contre la came de butée et retenant l'étrier dans sa position axiale en sens inverse de la force de pression du ressort spiral (368').

17. Véhicule de sécurité à moteur selon la revendication 16, caractérisé en ce que ses bras (334 ou 334a), lors de la position de pivotement en attente, sont fixés dans le sens longitudinal du dos (372 ou 420) ou dirigés verticalement vers le haut à l'axe transversal (351 ou 351a) de l'étrier, et en ce que les bras sont coudés vers l'avant tout près du fond du toit du véhicule, et en ce que, par rapport à un étrier de protection pour les passagers du siège arrière, une traverse (433, 434) bien rembourrée est fixée entre les bouts avant des bras qui peuvent aussi être composés de deux parties en installant entre les bras dirigés vers le haut (344' ou 344a') et les bras dirigés vers l'avant (344" ou 344a") un axe transversal (563 ou 563a) bien rembourré et disposé horizontalement auxquels bouts sont attachés les deux bras dirigés vers l'avant et en logeant de manière pivotable les bras dirigés vers l'avant par l'intermédiaire de cet axe transversal aux bouts de pivotement supérieurs des bras dirigés vers le haut, deux boulons d'essieu (565 ou 565a) dirigés horizontalement vers l'extérieur auxquels sont fixés de manière articulée deux bielles de traction (564), étant fixés derrière l'axe transversal de l'étrier de protection sur les côtés extérieurs du dos, et les bouts inférieurs de chaque bielle de traction étant logés de manière pivotable à un boulon d'essieu, et les bouts supérieurs étant logés de manière pivotable autour d'un axe transversal horizontal à un bras dirigé vers l'avant par l'intermédiaire de têtes articulées usuelles de sorte que les bras dirigés vers l'avant soient pivotés vers le dos du siège durant le pivotement de l'étrier de protection, et en ce qu'un filet de protection (345 ou 345a) est tendu non seulement entre les bras dirigés vers l'avant composés d'une partie (344 ou 344a) mais aussi dans le cas où ils sont composés de deux parties, les bordures du filet de protection pouvant aussi être fixées, le cas échéant, à une traverse (433, 434) ou bien à un axe transversal (563 ou 563a) prévus pour l'étrier de protection, et en ce que, par rapport à un étrier avec des bras composés d'une partie, on prévoit de tendre, particulièrement pour les passagers du siège arrière, une corde élastique (435) horizontale permettant la fixation supplémentaire du filet de protection (345a) entre les joints articulés des bras, et en ce qu'un étrier de protection de tempes (520 ou 520a) est fixé aux bras de l'étrier dirigés vers le haut disposés sur les côtés extérieurs du véhicule, l'étrier de protection de tempes étant fixé sur le côté intérieur du bras en question par l'intermédiaire d'un support d'acier à ressorts ou d'un support d'une flexibilité conforme au support d'acier à ressort fixés sur le côté avant de l'étrier.

18. Véhicule de sécurité à moteur selon les revendications 16 et 17, caractérisé en ce qu'une étagère (438) est fixée au train arrière du véhicule (261) au dessous d'une boîte de palier (439) destinée à un étrier de protection arrière ou devant un espace destiné à un moteur (262) disposé sur le côté de la plage arrière, par rapport à une voiture particulière de sécurité (13) l'étagère étant conçue, le cas échéant, de manière à ce que l'on y puisse placer aussi une roue de secours (450), et en ce qu'une paroi de séparation (286) pourvue, le cas échéant, d'une ouverture étanchée par un couvercle démontable est fixée entre l'étagère et l'espace destiné au moteur de sorte que l'espace destiné au moteur soit accessible à travers cette ouverture, et ceci également à l'intérieure du véhicule.

19. Véhicule de sécurité à moteur selon la revendication 1, caractérisé en ce qu'il est conçu comme voiture particulière (13), et en ce que l'axe transveral horizontal (263) permettant le logement pivotable du train avant du véhicule (260) au train arrière du véhicule (261) est constitué par deux boulons d'essieu (263) se dirigeant l'un vers l'autre, fixés sur les côtés extérieurs du véhicule, chaque boulon d'essieu étant fermément logé entre deux plaques de logement (278) dirigées du chassis stable du train arrière du véhicule vers l'avant, tout près du pare-brise (26), si possible, dans la partie arrière du tableau de bord disposé à l'endroit usuel, et en ce que deux consoles (387) dirigées du chassis stable du train avant vers l'arrière, fixées à une traverse supérieure (521) du train avant et pourvues d'un bossage du palier (279) à leurs bouts arrières sont prévues pour permettre le logement pivotable du train avant du véhicule autour desdits boulons d'essieu, et en ce que sur les deux côtés du train avant on prévoit l'installation d'un verrou transversal (264) en tant que butée (264) pour le train avant quand il se trouve en position de pivotement normale qui passe au dessus des plaques de logement et qui se dirige vers la console en question tandis qu'un tampon caoutchouc-métal (284) en tant que butée quand le train avant se trouve en position de pivotement inférieure finale est fixé sur les deux côtés du côté frontal avant du train arrière, les tampons caoutchouc-métal se dirigeant vers des supports verticaux (536) fixés sur les deux côtés du chassis, lesquels sont tirés vers le bas en partant de la traverse supérieure (521) du train avant.

20. Véhicule de sécurité selon les revendications 1, 3 jusqu'à 7 et 19, caractérisé en ce qu'il est conçu comme voiture particulière (13), et en ce que le train avant du véhicule (260) est conçu comme un espace à bagages pourvu d'un capot avant (106) usuel ouvrable vers l'arrière, et en ce que chaque unité d'amortisseur-ressort (265, 266 ou 265, 266' ou 265, 266") et chaque amortisseur (266") installé est fixé ou bien logé de manière efficace en position verticale entre la traverse supérieure (521) sur le côté arrière du train avant et la traverse inférieure (522) sur le côté avant du train arrière du véhicule (261).

21. Véhicule de sécurité à moteur selon la revendication 1, caractérisé en ce qu'il est conçu comme camion à cabine avancée (13'), et en ce que l'axe transversal horizontal (263) permettant le logement pivotable du train avant (260) et du tain arrière du véhicule (261) est composé de deux boulons d'essieu (263) fixés sur les côtés extérieurs du véhicule, se dirigeant l'un vers l'autre, lesdits boulons d'essieu étant logés fermément entre une paroi d'appui (323) tirée vers l'intérieur d'un puits (321) formé dans la paroi extérieure du train arrière et une plaque de base (323) passant sur ledit puits situées derrière la cabine du conducteur du train arrière et au dessus d'un espace à bagages (314) attaché au train avant, et en ce que l'on prévoit d'installer deux supports disposés verticalement (312), permettant le logement pivotable du train avant dont chacun est fixé à une poutre longitudinale (311) disposée sur le côté extérieur du véhicule, passant au dessous de la cabine du conducteur, et dont les bouts supérieurs sont conçus comme bossages du palier (279), lesdits supports, conçus conformément à l'angle de pivotement que l'on prévoit au train arrière, étant placés dans les puits (321) situés aux côtés extérieurs du train arrière, et en ce que l'espace à bagages est logé de manière pivotable et démontable vers l'avant entre les deux poutres longitudinales (311) conçues de manière inversée et auxquelles sont fixées des ailes (310) usuelles, une traverse (316) disposée horizontalement au dessous de la cabine du conducteur étant fixée avec ses bouts sur les côtés intérieurs des poutres longitudinales et ayant la fonction d'un renforcement, et en ce qu'un bloc d'arrêt (264) en tant que butée (264) pour le train avant quand il se trouve en position de pivotement normale, se dirigeant vers les supports (312) du train avant est fixé sur les deux côtés du revers inférieur de la cabine du conducteur à l'intérieure des puits (321) tandis que, quand le train avant se trouve en position de pivotement inférieure finale des tampons caoutchouc-métal (284) sont fixés en tant que butée sur les deux côtés des parois arrières (325) des puits sur leurs côtés inférieurs, les tampons caoutchouc-métal se dirigeant vers le côté arrière des supports, et en ce que devant les ailes, des pièces avant (313) échangeables sont fixées aux poutres longitudinales (311) conçues de manière adécuate, et en ce qu'un pare-chocs avant (315) est fixé aux poutres longitudinales par l'intermédiaire de pièces de connexion (317) disposant d'une flexibilité adecuate.

22. Véhicule de sécurité à moteur selon les revendications 1, 3 jusqu'à 7 et 21, caractérisé en ce qu'il est conçu comme camion à cabine avancée (13'), et en ce que les unités d'amortisseur-ressort (265, 266 ou 265, 266' ou 265, 266") et les amortis-seurs (266") utilisés, tous installés en position horizontale sont fixés ou logés de manière effective entre un côté frontal arrière d'une poutre longitudinale (311) ou d'une traverse (316) et une paroi d'appui (340) dirigée vers le bas en partant du sol du train arrière du véhicule (261).

23. Véhicule de sécurité à moteur selon la revendication 16, caractérisé en ce que pour un dos de siège (372) traversé par un tube (369) permettant le logement pivotable d'un étrier de protection, on prévoit pour chaque passager l'installation d'un repose-tête (436) logé de manière pivotable autour dudit tube, le noyau du repose-tête (436) correspondant, par rapport à son épaisseur, à l'épaisseur du dos, et le repose-tête étant pourvu d'une partie-tête située sur son côté avant écartée tangentialement au noyau qui, par rapport à son épaisseur, correspond au maximum à la moitié de l'épaisseur du dos, et en ce que l'on prévoit de pourvoir le dos d'un évidement correspondant à la largeur du repose-tête se prolongeant vers le bas au revers du dos de sorte que l'on puisse placer par pivotement la partie-tête du repose-tête dans l'évidement prolongé vers le bas au revers du dos, et en ce qu'un dispositif de butée usuel pour permettre les deux positions de pivotement finales du repose-tête est fixé au côté supérieure du dos de sorte que le repose-tête soit détenu de manière suffisamment stable surtout quand il se trouve en position d'utilisation.

24. Véhicule de sécurité à moteur selon la revendication 1, caractérisé en ce qu'il est conçu comme voiture particulière (13) ou comme camion à cabine avancée (13'), et en ce que l'on prévoit d'installer pour un passager un siège (390, 392) composé d'une plaque de siège (392) et d'un rembourrage (390) monté sur celle-ci, le siège étant logé de manière pivotable vers le haut dans le sens de la marche autour d'un axe transversal supérieur (395) d'un étrier-support composé de deux axes transversaux (395 et 396) et de deux supports (394 et 394a) par l'intermédiaire des brides de logement (393 et 393a) dirigées vers le bas et fixées sur les deux côtés de la plaque du siège, et en ce que cet étrier-support qui, du point de vue d'un enfant assis sur ledit siège, est l'étrier-support arrière, est logé dans un carter de siège (400 ou 400') de manière pivotable vers le haut en sens inverse de la marche autour de son axe transversal inférieur, une surface de butée (428) contre les deux supports de l'étrier-support étant intégrée dans la plaque de siège (392) de sorte que le siège pourvu d'un dos à enfants rembourré (391) sur le côté inférieur de sa plaque de siège soit converti en un dos à enfants quand il se trouve en position de pivotement en butée ainsi creée, et en ce qu'une surface de butée (429) se dirigeant également vers les supports de l'étrier-support est intégrée dans le carter de siège de sorte que l'étrier-support soit retenu dans sa position de pivotement en butée quand il se trouve en position oblique appropriée, et en ce que sur le côté inférieur du siège, un siège pliant (406, 427) composé d'une plaque de siège à enfants (427) et d'un rembourrage de siège à enfants (406) fixé sur la plaque de siège est logé de manière pivotable autour de l'axe transversal supérieur (395) de l'étrier-support arrière, des éclisses de logement (413) dirigées vers le haut étant fixées sur les deux côtés de la plaque de siège à enfants pour permettre le logement pivotable du siège pliant, et les éclisses de logement étant disposées de manière à ce qu'elles empêchent le pivotement du siège pliant au delà d'une position déterminée de pivotement en formant une butée contre la surface de butée (428) de la plaque de siège (392) qui fait partie du siège (390, 392) au dessous d'une position de pivotement en utilisation que l'on prévoit pour le siège pliant, et en ce que sur le côté avant du siège pliant un étrier-support avant composé de deux axes transversaux (403 et 404) et de deux supports (402) est logé de manière pivotable autour de son axe transversal supérieur (403) sur le côté inférieur de la plaque du siège à enfants, et en ce que pour un logement pivotable de l'étrier-support avant autour de son axe transversal inférieur (404) des crans d'arrêt (405, 431) sont fixées sur les deux côtés du carter de siège, les crans d'arrêt étant disposés de manière à ce que l'étrier-support avant adapté à la position de pivotement en utilisation du siège pliant par rapport à son hauteur soit également logé de manière pivotable vers le haut en sens inverse de la marche dans lesdites crans d'arrêt, et en ce que l'on prévoit l'installation d'un dispositif de butée usuel entre le siège et l'étrier-support arrière pour arrêter le siège (390, 392) quand il se trouve en position de pivotement en utilisation, c'est-à-dire quand il est utilisé comme dos, en logeant par exemple un support (394) de l'étrier-support arrière de manière axialement déplaçable vers l'intérieur en direction des axes transversaux de l'étrier et en sens inverse de l'influence de force d'un ressort de pression (399) disposé coaxialement vers l'axe transversal inférieur (396) de l'étrier et en fournissant ledit support d'un boulon d'arrêt (397) dirigé axialement vers l'extérieur et en prévoyant que le boulon d'arrêt, quand le siège se trouve en position d'utilisation comme dos, puisse enclencher par l'influence de force du ressort de pression dans une rainure (401) de laquelle a été pourvue la bride de logement (393) faisant partie du siège et qui cours en sens peripérique vers l'axe transversal supérieur (395) de l'étrier, la rainure ayant une dimension permettant qu'on puisse pivoter le siège converti en dos un peu en sens inverse de la marche, et en ce que, pour des raisons de fonctionnalité, un carter de siège (400) est logé de manière déplaçable dans le sens de la longue du véhicule ou bien logé de sorte que l'on puisse le glisser au dessous d'un dos (372 ou 420), un guide longitudinal et un dispositif de butée usuels étant prévus entre le carter de siège et une surface d'appui (452) prévue à l'intérieure du véhicule.

25. Véhicule de sécurité à moteur selon les revendications 23 et 24, caractérisé en ce qu'il est conçu comme voiture particulière (13) ou comme camion à cabine avancée (13'), et en ce qu'un dos (372 ou 420) prévu pour un siège (390, 392) est logé de manière pivotable usuelle, un axe transversal (416) traversant le dos étant prévu pour permettre le logement pivotable dudit dos, et en ce que pour chaque siège on prévoit un rembourrage dorsal inférieur (417) logé de manière pivotable vers l'avant autour dudit axe transversal, qui, par rapport à sa largeur, correspond à la largeur du siège et qui repose dans un évidement inférieur du dos adapté à la forme du rembourrage, et en ce qu'entre le rembourrage dorsal et un évidement situé sur le côté supérieur du revers du dos un dessus-table (418) est placé dans le dos, le dessus-table dont le bord inférieur est conçu de manière à ce que l'on puisse le déclencher étant logé de manière pivotable à un axe (427) fixé sur le côté frontal supérieur du rembourrage dorsal, et le bord supérieur du dessus-table étant guidé de manière déplaçable usuelle dans le sens longitudinal du dos par l'intermédiaire d'un axe (423) dont les deux côtés sont dirigés vers l'extérieur, et le dessus-table étant cassé environ à son milieu de sorte qu'il forme une surface de table horizontale quand le rembourrage dorsal se trouve en position de pivotement avant, en laquelle une butée est formée par l'intermédiaire du dessus-table et son guidage longitudinal ou en laquelle la possibilité de pivotement du rembourrage dorsal est limitée.

26. Véhicule de sécurité à moteur selon la revendication 1, caractérisé en ce qu'il est conçu comme voiture particulière (13) ou comme camion à cabine avancée (13'), et en ce que l'on prévoit aussi pour les glaces des phares un avant-toit à double fond pourvu d'un bac collecteur de pluie, les glaces des phares étant courbées autour d'un axe de pivotement d'un étrier d'essuie-glace, et en ce que, le cas échéant, on prévoit la fixation d'un rétroviseur converti en miroir dont le champ visuel se dirige vers le haut à un endroit approprié sur les deux côtés du véhicule pour pouvoir mieux observer les feux de signalisation quand on est très proche à ceux-ci.

27. Véhicule de sécurité à moteur selon la revendication 1, caractérisé en ce qu'il est conçu comme motocyclette (13"), et en ce que l'axe transversal horizontal (263) permettant le logement pivotable du train avant du véhicule (260) au tain arrière du véhicule (261) est constitué par un boulon d'essieu (263), le boulon d'essieu étant disposé environ à hauteur de la partie postérieure des genoux d'un conducteur, au dessous d'un réservoir de carburant fixé à un endroit usuel au train arrière du véhicule, et en ce que la suspension de la roue avant est constituée par une fourche télescopique (501, 502, 503, 510) logée de manière pivotable en position inclinée usuelle au train avant, pourvue d'unités d'amortisseur-ressort (510) dirigés vers le bas sur ses deux côtés pour permettre la fixation usuelle d'une roue avant, les unités d'amortisseur-ressort étant fixés comme d'habitude entre une bride de logement inférieure (501) et une bride de logement supérieure (502) et les brides de logement étant fixées comme d'habitude aux bouts d'un boulon de logement (503) de la fourche télescopique, et en ce que la fourche télescopique est logée par l'intermédiaire dudit boulon de logement dans une boîte de palier (500) fixée au bout de pivotement avant d'une console (387), la console de sa part étant logée de manière pivotable en plan longitudinal vertical à une console (530) du train arrière par l'intermédiaire d'un boulon d'essieu (263), et en ce que, pour des raisons de fonctionnalité, le boulon d'essieu est logé fermément entre les bossages du palier (279) fixés sur les deux côtés de la console et logé de manière librement pivotable dans un bossage du palier fixé au cadre du train arrière.

28. Véhicule de sécurité à moteur selon la revendication 27, caractérisé en ce que les deux unités d'amortisseur-ressort (510) de la fourche télescopique (501, 502, 503, 510) prévues pour la fixation de la roue avant sont fixées entre les brides de logement (501 et 502) et la fourche télescopique en face du boulon de logement (503) de la fourche télescopique de manière déplaçée vers l'avant, et en ce que la roue avant est logée sur le côté arrière de l'unité d'amortisseur-ressort de sorte que l'axe de logement de la roue avant soit disposé comme d'habitude encore un peu devant l'axe de pivotement de la fourche télescopique prolongée vers le bas, et en ce que sur le côté arrière de la bride de logement inférieure (501) de la fourche télescopique deux douilles de guidage (517) dirigées vers le haut sont bridées sur les deux côtés du boulon de logement (503) sur le côté inférieur de ladite bride, et en ce qu'une fourche de direction (506, 507, 508, 516) pourvue de deux boulons de direction (516) dirigés vers le bas, fixés entre une bride de logement inférieure (506) et une bride de logement supérieure (507) dont les brides de logement sont fixées aux bouts d'un boulon de logement (508) est logée dans les douilles de guidage de la fourche télescopique de manière axialement déplaçable par l'intermédiaire de ses boulons de direction et de manière à ce que le boulon de logement de ladite fourche de direction se dirige vers le boulon de logement (503) de la fourche télescopique, la fourche de direction étant logée de manière pivotable par l'intermédiaire de son boulon de logement (508) dans une boîte de palier (504) pourvue d'une console (505) dirigée vers l'avant, et ladite boîte de palier étant logée de manière pivotable par l'intermédiaire de sa console autour d'un axe transversal horizontal au bout supérieur d'une bielle oscillante (509) tandis que le bout inférieur de la bielle oscillante est logé de manière pivotable autour d'un axe transversal horizontal au cadre (530) du train arrière du véhicule (261) directement avant le réservoir de carburant de la motocyclette, et en ce qu'une colonne de direction (350') est fixée, comme d'habitue, à la bride de logement supérieure (507) de la fourche de direction.

29. Véhicule de sécurité à moteur selon la revendication 27, caractérisé en ce que la capacité de pivotement vers le bas du train avant du véhicule (260) est limitée par une butée (284) fixée au cadre (530) du train arrière du véhicule (261) qui, le cas échéant, est conçu comme tampon caoutchouc-métal, la butée se dirigeant vers une surface de butée prévue à la console (387) du train avant, et pour des raisons de fonctionnalité, la surface de butée étant constituée par une entretoise (519) joignant les côtés supérieurs des deux bras de la console qui est conçue en forme de U quand on la voit en coupe.

30. Véhicule de sécurité à moteur selon les revendications 1, 3, 4 et 27, caractérisé en ce qu'entre la console (387) du train avant et la console (530) du train arrière du véhicule (261) ou bien le côté inférieur avant de celui-ci, on prévoit le logement efficace en position verticale sur les deux côtés de la motocyclette de sécurité (13") d'unités d'amortisseur-ressort (265, 366') dont les amortisseurs (266') développent une force d'amortissement en pivotant le train avant de véhicule (260) qui est réglée par une unité de commande commune (560) tandis que durant le déplacement-retour du train avant, la force d'amortissement des amortisseurs est réglée par un réducteur (554) placé dans les pistons (513) desdits amortisseurs.

Fig.1a

Fig.1

Fig.2

521 523 266 265 266" 522 524

521 39 240 259 159 344 33 373 33a 344a 159a 39a
287 26 280 520 520a 26a 13
242 264 387 279 351 351a
523 263 350 262
521 359
358 360
361
355 265,266 524 522 528

260 279 13
521 264 387 263 26 261
242' 278
242 288' 289
527 77'
26a
525

EP 0 305 727 B1

Fig.3

Fig.3a

Fig.4

Fig.5

Fig.6

Fig.7

Fig.8  Fig.9  Fig.10  Fig.11  Fig.12  Fig.12a  Fig.13  Fig.14

Fig.15

Fig.16

Fig.17

Fig.18

EP 0 305 727 B1

_Fig. 19_

_Fig. 20_

Fig.21

Fig.22

Fig.23

Fig.23a

Fig.24

Fig.25

Fig.25a

**Fig.26**

**Fig.29**

**Fig.30**

**Fig.27**

**Fig.28**

Fig.31

Fig. 32

Fig. 33

Fig. 34

Fig. 35

Fig. 36

Fig. 37

*Fig.38*

## Fig.39

## Fig.40

*Fig.41*